# EUROPEAN PATENT APPLICATION

(11) **EP 4 657 921 A1**
(43) Date of publication of application: **03.12.2025**
(21) Application number: 24893495.2
(22) Date of filing: 20.11.2024
(51) Int. Cl.: H04W 28/06

(54) **SATELLITE COMMUNICATION METHOD AND RELATED APPARATUS**

(30) Priority: 22.11.2023 CN 202311569325
(71) Applicant: Huawei Technologies Co., Ltd., Shenzhen, Guangdong 518129 (CN)
(72) Inventor: TIAN, Yuanyuan, Shenzhen, Guangdong 518129 (CN); LU, Wei, Shenzhen, Guangdong 518129 (CN); REN, Zhepo, Shenzhen, Guangdong 518129 (CN); LI, Zhaoyang, Shenzhen, Guangdong 518129 (CN)
(74) Representative: MERH-IP Matias Erny Reichl Hoffmann Patentanwälte PartG mbB
(86) International application number: PCT/CN2024/133356
(87) International publication number: WO 2025/108339

(57) **Abstract**

This application discloses a satellite communication method and a related apparatus. The method includes: A first application on a first terminal device obtains first rich media information in response to a first input operation; the first application on the first terminal device obtains compressed data of the first rich media information; the first application on the first terminal device sends a first request message to a first server through a satellite device in response to a second input operation, where the first request message includes the compressed data of the first rich media information; the first server decompresses the compressed data of the first rich media information, to obtain second rich media information; the first server sends first message content to a second terminal device, where the first message content indicates the second rich media information; and the second terminal device displays the second rich media information. In this way, a terminal device with no reception can transmit rich media information to another terminal device through a satellite, to effectively improve user experience.

## Description

This application claims priority to Chinese Patent Application No. 202311569325.7, filed with the China National Intellectual Property Administration on November 22, 2023 and entitled "SATELLITE COMMUNICATION METHOD AND RELATED APPARATUS", which is incorporated herein by reference in its entirety.

### TECHNICAL FIELD

This application relates to the field of electronic technologies, and in particular, to a satellite communication method and a related apparatus.

### BACKGROUND

With development of communication technologies, users often use electronic devices such as mobile phones to perform communication in daily life. The electronic devices such as the mobile phones may implement a communication function outdoors through a mobile cellular network. However, the cellular network cannot cover all areas. For example, there may be areas that are not covered by the mobile cellular network in forests, deserts, mountainous areas, cities, and villages.

When the user is in the area that is not covered by the mobile cellular network, a terminal device like a mobile phone carried by the user cannot provide a communication service due to poor reception of cellular signals. Consequently, inconvenience may be caused to the user, and in emergency, life and property safety of the user may be damaged.

A satellite communication system is an important infrastructure that integrates positioning, timing, and communication. A satellite communication service is particularly applicable to communication in an area in which mobile communication coverage is unavailable, inaccessible, or disrupted due to damage to a communication system. Currently, some necessary resources of the satellite communication system are opened for civil use. For a consumer service and a device feature, a communication solution needs to be designed based on a feature of the satellite communication system.

Therefore, how to implement effective information transmission between different terminal devices through the satellite communication system needs to be further studied.

### SUMMARY

Embodiments of this application provide a satellite communication method, so that a terminal device with no reception can transmit rich media information to another terminal device through a satellite device, to effectively improve user experience.

According to a first aspect, this application provides a satellite communication method, applied to a satellite communication system. The satellite communication system includes a first terminal device, a first server, and a second terminal device, and the method includes: A first application on the first terminal device receives a first input operation; the first application on the first terminal device obtains first rich media information in response to the first input operation; the first application on the first terminal device obtains compressed data of the first rich media information; the first application on the first terminal device receives a second input operation; the first terminal device sends a first request message to the first server through a satellite device in response to the second input operation, where the first request message includes the compressed data of the first rich media information; the first server decompresses the compressed data of the first rich media information, to obtain second rich media information; the first server sends first message content to the second terminal device, where the first message content indicates the second rich media information; and the second terminal device displays the second rich media information based on the first message content.

During implementation of embodiments of this application, when a sender intends to send the first rich media information to a recipient through the satellite device, the first terminal device of the sender transmits the compressed data of the first rich media information to the first server through the satellite device. The first server decompresses the compressed data, and directly or indirectly transmits the second rich media information obtained through decompression to the second terminal device of the recipient. In this way, an amount of data that needs to be transmitted by the satellite device is effectively reduced, so that the satellite device can also support transmission of rich media information between terminal devices. The first server performs decompression, and the second terminal device of the recipient may not have a decompression capability and may receive the first message content in a conventional message processing manner. This reduces a requirement on the second terminal device. The second rich media information obtained through decompression may include valid information of the first rich media information, and the recipient may obtain, based on the second rich media information, the valid information of the first rich media information that needs to be transmitted by the sender. It may be understood that, in an application scenario with no reception (for example, a rescue scenario), rich media information is transmitted through the satellite device, so that richer and more complete help-seeking information can be provided for the recipient. This helps ensure safety of life and property of a user.

In an implementation, the first message content includes the second rich media information. During implementation of embodiments of this application, the first server may directly transmit the second rich media information to the terminal device of the recipient.

In an implementation, the first message content includes a first web address link corresponding to the second rich media information; and that the second terminal device displays the second rich media information based on the first message content includes: In response to an input operation on the first web address link, the second terminal device displays the second rich media information on a first web page corresponding to the first web address link. During implementation of embodiments of this application, the first server may transmit the web page link of the second rich media information to the terminal device of the recipient, and the user may choose whether to view the rich media information on the web page corresponding to the web page link, to reduce data traffic required for transmitting the first message content.

In an implementation, that the first server sends the first message content to the second terminal device includes: The first server sends the first message content to a second application on the second terminal device, where the second application includes an instant messaging application and/or a messaging application. During implementation of embodiments of this application, the terminal device of the recipient may receive the first message content by using the instant messaging application and/or the messaging application, so that different requirements of different users can be met. For example, when the terminal device of the recipient has no mobile cellular network but can access the Internet, the terminal device of the recipient cannot receive the first message content by using the messaging application, but may receive the first message content by using the instant messaging application. For example, when the terminal device of the recipient has a mobile cellular network but has no data traffic, the terminal device of the recipient cannot receive the first message content by using the instant messaging application, but may receive the first message content by using the messaging application. The first message content is received by using the instant messaging application and the messaging application, so that a possibility that the user misses reading the first message content can be reduced.

In an implementation, before the first application on the first terminal device receives the second input operation, the method further includes: The first terminal device displays a first user interface of the first application, where the first user interface includes the first rich media information; and in response to a third input operation, the first terminal device decompresses the compressed data of the first rich media information, and obtains and displays the second rich media information obtained through decompression. During implementation of embodiments of this application, the sender may control the first terminal device to display the second rich media information corresponding to the first rich media information, to preview, in advance, the rich media information actually received by the recipient.

In an implementation, the first rich media information includes a non-key part and N key parts, and the second rich media information generated based on the first rich media information also includes a non-key part and N key parts, where N is a positive integer greater than 0; a definition of the key part of the second rich media information is higher than a definition of the non-key part of the second rich media information; and the definition of the non-key part of the second rich media information is lower than a definition of the non-key part of the first rich media information. During implementation of embodiments of this application, in a process of compressing and decompressing the first rich media information, a definition of a non-key part in the rich media information is reduced, and it is ensured that a definition of a key part is higher than the definition of the non-key part. In this way, information indicated by the key part in the rich media information is effectively retained while a data amount of the compressed data of the first rich media information is reduced as much as possible, to ensure that the recipient can obtain the information.

In an implementation, that the first terminal device obtains the compressed data of the first rich media information includes: The first terminal device performs lossy compression on the non-key part of the first rich media information based on a first loss rate, to obtain first compressed data of the non-key part of the first rich media information, where the compressed data of the first rich media information includes the first compressed data; and the first terminal device skips performing compression on the key part of the first rich media information, where the compressed data of the first rich media information includes original data of the key part of the first rich media information; or the first terminal device performs lossless compression on the key part of the first rich media information, to obtain second compressed data of the key part of the first rich media information, where the compressed data of the first rich media information includes the second compressed data; or the first terminal device compresses the key part of the first rich media information based on a second loss rate, to obtain third compressed data of the key part of the first rich media information, where the compressed data of the first rich media information includes the third compressed data, and the second loss rate is lower than the first loss rate. During implementation of embodiments of this application, lossy compression is performed on the non-key part of the rich media information based on a high loss rate, and no compression is performed on the key part, lossless compression is performed on the key part, or lossy compression is performed on the key part based on a low loss rate. In this way, the information indicated by the key part in the rich media information is effectively retained while the data amount of the compressed data of the first rich media information is reduced as much as possible, to ensure that the recipient can obtain the information.

In an implementation, the first user interface includes a first control, the third input operation is performed on the first control, and the first control is used to trigger the first terminal device to obtain the second rich media information corresponding to the first rich media information. During implementation of embodiments of this application, the sender may manually trigger, by using the first control, the first terminal device to obtain the second rich media information corresponding to the first rich media information.

In an implementation, the first rich media information is a first image, the third input operation is used to generate a first selection box on the first image or adjust the first selection box on the first image, an area in the first selection box on the first image is the key part, and an area outside the selection box on the first image is the non-key part. During implementation of embodiments of this application, the first rich media information may be the first image, and the sender may manually generate or adjust the selection box of the key part on the first image displayed on the first terminal device.

In an implementation, the key part includes a preset object, and the key part is automatically identified by the first terminal device based on the preset object. During implementation of embodiments of this application, the first terminal device may automatically identify the key part of the first rich media information based on the preset object.

In an implementation, the method further includes: The first terminal device extracts first text information indicated by a first key part of the first rich media information, where the first key part is any one of the N key parts, the first request message further includes the first text information, and the first message content includes the first text information; and the second terminal device displays the first text information based on the first message content. During implementation of embodiments of this application, the first terminal device extracts, in advance, the text information indicated by the key part of the rich media information, and includes the text information in the first message content. In this way, it can be ensured that the recipient can accurately obtain the text information indicated by the key part of the rich media information.

In an implementation, the method further includes: The first terminal device extracts first text information indicated by a first key part of the first rich media information, where the first key part is any one of the N key parts, the first request message further includes the first text information, and the first text information is used to decompress the compressed data of the first rich media information. During implementation of embodiments of this application, the text information that is indicated by the key part and that is extracted by the first terminal device in advance may be used to assist the first server in performing the foregoing decompression processing, to improve accuracy and a definition of a text in the key part after the decompression processing.

In an implementation, the method further includes: The first terminal device displays a first user interface of the first application. The first user interface is used to preview the second rich media information, the first user interface includes a second control and a third control, the second control is used to perform level-one compression on the first rich media information, the third control is used to perform level-two compression on the first rich media information, and a data amount of compressed data obtained through level-two compression is less than a data amount of compressed data obtained through level-one compression. In response to an input operation on the second control, the second rich media information is obtained and displayed based on compressed data of level-one compression of the first rich media information; or in response to an input operation on the third control, the second rich media information is obtained and displayed based on compressed data of level-two compression of the first rich media information. During implementation of embodiments of this application, the first terminal device may provide the sender with options of a plurality of compression levels, and different compression levels correspond to different data amounts of generated compressed data. After a specified compression level is selected, the sender may preview, in advance, the second rich media information generated by using a compression algorithm corresponding to the compression level. In this way, the sender may select the compression level of the first rich media information as required, to effectively improve user experience.

In an implementation, the first user interface further includes first indication information and second indication information. The first indication information indicates the data amount of the compressed data obtained through level-one compression, and estimated transmission duration for sending the first message content to the second terminal via the compressed data of level-one compression. The first indication information indicates the data amount of the compressed data obtained through level-two compression, and estimated transmission duration for sending the first message content to the second terminal via the compressed data of level-one compression. During implementation of embodiments of this application, the sender may select a compression level of the first rich media information as required based on the data amount and the transmission duration of the compressed data corresponding to each compression level, to effectively improve user experience.

In an implementation, the first request message includes an account of a sender and an account of a recipient, and the account of the recipient is used to determine the second terminal device of the recipient. During implementation of embodiments of this application, the first server may determine the terminal device of the recipient based on the account of the recipient.

In an implementation, the first request message includes a first field, a second field, a third field, and a fourth field. The first field indicates whether the first request message includes an image. The second field indicates a first compression algorithm used for a first image. The third field indicates a data length of compressed data of the first image. The fourth field indicates the compressed data of the first image. Embodiments of this application provide a packet format of the first request message. Based on the packet format of the first request message, the first server may extract a specified field of a packet, to learn whether the satellite message sent by the sender through the satellite device includes an image, a compression algorithm used for the image, a data length of compressed data obtained through image compression, and the compressed data obtained through image compression.

In an implementation, a second user interface of the first application includes a fourth control; and before the first application on the first terminal device receives the first input operation, the method further includes: The first application displays a photographing preview interface in response to an input operation on the fourth control, where the photographing preview interface includes a preview image captured by a camera; and that the first application on the first terminal device obtains the first rich media information in response to the first input operation includes: In response to the first input operation, the first application on the first terminal device invokes the camera to shoot the first image, where the first rich media information is the first image, and the second rich media information is an image obtained by performing decompression processing on the compressed data of the first image. During implementation of embodiments of this application, the first rich media information may be an image shot by the sender through the camera when the sender edits the satellite message.

In an implementation, the first input operation is used to shoot the first image, and the first rich media information is the first image; or the first input operation is used to select the first image from a local gallery, and the first rich media information is the first image; or the first input operation is used to shoot a first video, and the first rich media information is the first video; or the first input operation is used to select the first video from the local gallery, and the first rich media information is the first video; or the first input operation is used to record a first audio, and the first rich media information is the first audio.

In an implementation, the compressed data of the first rich media information is obtained by performing, by the first terminal device, compression encoding on the first rich media information by using the first compression algorithm. That the first server decompresses the compressed data of the first rich media information, to obtain the second rich media information includes: The first server decompresses the first rich media information by using a decompression algorithm corresponding to the first compression algorithm, to obtain the second rich media information obtained through decompression. Alternatively, the first server decompresses the first rich media information by using the decompression algorithm corresponding to the first compression algorithm, to obtain third rich media information obtained through decompression; and the first server performs enhancement processing on the third rich media information by using a first enhancement algorithm, to obtain the second rich media information obtained through enhancement processing. During implementation of embodiments of this application, after the first rich media information is decompressed, overall enhancement may be further performed on the rich media information obtained through decompression by using a preset rich media information enhancement algorithm, to obtain the second rich media information obtained through enhancement. In this way, a definition of the second rich media information can be improved, and quality of the second rich media information can be improved.

According to a second aspect, this application provides a satellite communication method. The method includes: A first application on a first terminal device receives a first input operation; the first application on the first terminal device obtains first rich media information in response to the first input operation; the first application on the first terminal device obtains compressed data of the first rich media information; the first application on the first terminal device receives a second input operation; the first terminal device sends a first request message to a first server through the satellite device in response to the second input operation, where the first request message includes the compressed data of the first rich media information; and the first server is configured to: decompress the compressed data of the first rich media information, to obtain second rich media information, and send first message content to a second terminal device, where the first message content indicates the second rich media information.

During implementation of embodiments of this application, when a sender intends to send the first rich media information to a recipient through the satellite device, the first terminal device of the sender transmits the compressed data of the first rich media information to the first server through the satellite device. The first server decompresses the compressed data, and directly or indirectly transmits the second rich media information obtained through decompression to the second terminal device of the recipient. In this way, an amount of data that needs to be transmitted by the satellite device is effectively reduced, so that the satellite device can also support transmission of rich media information between terminal devices. The first server performs decompression, and the second terminal device of the recipient may not have a decompression capability and may receive the first message content in a conventional message processing manner. This reduces a requirement on the second terminal device. The second rich media information obtained through decompression may include valid information of the first rich media information, and the recipient may obtain, based on the second rich media information, the valid information of the first rich media information that needs to be transmitted by the sender. It may be understood that, in an application scenario with no reception (for example, a rescue scenario), rich media information is transmitted through the satellite device, so that richer and more complete help-seeking information can be provided for the recipient. This helps ensure safety of life and property of a user.

In an implementation, the first message content includes the second rich media information.

In an implementation, the first message content includes a first web address link corresponding to the second rich media information, and a first web page corresponding to the first web address link is used to display the second rich media information.

In an implementation, the first application includes an instant messaging application and/or a messaging application.

In an implementation, before the first application on the first terminal device receives the second input operation, the method further includes: The first terminal device displays a first user interface of the first application, where the first user interface includes the first rich media information; and in response to a third input operation, the first terminal device decompresses the compressed data of the first rich media information, and obtains and displays the second rich media information obtained through decompression.

In an implementation, the first rich media information includes a non-key part and N key parts, and the second rich media information generated based on the first rich media information also includes a non-key part and N key parts, where N is a positive integer greater than 0; a definition of the key part of the second rich media information is higher than a definition of the non-key part of the second rich media information; and the definition of the non-key part of the second rich media information is lower than a definition of the non-key part of the first rich media information.

In an implementation, that the first terminal device obtains the compressed data of the first rich media information includes: The first terminal device performs lossy compression on the non-key part of the first rich media information based on a first loss rate, to obtain first compressed data of the non-key part of the first rich media information, where the compressed data of the first rich media information includes the first compressed data; and the first terminal device skips performing compression on the key part of the first rich media information, where the compressed data of the first rich media information includes original data of the key part of the first rich media information; or the first terminal device performs lossless compression on the key part of the first rich media information, to obtain second compressed data of the key part of the first rich media information, where the compressed data of the first rich media information includes the second compressed data; or the first terminal device compresses the key part of the first rich media information based on a second loss rate, to obtain third compressed data of the key part of the first rich media information, where the compressed data of the first rich media information includes the third compressed data, and the second loss rate is lower than the first loss rate.

In an implementation, the first user interface includes a first control, the third input operation is performed on the first control, and the first control is used to trigger the first terminal device to obtain the second rich media information corresponding to the first rich media information.

In an implementation, the first rich media information is a first image, the third input operation is used to generate a first selection box on the first image or adjust the first selection box on the first image, an area in the first selection box on the first image is the key part, and an area outside the selection box on the first image is the non-key part.

In an implementation, the key part includes a preset object, and the key part is automatically identified by the first terminal device based on the preset object.

In an implementation, the method further includes: The first terminal device extracts first text information indicated by a first key part of the first rich media information, where the first key part is any one of the N key parts, the first request message further includes the first text information, and the first message content includes the first text information.

In an implementation, the method further includes: The first terminal device extracts first text information indicated by a first key part of the first rich media information, where the first key part is any one of the N key parts, the first request message further includes the first text information, and the first text information is used to decompress the compressed data of the first rich media information.

In an implementation, the first request message includes an account of a sender and an account of a recipient, and the account of the recipient is used to determine the second terminal device of the recipient.

In an implementation, the first request message includes a first field, a second field, a third field, and a fourth field. The first field indicates whether the first request message includes an image. The second field indicates a first compression algorithm used for a first image. The third field indicates a data length of compressed data of the first image. The fourth field indicates the compressed data of the first image.

In an implementation, a second user interface of the first application includes a fourth control; and before the first application on the first terminal device receives the first input operation, the method further includes: The first application displays a photographing preview interface in response to an input operation on the fourth control, where the photographing preview interface includes a preview image captured by a camera; and that the first application on the first terminal device obtains the first rich media information in response to the first input operation includes: In response to the first input operation, the first application on the first terminal device invokes the camera to shoot the first image, where the first rich media information is the first image, and the second rich media information is an image obtained by performing decompression processing on the compressed data of the first image.

According to a third aspect, this application provides a satellite communication method. The method includes: A second terminal device receives first message content sent by a first server, where the first message content indicates second rich media information, the second rich media information is obtained by performing decompression processing on compressed data of first rich media information by the first server, and the compressed data of the first rich media information is sent by a first terminal device to the first server via a first request message through a satellite device; and the second terminal device displays the second rich media information based on the first message content.

During implementation of embodiments of this application, when a sender intends to send the first rich media information to a recipient through the satellite device, the first terminal device of the sender transmits the compressed data of the first rich media information to the first server through the satellite device. The first server decompresses the compressed data, and directly or indirectly transmits the second rich media information obtained through decompression to the second terminal device of the recipient. In this way, an amount of data that needs to be transmitted by the satellite device is effectively reduced, so that the satellite device can also support transmission of rich media information between terminal devices. The first server performs decompression, and the second terminal device of the recipient may not have a decompression capability and may receive the first message content in a conventional message processing manner. This reduces a requirement on the second terminal device. The second rich media information obtained through decompression may include valid information of the first rich media information, and the recipient may obtain, based on the second rich media information, the valid information of the first rich media information that needs to be transmitted by the sender. It may be understood that, in an application scenario with no reception (for example, a rescue scenario), rich media information is transmitted through the satellite device, so that richer and more complete help-seeking information can be provided for the recipient. This helps ensure safety of life and property of a user.

In an implementation, the first message content includes the second rich media information.

In an implementation, the first message content includes a first web address link corresponding to the second rich media information; and that the second terminal device displays the second rich media information based on the first message content includes: In response to an input operation on the first web address link, the second terminal device displays the second rich media information on a first web page corresponding to the first web address link.

In an implementation, that the second terminal device receives the first message content sent by the first server includes: A second application on the second terminal device receives the first message content sent by the first server, where the second application includes an instant messaging application and/or a messaging application.

In an implementation, the first rich media information includes a non-key part and N key parts, and the second rich media information generated based on the first rich media information also includes a non-key part and N key parts, where N is a positive integer greater than 0; a definition of the key part of the second rich media information is higher than a definition of the non-key part of the second rich media information; and the definition of the non-key part of the second rich media information is lower than a definition of the non-key part of the first rich media information.

In an implementation, the key part is selected by a user from the first rich media information.

In an implementation, the key part includes a preset object, and the key part is automatically identified by the first terminal device based on the preset object.

In an implementation, the first request message further includes first text information, and the first message content includes the first text information; and the first text information is text information indicated by a first key part of the first rich media information, the first key part is any one of the N key parts, and the method further includes: The second terminal device displays the first text information based on the first message content.

According to a fourth aspect, this application provides a satellite communication method. The method includes: A first server receives a first request message sent by a first terminal device through a satellite device, where the first request message includes compressed data of first rich media information; the first server decompresses the compressed data of the first rich media information, to obtain second rich media information; and the first server sends first message content to a second terminal device, where the first message content indicates the second rich media information.

During implementation of embodiments of this application, when a sender intends to send the first rich media information to a recipient through the satellite device, the first terminal device of the sender transmits the compressed data of the first rich media information to the first server through the satellite device. The first server decompresses the compressed data, and directly or indirectly transmits the second rich media information obtained through decompression to the second terminal device of the recipient. In this way, an amount of data that needs to be transmitted by the satellite device is effectively reduced, so that the satellite device can also support transmission of rich media information between terminal devices. The first server performs decompression, and the second terminal device of the recipient may not have a decompression capability and may receive the first message content in a conventional message processing manner. This reduces a requirement on the second terminal device. The second rich media information obtained through decompression may include valid information of the first rich media information, and the recipient may obtain, based on the second rich media information, the valid information of the first rich media information that needs to be transmitted by the sender. It may be understood that, in an application scenario with no reception (for example, a rescue scenario), rich media information is transmitted through the satellite device, so that richer and more complete help-seeking information can be provided for the recipient. This helps ensure safety of life and property of a user.

In an implementation, the first message content includes the second rich media information.

In an implementation, the first message content includes a first web address link corresponding to the second rich media information, and a first web page corresponding to the first web address link is used to display the second rich media information.

In an implementation, that the first server sends the first message content to the second terminal device includes: The first server sends the first message content to a second application on the second terminal device, where the second application includes an instant messaging application and/or a messaging application.

In an implementation, the first rich media information includes a non-key part and N key parts, and the second rich media information generated based on the first rich media information also includes a non-key part and N key parts, where N is a positive integer greater than 0; a definition of the key part of the second rich media information is higher than a definition of the non-key part of the second rich media information; and the definition of the non-key part of the second rich media information is lower than a definition of the non-key part of the first rich media information.

In an implementation, the first request message further includes first text information, the first message content includes the first text information, the first text information is text information indicated by a first key part of the first rich media information, and the first key part is any one of the N key parts; and the second terminal device is configured to display the first text information based on the first message content.

In an implementation, the first request message further includes first text information, the first text information is text information indicated by a first key part of the first rich media information, and the first key part is any one of the N key parts; and the first text information is used to decompress the compressed data of the first rich media information.

In an implementation, the first request message includes an account of a sender and an account of a recipient, and the account of the recipient is used to determine the second terminal device of the recipient.

In an implementation, the first request message includes a first field, a second field, a third field, and a fourth field. The first field indicates whether the first request message includes an image. The second field indicates a first compression algorithm used for a first image. The third field indicates a data length of compressed data of the first image. The fourth field indicates the compressed data of the first image.

According to a fifth aspect, embodiments of this application provide a terminal device. The terminal device includes a processor and a memory. The memory is coupled to the processor. The memory is configured to store computer program code. The computer program code includes computer instructions. When the processor reads the computer instructions from the memory, the terminal device executes the satellite communication method according to any one of the second aspect or the third aspect.

According to a sixth aspect, embodiments of this application provide a server. The server includes a processor and a memory. The memory is coupled to the processor. The memory is configured to store computer program code. The computer program code includes computer instructions. When the processor reads the computer instructions from the memory, the server executes the satellite communication method according to the fourth aspect.

According to a seventh aspect, embodiments of this application provide a computer storage medium, including computer instructions. When the computer instructions are run on a computer, the computer is enabled to perform the satellite communication method according to any possible implementation of the foregoing aspects.

According to an eighth aspect, embodiments of this application provide a computer program product. When the computer program product runs on a computer, the computer is enabled to perform the satellite communication method according to any possible implementation of the foregoing aspects.

### BRIEF DESCRIPTION OF DRAWINGS

FIG. 1 is a diagram of a system architecture of a satellite communication system according to an embodiment of this application;
FIG. 2A to FIG. 2D show related user interfaces for creating a BeiDou satellite message by using a MeeTime APP according to an embodiment of this application;
FIG. 2E to FIG. 2I show related user interfaces for editing message content and adding an image by a sender according to an embodiment of this application;
FIG. 2J to FIG. 2N show related user interfaces for sending edited message content according to an embodiment of this application;
FIG. 3A to FIG. 3G show related user interfaces for receiving message content by a recipient according to an embodiment of this application;
FIG. 4A to FIG. 4N show related user interfaces for adding a video according to an embodiment of this application;
FIG. 5A to FIG. 5L show related user interfaces for adding an audio according to an embodiment of this application;
FIG. 6A to FIG. 6F show related user interfaces for sending an image according to an embodiment of this application;
FIG. 7A to FIG. 7D show related user interfaces of a plurality of compression levels according to an embodiment of this application;
FIG. 8A to FIG. 8O show related user interfaces for manually drag-selecting a key area according to an embodiment of this application;
FIG. 9A to FIG. 9G show related user interfaces for manually drag-selecting a key area according to an embodiment of this application;
FIG. 10A to FIG. 10D show related user interfaces for providing a plurality of compression levels for a key area according to an embodiment of this application;
FIG. 11A to FIG. 11D show related user interfaces for automatically drag-selecting a key area according to an embodiment of this application;
FIG. 12A to FIG. 12H show related user interfaces for extracting text information of a key area according to an embodiment of this application;
FIG. 13A to FIG. 13C are a method flowchart of a satellite communication method according to an embodiment of this application;
FIG. 14 is a method flowchart of a satellite communication method according to an embodiment of this application;
FIG. 15 is a diagram of a structure of a terminal device according to an embodiment of this application; and
FIG. 16 is a diagram of a structure of an application server according to an embodiment of this application.

### DESCRIPTION OF EMBODIMENTS

Technical solutions according to embodiments of this application are clearly and completely described in the following with reference to accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application (application, APP) or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of an electronic device.

A low-earth orbit satellite provides a standard internet data service to the outside, and a terminal device may send various types of information, for example, rich media information like an image, through the low-earth orbit satellite and a mobile network. However, more types of satellites (for example, a geosynchronous orbit satellite) usually cannot use the mobile network, and have a low communication frequency (for example, once per second), a narrow communication bandwidth, and a small data amount (for example, 1680 bits) in a single transmission. Through these types of satellites, only low-data-amount information such as text information and positioning information can be sent, and high-data-amount rich media information such as an image, a speech, or a video cannot be sent.

Embodiments of this application provide a satellite communication method. The method supports sending rich media information such as an image through a satellite. For a specific application scenario (for example, a help-seeking scenario) with no reception, a terminal device of a user can transmit richer and more varied information to another terminal device through a satellite device, to effectively improve user experience.

The following describes a satellite communication system 10 related to the satellite communication method provided in embodiments of this application.

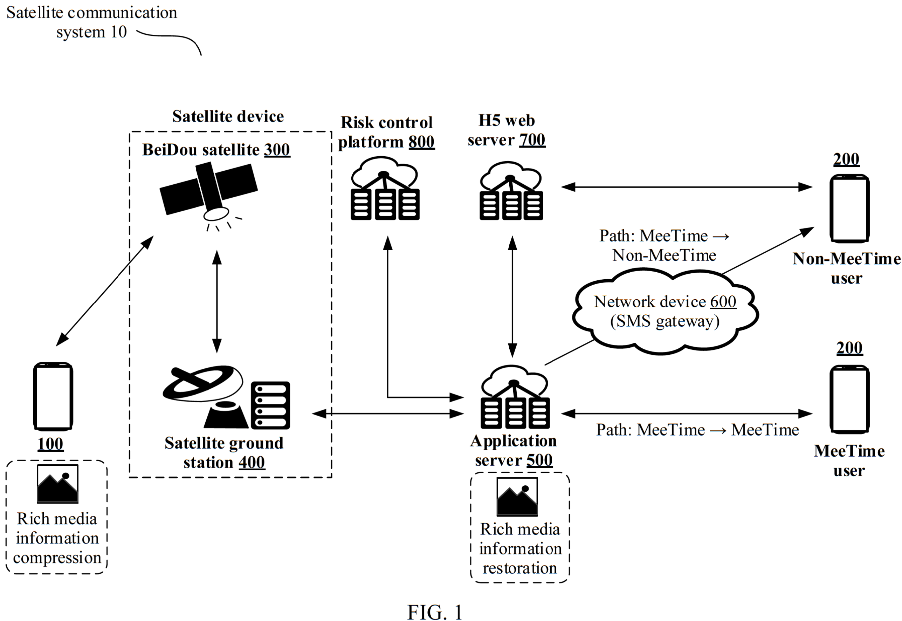

FIG. 1 shows an example of a system architecture of the satellite communication system 10 according to an embodiment of this application. As shown in FIG. 1, the satellite communication system 10 includes a transmit device (for example, a terminal device 100), at least one receive device (for example, a terminal device 200), and a satellite device. In this embodiment of this application, the terminal device 100 may send a satellite message to the terminal device 200 through the satellite device. The satellite message may include text information, and include rich media information such as an image, a speech, a video, or an animation.

In some embodiments, as shown in FIG. 1, the satellite device includes a first satellite (for example, a BeiDou satellite 300) and a satellite ground station 400 of the first satellite. After the terminal device 100 sends a BeiDou satellite message to the BeiDou satellite 300, the BeiDou satellite 300 sends the BeiDou satellite message to the terminal device 100 through the satellite ground station 400.

A type of the first satellite is not specifically limited in embodiments of this application. The first satellite may be a geosynchronous orbit satellite, for example, the BeiDou satellite 300. In subsequent embodiments, the BeiDou satellite 300 is used as an example for description.

In some embodiments, as shown in FIG. 1, a first application (for example, a MeeTime APP) is installed on the terminal device 100, a user (namely, a sender) of the terminal device 100 is a registered user of the first application, and the satellite communication system 10 further includes an application server 500 of the first application (for example, an application server of the MeeTime APP). The first application on the terminal device 100 may compress rich media information 1 (for example, an image 1) that the user intends to transmit, to obtain compressed data 1 obtained through compression. The sender may trigger, by using the first application, the terminal device 100 to send the compressed data 1 to the BeiDou satellite 300. The BeiDou satellite 300 sends the compressed data 1 to the application server 500 through the satellite ground station 400. The application server 500 decompresses the compressed data 1 through a decompression processing module, and sends, to the terminal device 200, rich media information 2 obtained through decompression, for example, decompresses the compressed data of the image 1 to obtain an image 2. A recipient may view the rich media information 2 through the terminal device 200, and the rich media information 1 and the rich media information 2 may include same valid information.

The decompression processing module may be an independent server/server cluster, or may be a module integrated into the application server 500.

The first application is not specifically limited in embodiments of this application. In subsequent embodiments, an example in which the first application is the MeeTime APP is used for description.

In some embodiments, a data amount of the compressed data 1 is small (for example, the data amount is less than 1 KB), and is less than a maximum data amount that is in a single transmission and that can be supported by the satellite device. In an implementation, the compressed data 1 is lossy compressed data, and the rich media information 2 is lossy rich media information 1. Compared with the rich media information 1, the rich media information 2 includes a smaller amount of information, and may convey same valid information although lacking details and being more blurred. For example, the image 2 is formed by performing lossy compression and decompression on the image 1. Both the image 1 and the image 2 show a current geographical environment of the sender, and a location of the sender may be determined based on either of the image 1 and the image 2.

In some embodiments, the first application is also installed on the terminal device 200, and a user (namely, a recipient) of the terminal device 200 is also a registered user of the first application. After obtaining the rich media information 2 obtained through decompression, the application server 500 of the first application may send the rich media information 2 to the first application on the terminal device 200 through a communication network. The user may view the rich media information 2 by using the first application (for example, the MeeTime APP).

In some embodiments, the user (namely, the recipient) of the terminal device 200 is not the registered user of the first application. As shown in FIG. 1, the satellite communication system 10 may further include a network device 600 (for example, an SMS gateway) of a mobile cellular network of an operator. After obtaining the rich media information 2 obtained through decompression, the application server 500 of the first application may send the rich media information 2 to the network device 600, and the network device 600 sends the rich media information 2 to a Messaging APP on the terminal device 200 through the mobile cellular network. The user may view the rich media information 2 by using the Messaging APP.

An account (for example, a mobile phone number) of the recipient may be a contact of the sender, or may be a public account of a national emergency rescue center.

The SMS gateway is used to resolve problems of messaging interworking between networks and operators and access of service providers, and provides a dynamic data exchange platform system. The network device 600 is not specifically limited in embodiments of this application. For example, the network device 600 further includes a base station.

In some embodiments, as shown in FIG. 1, the satellite communication system 10 further includes a web server 700 (for example, an H5 web server). After obtaining the rich media information 2 obtained through decompression, the application server 500 obtains a web address link of the rich media information 2 from the web server 700, and sends the web address link of the rich media information 2 to the MeeTime APP or the messaging APP on the terminal device 200. The user may view, on the terminal device 200, the rich media information 2 indicated by the web address link.

In some embodiments, as shown in FIG. 1, the satellite communication system 10 further includes a risk control platform 800. After obtaining the rich media information 2, the application server 500 may request the risk control platform 800 to detect whether the rich media information 2 includes violation information. The application server 500 sends the rich media information 2 to the terminal device 200 only when the rich media information 2 does not include the violation information.

The communication network may include a local area network (local area network, LAN) and/or a wide area network (wide area network, WAN). The communication network may be implemented by using any known network communication protocol. The network communication protocol may be various wired or wireless communication protocols, for example, Ethernet, a universal serial bus (universal serial bus, USB), firewire (FIREWIRE), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), NFC, voice over Internet protocol (voice over Internet protocol, VoIP), a communication protocol supporting a network slice architecture, or any other suitable communication protocol.

The terminal device 100 and the terminal device 200 each may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (like a smart band), a vehicle-mounted device, a smart home device (like a smart television, a smart screen, or a large-screen device), and/or a smart city device. A specific type of the terminal device 100 is not specially limited in embodiments of this application. The terminal device may also be referred to as an electronic device, a terminal, or the like.

The application server 500 may be a server, a server cluster including a plurality of servers, or a cloud computing center. The application server 500 in this embodiment of this application may also be referred to as a cloud server, a cloud, or a cloud side. For the web server 700, refer to related descriptions of the application server 500. Details are not described herein again.

It should be understood that FIG. 1 is merely a diagram of a system structure of a communication system according to an embodiment of this application, and does not constitute a specific limitation on the satellite communication system 10. The satellite communication system 10 may include more or fewer devices than those shown in the figure, for example, may further include a wireless relay device and a wireless backhaul device (not shown in FIG. 1). This is not limited herein.

According to the satellite communication system provided in this embodiment of this application, when the sender intends to send the rich media information 1 to the recipient through the satellite device, the satellite device needs to transmit only the compressed data of the rich media information 1. This effectively reduces a data amount that needs to be transmitted by the satellite device, so that the satellite device can also support rich media information transmission between terminal devices. In addition, the rich media information 2 restored from the compressed data of the rich media information 1 may retain the valid information of the rich media information 1, and the recipient may obtain, based on the rich media information 2, necessary information that needs to be transmitted by the sender. In a specific application scenario (for example, a rescue scenario), rich media information can be transmitted to provide richer and more complete help-seeking information for the user and a rescue organization. This further helps ensure safety of life and property of the user.

With reference to an application scenario, the following specifically describes, based on interface embodiments 1 to 4, the satellite communication method provided in embodiments of this application.

In an application scenario (for example, a help-seeking scenario), when the terminal device 100 of the sender is located in an area in which mobile communication coverage is unavailable, inaccessible, or disrupted due to damage to a communication system, for example, an ocean, a desert, a grassland, or an unmanned area, the terminal device 100 cannot use a network resource (for example, a local area network or a mobile cellular network) other than a satellite communication network. In other words, the terminal device 100 is in a state of no reception/no network service. The satellite communication network includes the satellite device. The terminal device 100 of the sender may communicate with the terminal device 200 of the recipient through the satellite communication network, to transmit text information and rich media information such as an image, a video, a speech, or an animation. When the user needs to seek assistance, the user can more clearly convey information such as a location and an environment of the user and a required rescue measure to the recipient based on the rich media information.

### Interface embodiment 1

In Interface embodiment 1, in the foregoing application scenario, a sender may edit, by using a first application (for example, a MeeTime APP) of a terminal device 100, message content 1 of a BeiDou satellite message 1 to be sent to a recipient, and add rich media information such as an image, a speech, a video, or an animation to the message content 1. The first application may compress rich media information 1 selected by a user to obtain compressed data 1, decompress the compressed data 1 to obtain compressed preview information corresponding to the rich media information 1 (namely, rich media information 2), and further add the rich media information 2 to the message content 1. The sender may trigger, by using the first application, the terminal device 100 to send the compressed data 1 through a BeiDou satellite 300, where the compressed data 1 is used to transmit the rich media information 2 to the recipient.

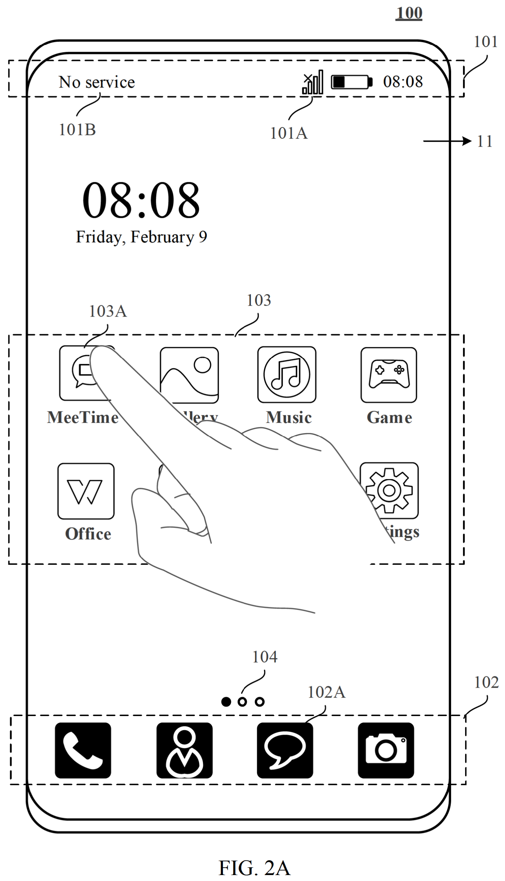

For example, the rich media information 1 includes an image 1. FIG. 2A to FIG. 2M show user interfaces on which the terminal device 100 of the sender sends the rich media information to the recipient via the BeiDou satellite message of the MeeTime APP.

FIG. 2A to FIG. 2D show related user interfaces on which the sender creates a BeiDou satellite message by using the MeeTime APP.

FIG. 2A shows a home screen 11 that is on the terminal device 100 and that is used to display an installed APP. The home screen 11 may include a status bar 101, a tray 102 including a commonly used application icon, other application icons 103, and a page indicator 104. The status bar 101 includes a signal indicator 101A of a cellular network, and the signal indicator 101A indicates that the terminal device 100 currently has no cellular network reception. The status bar 101 may further include prompt information 101B, to prompt the user that there is no network service currently. The tray 102 of the commonly used application icon may display an icon 102A of a Messaging APP. The other application icons 103 may display an icon 103A of the MeeTime APP. The other application icons may be distributed on a plurality of pages, and the page indicator 104 may indicate a specific page on which an application currently viewed by the user is located. The user may slide to the left or to the right in an area of the other application icons, to view an application icon on another page.

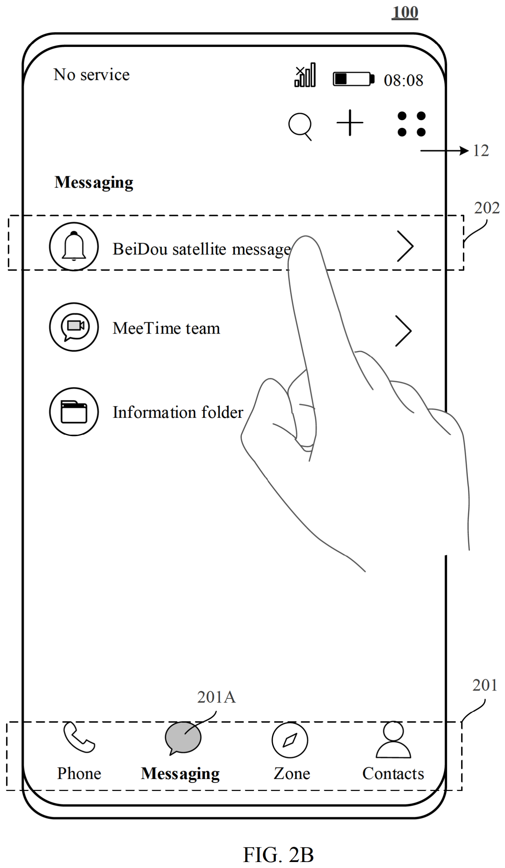

As shown in FIG. 2A and FIG. 2B, the terminal device 100 receives an operation of tapping the icon 103A of the MeeTime APP by the user, starts the MeeTime APP, and displays a user interface 12 of the MeeTime APP in response to an operation. The user interface 12 includes a navigation bar 201, and the navigation bar 201 includes a plurality of page options, for example, a message option 201A, a phone option, a zone option, and a contact option. When a page option (for example, the message option 201A) is selected, page content corresponding to the page option is displayed on the user interface 12. Page content corresponding to the message option 201A includes one or more message bars, for example, a BeiDou satellite message bar 202. The BeiDou satellite message bar 202 is a message bar corresponding to a service account that is of the BeiDou satellite message and that is provided by the MeeTime APP.

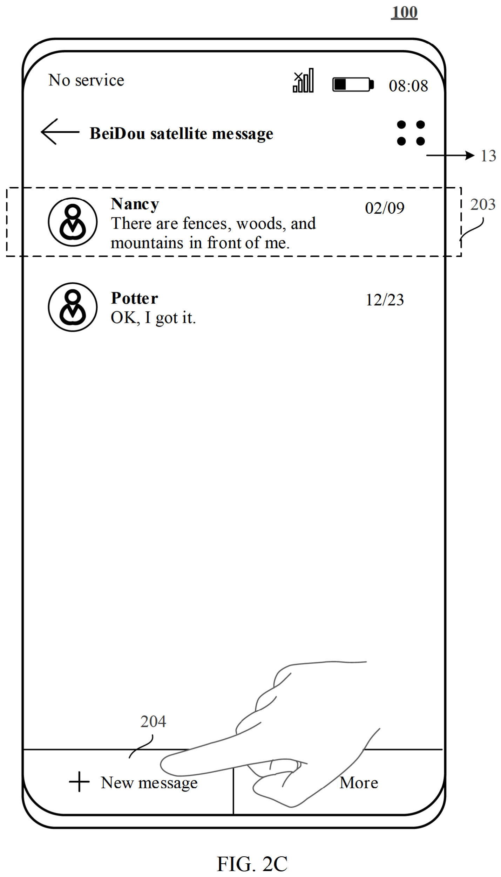

As shown in FIG. 2B and FIG. 2C, the terminal device 100 receives an operation of tapping the BeiDou satellite message bar 202 by the user, and displays a BeiDou satellite message interface 13 in response to the operation. The BeiDou satellite message interface 13 may include a message record bar of one or more contacts, for example, a message record bar 203 of a contact "Nancy". When it is detected that the user taps the message record bar 203, an information interface of the contact may be displayed. The information interface is used to display a message record of a BeiDou satellite message of the contact. The BeiDou satellite message interface 13 may further include an information creation control 204.

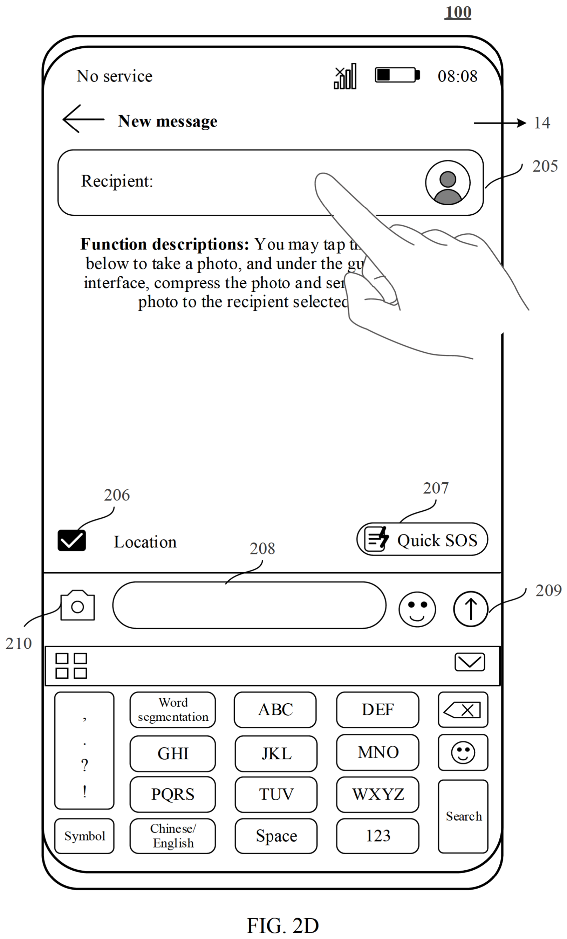

As shown in FIG. 2C and FIG. 2D, the terminal device 100 receives an operation of tapping the information creation control 204 by the user, and displays an information creation interface 14 in response to the operation. The information creation interface 14 is used to edit the recipient and the message content 1 of the BeiDou satellite message 1. The information creation interface 14 may include a title "New message", a recipient bar 205, and one or more information editing controls, for example, a keyboard, a location including control 206, a quick SOS control 207, an information editing bar 208, and a sending control 209.

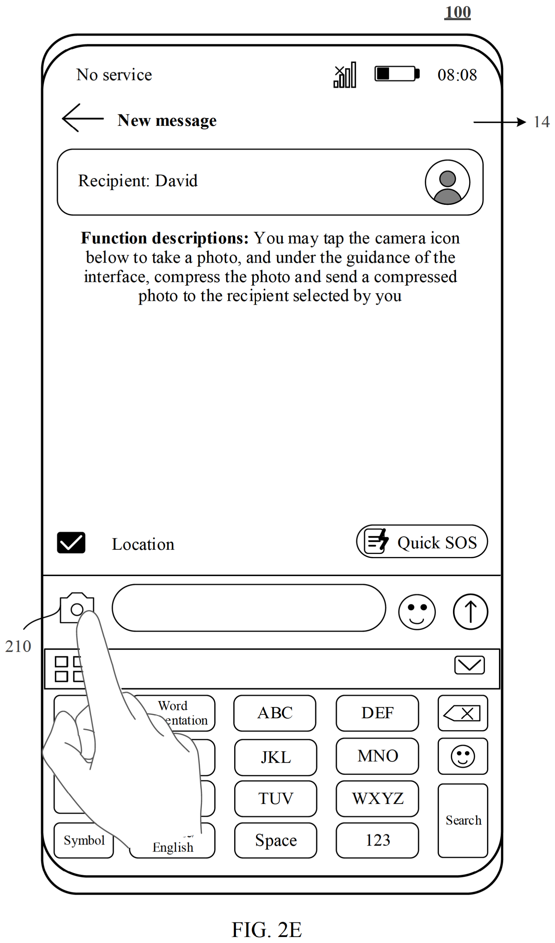

The recipient bar 205 may be used to trigger the terminal device 100 to display a contact list, so that the user selects one or more recipients. The recipient bar 205 may be further used to display one or more selected recipients. For example, as shown in FIG. 2E, a name of the recipient selected by the user, for example, "David", is displayed in the recipient bar 205. When the location including control 206 is selected, the terminal device 100 may display location information (for example, longitude and latitude) of the terminal device 100 on the information creation interface 14, and when the terminal device 100 sends a message, the location information is automatically included in content of the sent message, so that the recipient can learn of a current location of the terminal device 100. The quick SOS control 207 is used to trigger the terminal device 100 to display a plurality of message options, and each message option indicates one piece of help-seeking information. In response to an operation performed by the user on one or more of the message options, the terminal device 100 may quickly add, to the message content, help-seeking information corresponding to each message option, so that the user can quickly edit the message content of the BeiDou satellite message 1. The information editing bar 208 may be configured to display text information and an emoji that are entered by the user, and the message content 1 of the BeiDou satellite message 1 edited by the user includes information displayed in the information editing bar 208. The sending control 209 may be used to trigger the terminal device 100 to send the edited message content 1 to a terminal device corresponding to the recipient, for example, the terminal device 200.

FIG. 2E to FIG. 2I show related user interfaces on which the sender edits message content and adds the image 1 to the message content.

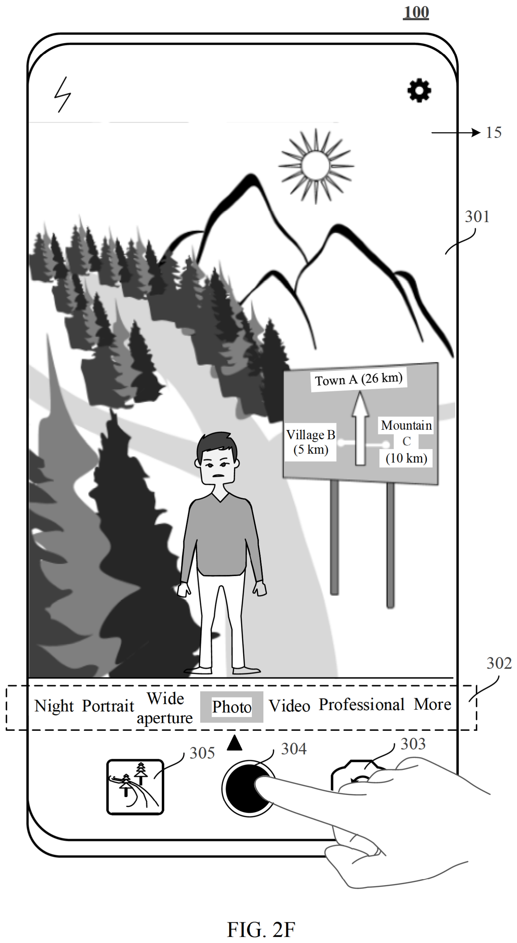

In some embodiments, as shown in FIG. 2E and FIG. 2F, the information creation interface 14 further includes a camera control 210. The terminal device 100 receives an operation of tapping the camera control 210 by the user, and displays a photographing preview interface 15 in response to the operation. The photographing preview interface 15 includes a preview area 301, a photographing mode bar 302, a camera switching control 303, a photographing control 304, and an album control 305. The preview area 301 is used to display a preview image captured by a camera of the terminal device 100 in a currently selected photographing mode. The photographing mode bar 302 is configured to select a photographing mode. For example, the photographing mode bar 302 includes a photographing mode, a portrait mode, a wide aperture mode, a night mode, and a professional mode. The camera switching control 303 is used to switch a camera that currently captures an image. The photographing control 304 is used to trigger the terminal device 100 to invoke the camera to shoot and store a photo in the current photographing mode. The album control 305 is used to view a shot photo.

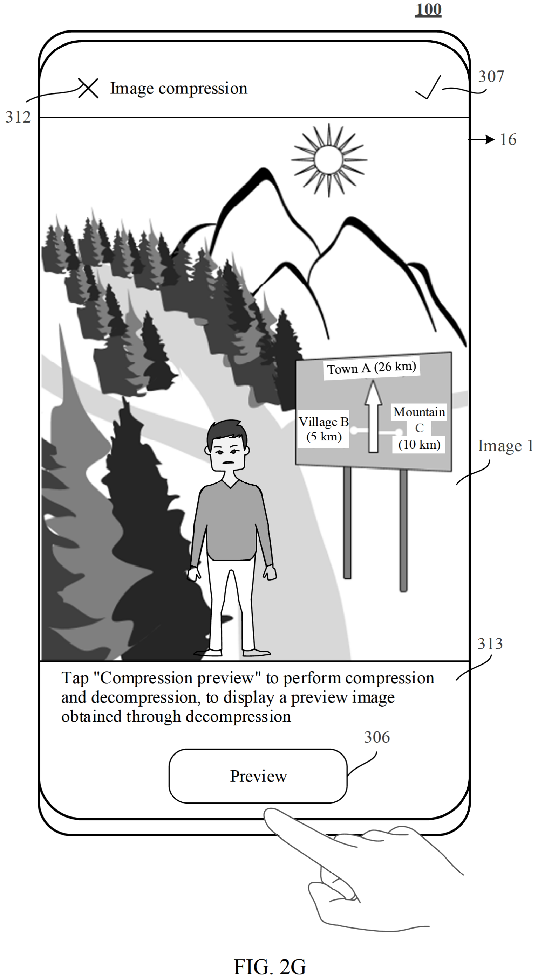

As shown in FIG. 2F and FIG. 2G, the terminal device 100 receives an operation of tapping the photographing control 304 by the user, shoots the image 1, and displays a compression preview interface 16 in response to the operation. The compression preview interface 16 includes the image 1, a compression preview control 306, a confirmation control 307, a cancellation control 312, and prompt information 313. The cancellation control 312 is used to trigger the terminal device 100 to return to the photographing preview interface 15. The prompt information 313 is used to prompt that the compression preview control 306 is tapped to perform compression and decompression processing on the image 1, and display a compressed preview image obtained through decompression.

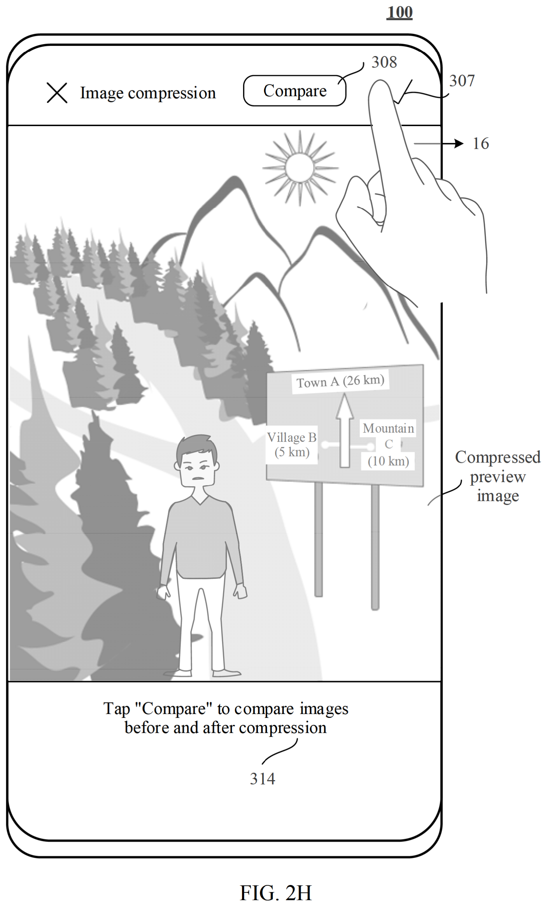

In some embodiments, as shown in FIG. 2G and FIG. 2H, the MeeTime APP on the terminal device 100 receives an operation of tapping the compression preview control 306 by the user; and in response to the operation, compresses the image 1 by using a preset compression algorithm, to obtain compressed data a obtained through compression, and decompresses the compressed data a by using a decompression algorithm corresponding to the preset compression algorithm, to obtain and display an image 2 obtained through decompression, that is, a compressed preview image. The user may preview, in advance by using the compressed preview image, an actual image corresponding to the image 1 that can be received by the recipient.

In some embodiments, the terminal device 100 decompresses the compressed data a by using the decompression algorithm corresponding to the preset compression algorithm, and after obtaining the image 2 obtained through decompression, performs enhancement processing on the image 2 by using a preset image enhancement algorithm, to enrich details of the image 2, improve a definition of the image 2, and improve image quality of the image 2, so as to obtain an image 3 subjected to image enhancement. In response to an operation of tapping the compression preview control 306 by the user, the terminal device 100 displays the image 3 obtained through decompression and image enhancement, namely, the compressed preview image. The image enhancement algorithm is not specifically limited in embodiments of this application.

In some embodiments, the preset compression algorithm is a large-model compression algorithm (for example, an NVPE algorithm), and the decompression algorithm is a large-model decompression algorithm corresponding to the preset compression algorithm.

In an implementation, the compressed data a is lossy compressed data, and the image 2 is a lossy image 1. Compared with the image 1, the image 2 lacks details, and is more visually blurred. However, the image 2 and the image 1 include same valid information. For example, both the image 2 and the image 1 indicate a fence, a road, a forest, a mountain, and a sun direction that are shot. A current location and environment of the sender may be determined based on either of the image 2 and the image 1.

In some embodiments, as shown in FIG. 2H, in response to the operation of tapping the compression preview control 306 by the user, the terminal device 100 further displays a comparison control 308 and prompt information 314. The prompt information 314 is used to prompt the user that the image 1 can be compared with the compressed preview image corresponding to the image 1 by tapping the comparison control 308. This helps the user observe and compare a difference between the original image and the image that can be received by the recipient. For example, when detecting a touch operation performed by the user on the comparison control 308, the terminal device 100 switches the compressed preview image to the image 1; and when detecting that the user stops the touch operation performed on the comparison control 308, the terminal device 100 switches the image 1 back to the compressed preview image.

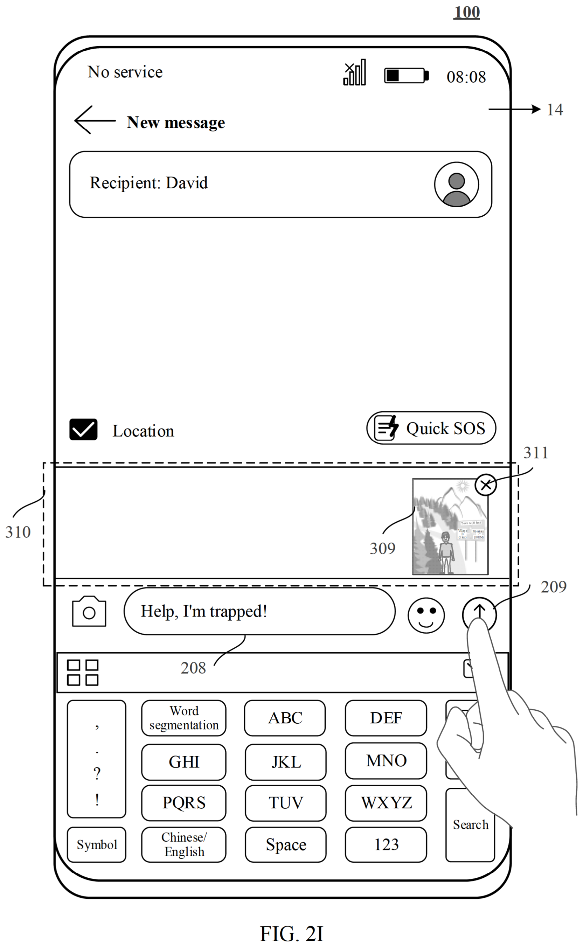

As shown in FIG. 2H and FIG. 2I, after performing compression preview, the terminal device 100 receives an operation of tapping the confirmation control 307 by the user; and in response to the operation, displays an icon 309 of the compressed preview image of the image 1/the image 1 and a deletion control 311 in a display area 310 of the information creation interface 14, and adds the compressed preview image of the image 1 to the message content 1 of the BeiDou satellite message 1. The deletion control 311 is used to: delete the icon 309 in the display area 310, and delete the compressed preview image of the image 1 that is added to the message content 1. The icon 309 may be an image obtained by scaling down the compressed preview image based on an original rate, or may be an image in a partial area of the compressed preview image. It may be understood that after the compressed preview image of the image 1 is added, the user may further continue to add rich media information such as an image, a video, a speech, or an animation to the message content 1. In a subsequent embodiment, an example in which the compressed preview image of the image 1 is added to the message content 1 is used for description.

As shown in FIG. 2I, before or after the compressed preview image of the image 1 is added, the user may enter text information 1 in the information editing bar 208, for example, "Help, I'm trapped!". The message content 1 of the currently edited BeiDou satellite message 1 includes the text information 1 and the compressed preview image of the image 1.

In some embodiments, the terminal device 100 does not need the user to trigger compression preview of the image 1. As shown in FIG. 2F and FIG. 2I, after detecting that the user taps the photographing control 304, the terminal device 100 shoots the image 1, and compression preview is automatically performed on the image 1 in the background, to obtain the compressed preview image of the image 1. The icon of the compressed preview image is displayed in the display area 310 of the information creation interface 14, that is, the compressed preview image of the image 1 is added to the currently edited message content 1.

FIG. 2I to FIG. 2M show related user interfaces for sending the edited message content 1 by the sender.

As shown in FIG. 2I, the terminal device 100 receives an operation of tapping the sending control 209 by the user, and in response to the operation, sends, through a satellite communication system 10, the edited message content 1 to a terminal device corresponding to the recipient, for example, the terminal device 200. First, the terminal device 100 sends a satellite request message 1 to the BeiDou satellite 300 in the satellite communication system 10, where the satellite request message 1 is used to transmit the message content 1. The satellite request message 1 includes the compressed data a of the image 1 and the text information 1, and the compressed data a of the image 1 is used to obtain the compressed preview image of the image 1.

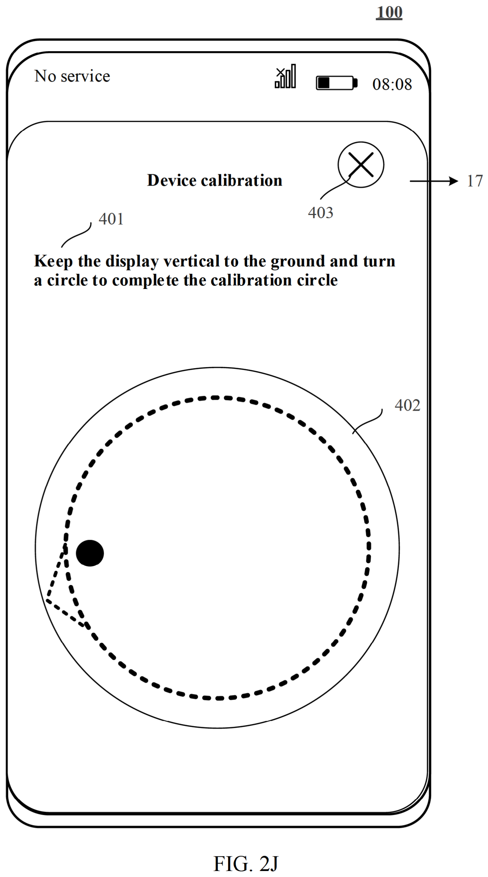

Before the satellite request message 1 is sent to the BeiDou satellite 300, the BeiDou satellite 300 needs to perform satellite searching and alignment. The BeiDou satellite 300 can receive the satellite request message 1 from the terminal device 100 only after the satellite searching and alignment are completed. As shown in FIG. 2I and FIG. 2J, the terminal device 100 receives the operation of tapping the sending control 209 by the user, and displays a calibration page 17 in response to the operation.

As shown in FIG. 2J, the calibration page 17 may include an operation prompt 401, a calibration auxiliary graph 402, and a close control 403. The operation prompt 401 may be used to prompt the user to perform compass calibration. For example, the operation prompt 401 includes "Keep the display vertical to the ground and turn a circle to complete the calibration circle". The calibration auxiliary graph 402 may be used to assist the user in completing calibration. For example, the calibration auxiliary graph 402 may include a ball and a circle shown in FIG. 2D. As the user rotates the terminal device 100, the ball may move around an inner side of the circle. After the ball moves around the inner side of the circle for one circle, the terminal device 100 completes compass calibration. The close control 403 may be used to trigger the terminal device 100 to close the calibration page 17. After the calibration page 17 is closed before the compass is calibrated, a message sending failure may be displayed.

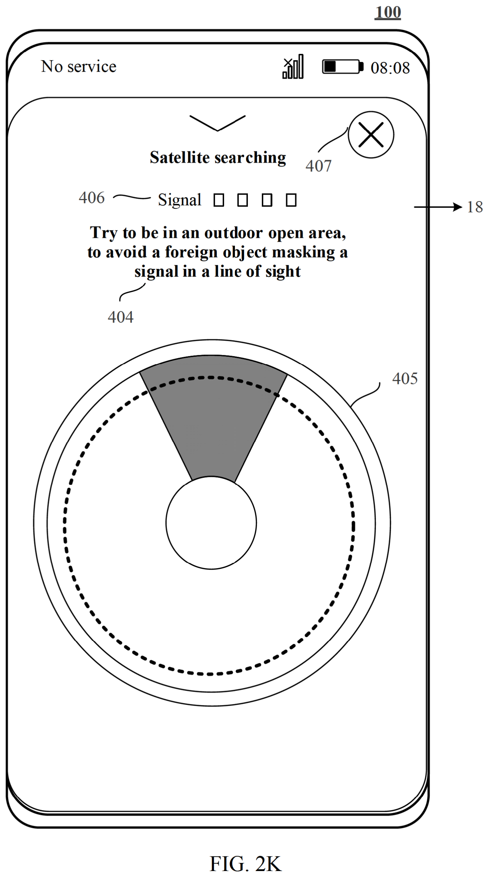

As shown in FIG. 2J and FIG. 2K, after the calibration is completed, the terminal device 100 may automatically stop displaying the calibration page 17, and display a satellite searching and alignment page 18. In some embodiments, the terminal device 100 may alternatively skip the calibration page 17, and directly display the satellite searching and alignment page 18. For example, after the user taps the sending control 209, if it is determined that the terminal device 100 does not need compass calibration, the terminal device 100 directly displays the satellite searching and alignment page 18.

As shown in FIG. 2K, the satellite searching and alignment page 18 may include a satellite searching operation prompt 404, a satellite searching auxiliary graph 405, a strength indicator 406, and a close control 407. The satellite searching operation prompt 404 indicates the user to perform a satellite searching operation. For example, the satellite searching operation prompt 404 includes "Try to be in an outdoor open area, to avoid a foreign object masking a signal in a line of sight". The satellite searching auxiliary graph 405 may be used to prompt the terminal device 100 whether a satellite is detected. The satellite searching auxiliary graph 405 may include a sector area, and the sector area may be used to prompt the user with a location relationship between a location of the satellite and an antenna pointing direction of the terminal device 100. In the accompanying drawing shown in FIG. 2K, no satellite icon appears in the satellite searching auxiliary graph 405, and this indicates that the terminal device 100 has not found a satellite currently. The strength indicator 406 indicates strength of a detected satellite signal. The close control 407 may be used to trigger the terminal device 100 to close the satellite searching and alignment page 18. After the satellite searching and alignment page 18 is closed before the satellite is aligned, a message sending failure may be displayed.

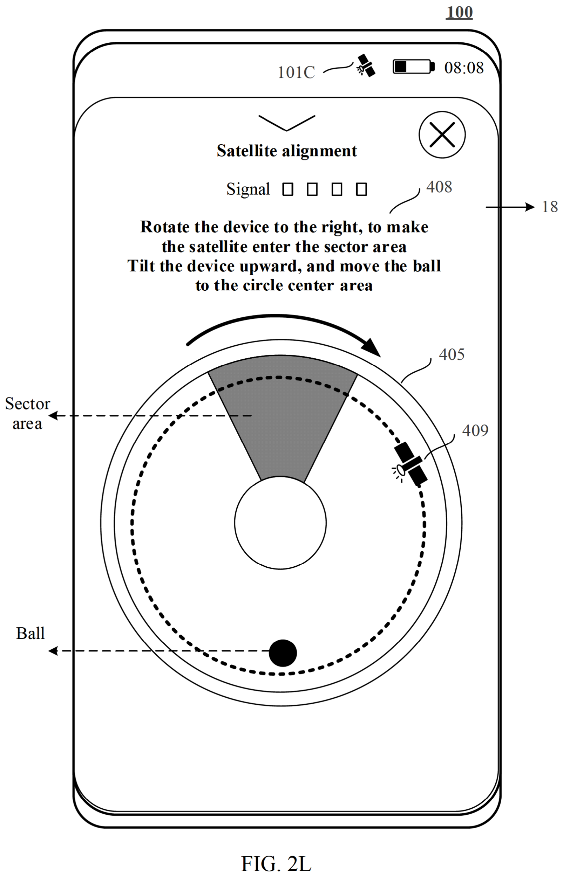

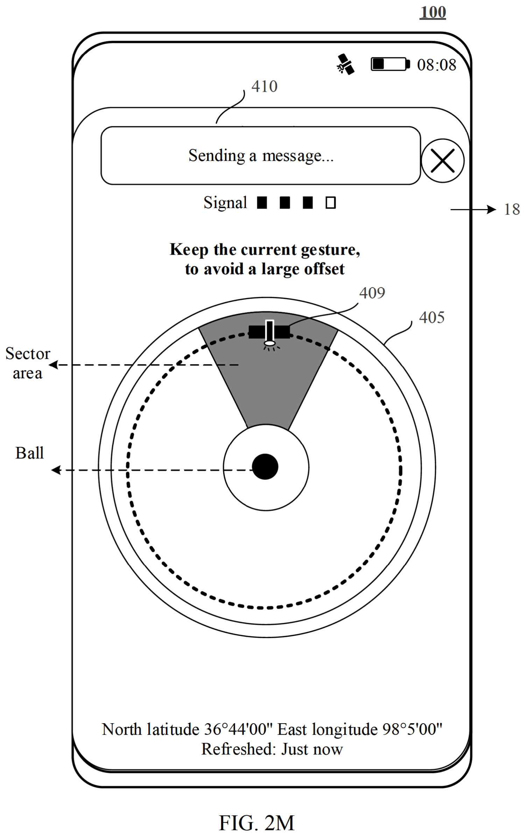

As shown in FIG. 2L, after the terminal device 100 finds the satellite, the terminal device 100 may display a satellite icon 409 and an alignment operation prompt 408 in the satellite searching auxiliary graph 405 based on a relative location of the found satellite. The alignment operation prompt 408 indicates the user to perform an alignment operation. The relative location between the satellite and the terminal device 100 may be indicated by a pitch angle and an azimuth. A relative location between the sector area of the satellite searching auxiliary graph 405 and the satellite icon 409 may indicate an azimuth between the location of the satellite and the antenna pointing direction of the terminal device 100. For example, the satellite icon 409 is located on a right side of the sector area, the alignment operation prompt 408 may include texts "Rotate the device to the right, to make the satellite enter the sector area". As shown in FIG. 2M, when the user rotates the terminal device 100 to the right, to make the satellite icon 409 be located in the sector area, adjustment of an azimuth of the terminal device 100 relative to the satellite is completed.

In addition, the satellite searching auxiliary graph 405 may further include a pitch angle identifier. For example, the pitch angle identifier is a ball shown in FIG. 2L. A relative location between a ball and a circle center area of the satellite searching auxiliary graph 405 may indicate a pitch angle of the terminal device 100 relative to the satellite. As shown in FIG. 2L, the alignment operation prompt 408 may further include "Tilt the device upward, and move the ball to the circle center area". As shown in FIG. 2M, when the ball is moved to the circle center area, adjustment of the pitch angle of the terminal device 100 relative to the satellite is completed.

It may be understood that the satellite searching and alignment page 18 shown in FIG. 2K and FIG. 2L is merely an example. In some embodiments, the satellite searching auxiliary graph 405 and the alignment operation prompt 408 are determined based on the azimuth and the pitch angle of the terminal device 100 relative to the satellite in an actual case, that is, when the azimuth and the pitch angle change, the satellite searching auxiliary graph 405 and the alignment operation prompt 408 also adaptively change accordingly. This is not limited herein in this application.

In some embodiments, as shown in FIG. 2L, when the satellite is found or the satellite is aligned, a satellite icon 101C is displayed in the status bar, to prompt the user that the terminal device 100 has currently found the satellite.

As shown in FIG. 2M, when the satellite icon 409 is moved in the sector area, and the ball is moved to the circle center area, the terminal device 100 is aligned with the satellite, strength of a satellite signal that can be received by the terminal device 100 is the largest, and signal receiving and sending may be performed between the terminal device 100 and the satellite. The terminal device 100 sends the satellite request message 1 to the BeiDou satellite 300, where the satellite request message 1 is used to transmit the message content 1 of the BeiDou satellite message 1 edited by the user, and display prompt information 410, to prompt the user that a message is being sent or a message is sent.

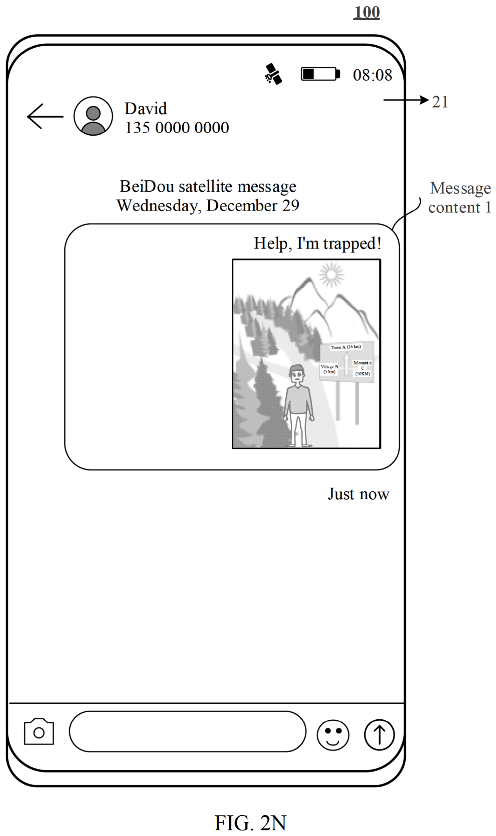

As shown in FIG. 2N, after the BeiDou satellite message 1 is sent, that is, after the satellite request message 1 is successfully sent, the terminal device 100 may display an information interface 21 of the recipient. The information interface 21 may display a user name and an account (for example, a mobile phone number) of the recipient, and the sent message content 1 of the BeiDou satellite message 1. The message content 1 displayed by the terminal device 100 includes the compressed preview image of the image 1 and the text information 1. In another implementation, the terminal device 100 may display the original image of the image 1 instead of the compressed preview image of the image 1 in the sent message content 1, and the recipient actually receives the compressed preview image of the image 1.

In some embodiments, before the user taps the sending control 209, satellite searching and alignment are completed. After detecting that the user taps the sending control 209, the terminal device 100 does not need to perform satellite searching and alignment, directly sends, to the BeiDou satellite 300, the message content 1 of the BeiDou satellite message 1 transmitted via the satellite request message 1, and displays the information interface 21 of the recipient shown in FIG. 2N. In this embodiment of this application, the terminal device 100 may alternatively trigger satellite searching and alignment through another entry. This is not specifically limited herein.

It may be understood that the message content 1 edited and successfully sent by the sender shown in FIG. 2N is merely an example, and should not constitute a limitation on embodiments of this application. For example, the message content 1 may not include the text information 1.

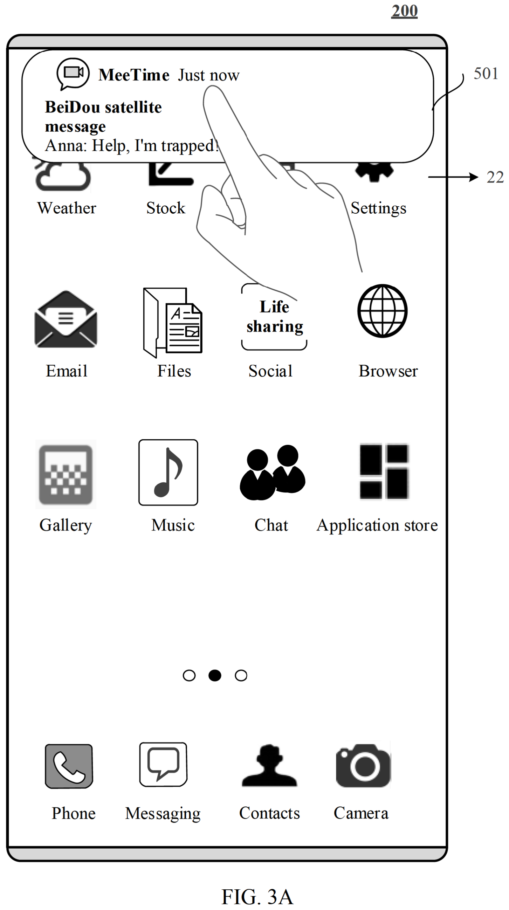

For example, FIG. 3A to FIG. 3G show user interfaces on which the recipient receives, through the terminal device 200, the message content 1 sent by the sender.

In some embodiments, the terminal device 200 receives the BeiDou satellite message 1 from the sender by using the MeeTime APP, where the message content 2 of the BeiDou satellite message 1 indicates the message content 1 sent by the sender. As shown in FIG. 3A, after receiving the BeiDou satellite message 1 from the sender, the MeeTime APP on the terminal device 200 displays a message prompt box 501 above the status bar of the current user interface 22. The message prompt box 501 includes an application identifier of the MeeTime APP and a part or all of the message content of the BeiDou satellite message 1.

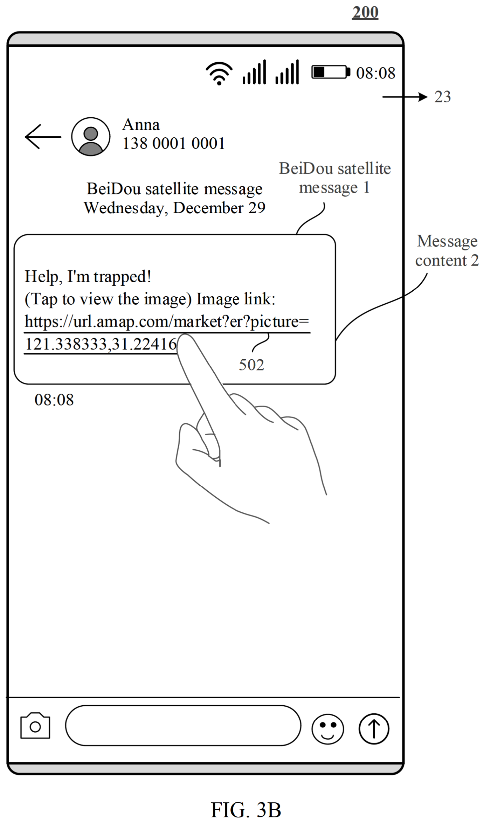

As shown in FIG. 3A and FIG. 3B, the MeeTime APP on the terminal device 200 of the recipient receives an operation of tapping the message prompt box 501 by the user, and displays the information interface 23 of the sender of the BeiDou satellite message 1 in response to the operation. The information interface 23 is used to display a BeiDou satellite message between the recipient and the sender on the MeeTime APP, for example, the BeiDou satellite message 1.

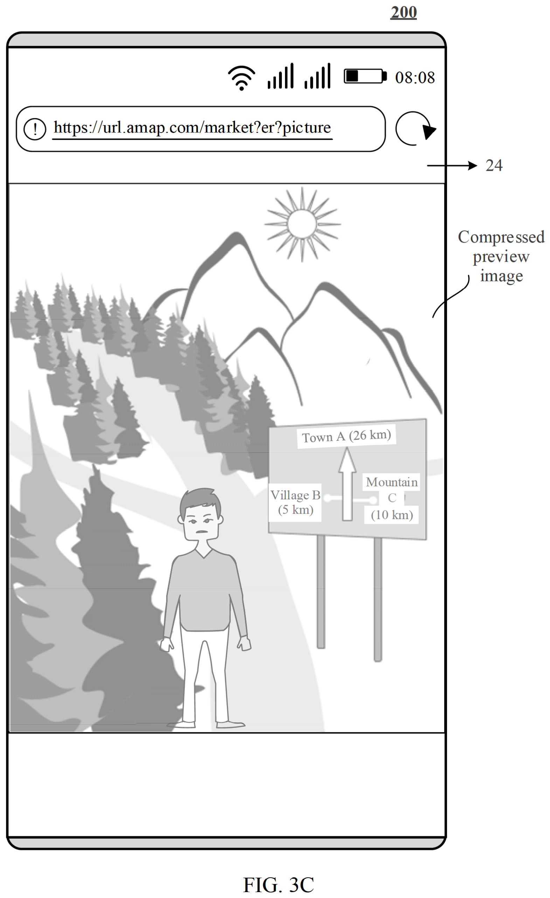

In an implementation, as shown in FIG. 3B, the message content 2 of the BeiDou satellite message 1 displayed by the terminal device 200 includes the text information 1 and a web address link 502 of the compressed preview image of the image 1. As shown in FIG. 3B and FIG. 3C, the terminal device 100 receives an operation of tapping the web address link 502 by the user, and obtains and displays a web page 24 corresponding to the web address link 502 in response to the operation. The web page 24 displays the compressed preview image of the image 1, namely, the image 2 or the image 3. It may be understood that the message content 2 received and displayed by the terminal device 200 may be different from the sent message content 1 displayed by the terminal device 100, and the message content 2 indicates the message content 1.

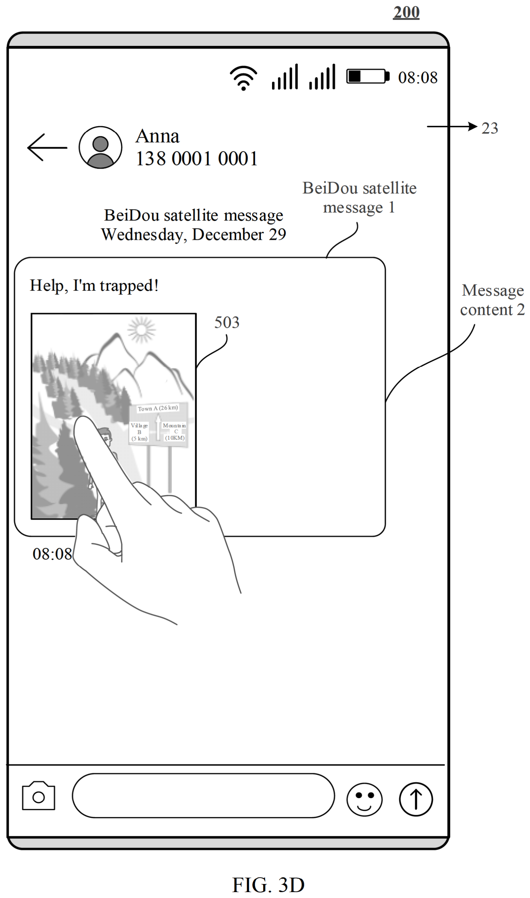

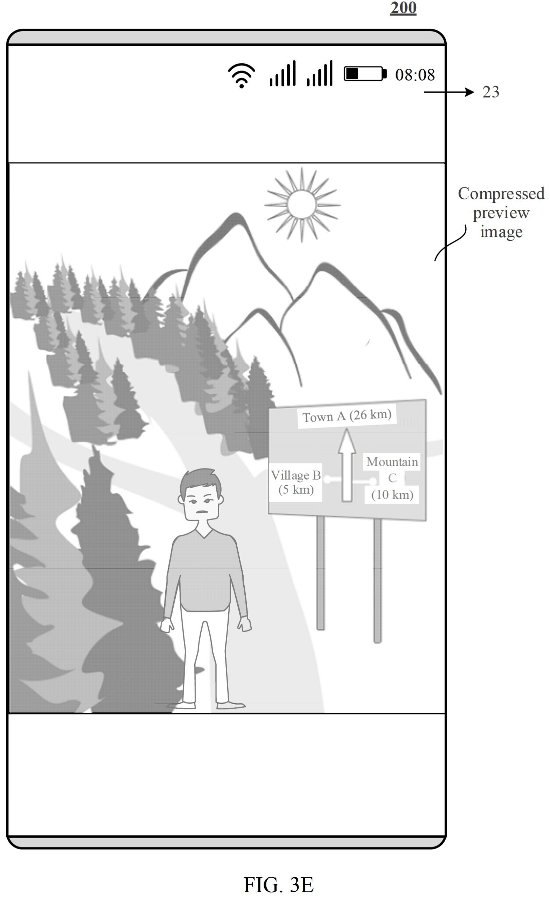

In an implementation, as shown in FIG. 3D, the message content 2 of the BeiDou satellite message 1 includes the text information 1 and a sketch 503 of the compressed preview image of the image 1. As shown in FIG. 3D and FIG. 3E, the terminal device 100 receives an operation of tapping the sketch 503 of the compressed preview image by the user, and displays, in response to the operation, the compressed preview image of the image 1 in full screen, namely, the image 2 or the image 3. In an implementation, the image 2 is used as an example. Displaying the image 2 in full screen means that the image 2 is maximized within a preset range based on an original rate of the image 2. It may be understood that, in this example, the message content 2 received and displayed by the terminal device 200 may be the same as the sent message content 1 displayed by the terminal device 100.

In this embodiment of this application, the sketch 503 may be an image obtained by scaling down the compressed preview image based on an original rate; or the sketch 503 is an image obtained by reducing a resolution of the compressed preview image and then scaling down the image based on an original rate; or the sketch 503 is an image obtained by scaling down the compressed preview image based on an original rate and then reducing the resolution. In an implementation, the sketch 503 is a thumbnail of the compressed preview image, a resolution of the sketch 503 is less than the resolution of the compressed preview image, and an image data amount of the sketch 503 is less than an image data amount of the compressed preview image. Only when the user taps to view the sketch 503 of the compressed preview image, the terminal device 200 requests to obtain the original image of the compressed preview image from an application server 500, and displays the original image of the compressed preview image.

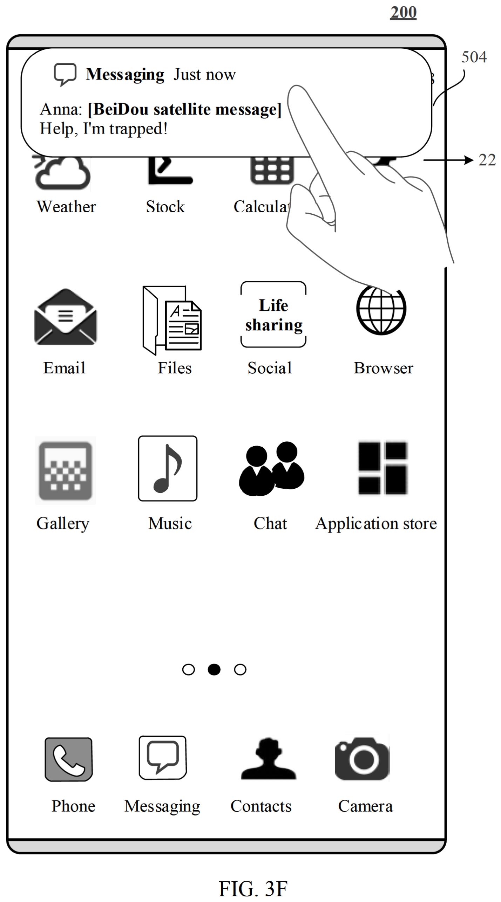

In some embodiments, the terminal device 200 receives the BeiDou satellite message 1 from the sender by using the Messaging APP, where message content 3 of the BeiDou satellite message 1 indicates the message content 1 sent by the sender. As shown in FIG. 3F, after receiving the BeiDou satellite message 1 from the sender, the Messaging APP on the terminal device 200 displays a message prompt box 504. The message prompt box 504 includes an application identifier of the Messaging APP and a part or all of the message content of the BeiDou satellite message 1.

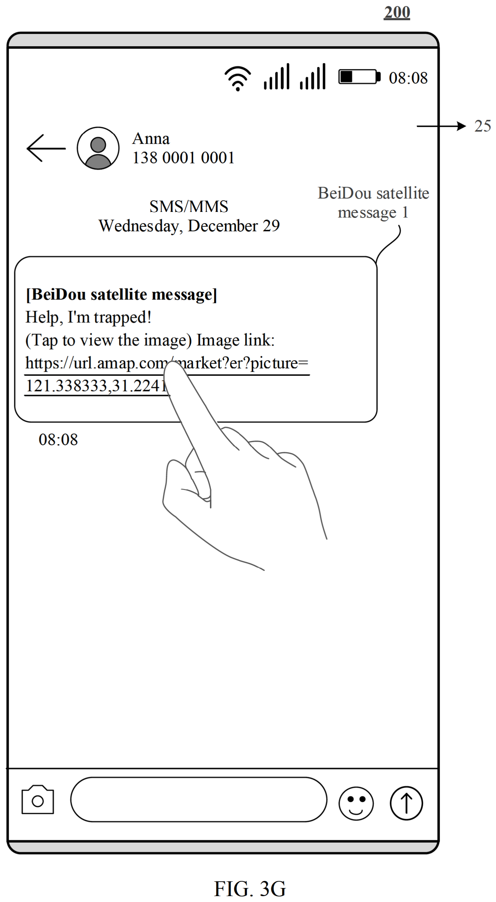

As shown in FIG. 3F and FIG. 3G, the Messaging APP on the terminal device 200 of the recipient receives an operation of tapping the message prompt box 504 by the user, and displays the information interface 25 of the sender of the BeiDou satellite message 1 in response to the operation. The information interface 25 may be used to display an SMS message, a multimedia message, and a BeiDou satellite message between the recipient and the sender on the Messaging APP, for example, the BeiDou satellite message 1.

For the message content 3 of the BeiDou satellite message 1, refer to related descriptions of the message content 2 of the BeiDou satellite message 1 of the MeeTime APP. Details are not described herein again. When both the MeeTime APP and the Messaging APP receive the BeiDou satellite message 1 sent by the sender, the message content 3 displayed on the Messaging APP may be the same as or different from the message content 2 displayed on the MeeTime APP. This is not specifically limited herein. For example, as shown in FIG. 3G, the Messaging APP displays the web address link of the compressed preview image of the image 1, and the MeeTime APP directly displays the compressed preview image of the image 1.

A message prompt of the BeiDou satellite message 1 is not limited to being displayed in the status bar, and the message prompt may alternatively be displayed at another location like a notification center or a lock screen. This is not specifically limited herein.

It may be understood that, in embodiments described in FIG. 2A to FIG. 3G, the message content 1 of the BeiDou satellite message that is edited, sent, and displayed by the sender by using the MeeTime APP on the terminal device 100 includes the compressed preview image of the image 1. Based on the message content 1, the terminal device 100 sends the compressed data a of the image 1 to the satellite device, where the compressed data a is used to obtain the compressed preview image of the image 1. The BeiDou satellite message 1 sent by the satellite device to the terminal device 200 through the application server 500 of the MeeTime APP includes the compressed preview image of the image 1 or the web address link of the compressed preview image.

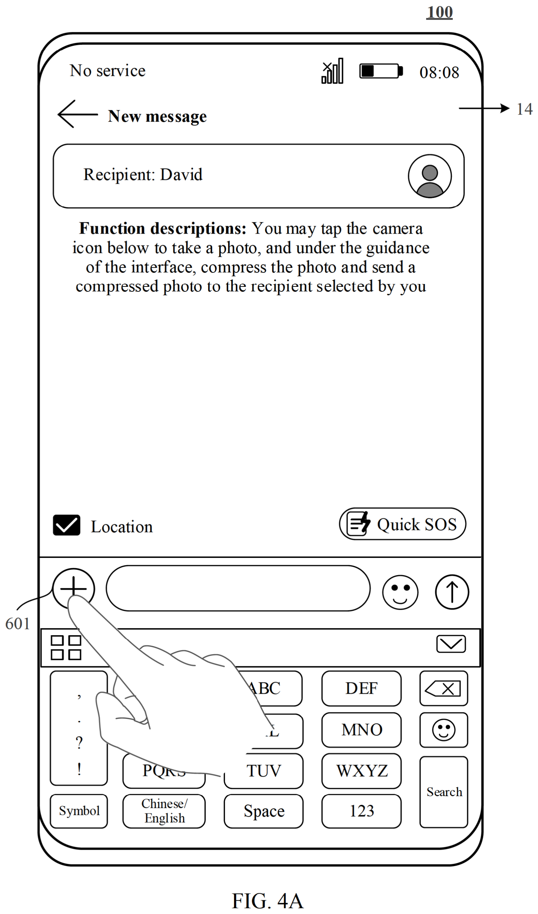

For example, FIG. 4A to FIG. 5D show another user interface for adding rich media information.

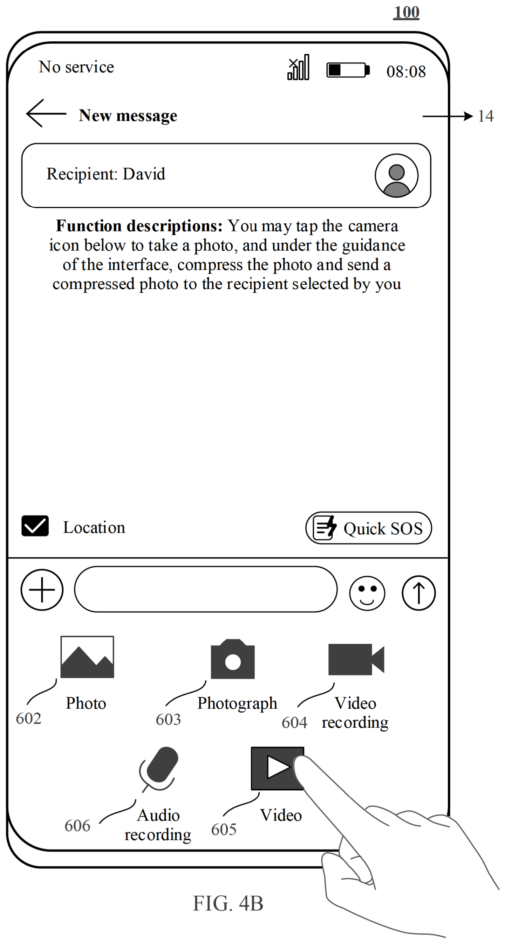

In some embodiments, as shown in FIG. 4A and FIG. 4B, the information creation interface 14 further includes an add control 601. The terminal device 100 receives an operation of tapping the add control 601 by the user, and displays, in response to the operation, one or more rich media information add controls, for example, a photo control 602, a photographing control 603, a video recording control 604, a video control 605, and an audio recording control 606. The photo control 602 is used to trigger the terminal device 100 to display an image in a local gallery. The user may select one or more images from the local gallery for compression preview, and add one or more compressed preview images to the message content 1 that is being edited. The photographing control 603 is used to trigger the terminal device 100 to display the photographing preview interface 15. The user may perform compression preview on one or more images, and add one or more compressed preview images to the message content 1 that is being edited. The video recording control 604 is used to trigger the terminal device 100 to display a video recording preview interface. The terminal device 100 may record a video on the interface, perform compression preview on the recorded video, and add a compressed preview video to the message content 1 that is being edited.

FIG. 4B to FIG. 4N show related user interfaces for adding a video by using the video control 605.

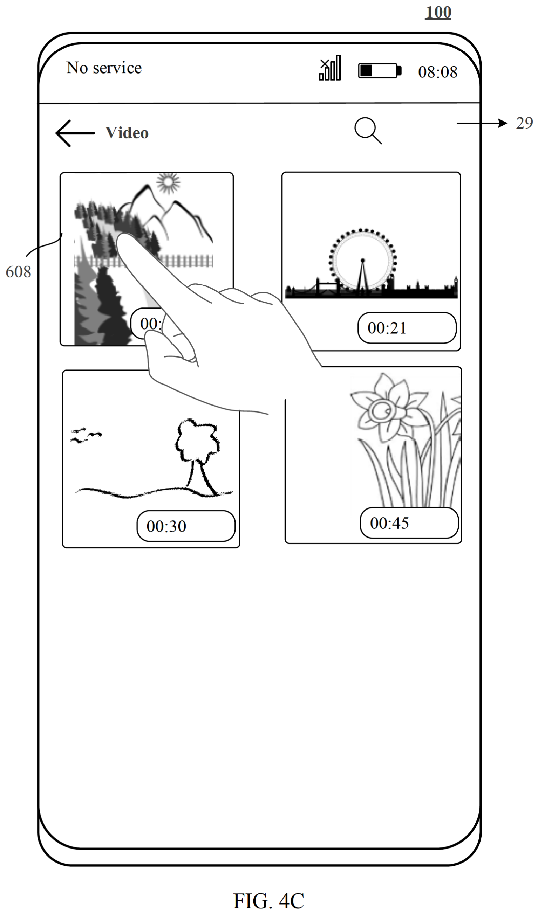

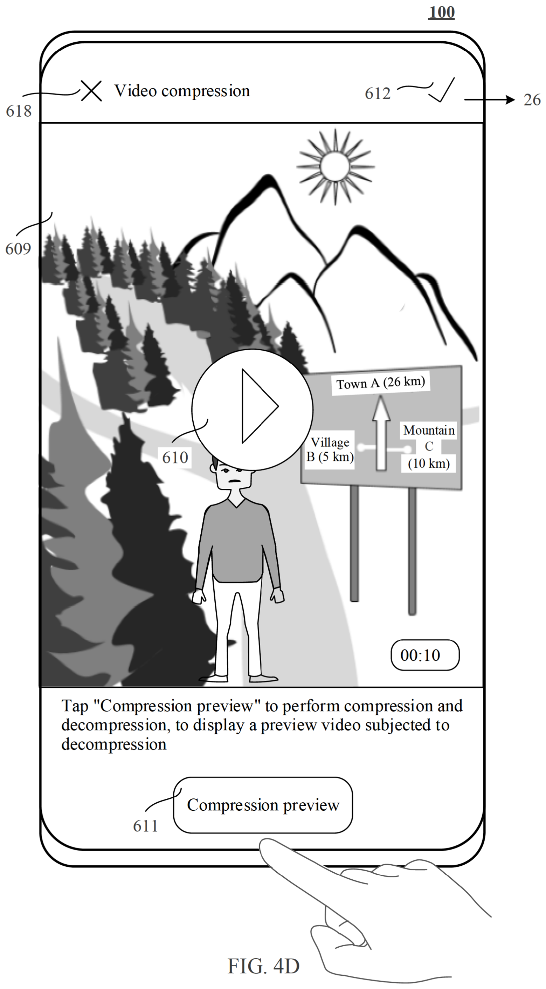

As shown in FIG. 4B and FIG. 4C, the terminal device 100 receives an operation of tapping the video control 605 by the user, and may display, in response to the operation, covers of videos in the local gallery on a user interface 29, for example, a cover 608 of a video 1. As shown in FIG. 4C and FIG. 4D, the terminal device 100 receives an operation of tapping the cover 608 by the user, and may display a compression preview interface 26 of the video 1 in response to the operation. The compression preview interface 26 includes a cover 609 of the video 1, a playing control 610, a compression preview control 611, a confirmation control 612, and a cancellation control 618. The playing control 610 is used to play the video 1, and the cancellation control 618 is used to return to the compression preview interface 26.

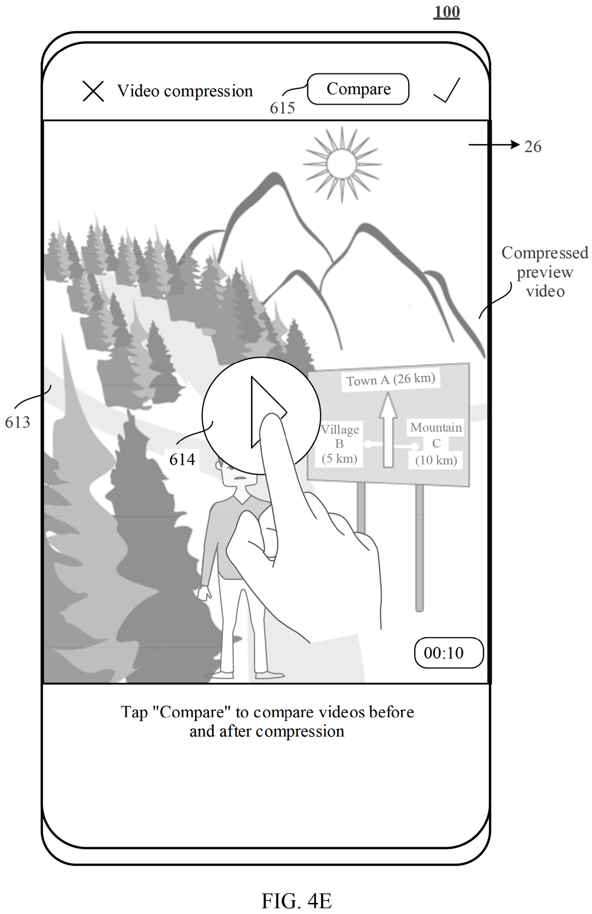

As shown in FIG. 4D and FIG. 4E, the MeeTime APP on the terminal device 100 receives an operation of tapping the compression preview control 611 by the user; and in response to the operation, may compress the video 1 by using a preset compression algorithm, to obtain compressed data b obtained through compression, and then, may decompress the compressed data b by using a decompression algorithm corresponding to the preset compression algorithm, to obtain and display a playing control 614 and a cover 613 of a video 2 obtained through decompression (namely, a compressed preview video). The playing control 614 is used to trigger the terminal device 100 to play the compressed preview video. The user may preview, in advance in the compressed preview video, an actual video corresponding to the video 1 that can be received by the recipient. In an implementation, the compressed data b is lossy compressed data, and the video 2 is a lossy video 1. Compared with the video 1, the video 2 lacks details and is visually more blurred. However, the video 2 and the video 1 may include same valid information, for example, include a same shot object.

In some embodiments, the terminal device 100 decompresses the compressed data b by using the preset compression algorithm, and after obtaining the video 2 obtained through decompression, performs enhancement processing on the video 2 by using a preset video enhancement algorithm, to enrich details of the video 2, improve a definition of the video 2, and improve video picture quality of the video 2, so as to obtain an enhanced video 3, namely, a compressed preview video. In response to an operation of tapping the compression preview control 611 by the user, the terminal device 100 displays the playing control 614 and the cover 613 of the video 3 obtained through decompression and video enhancement. The video enhancement algorithm is not specifically limited in embodiments of this application.

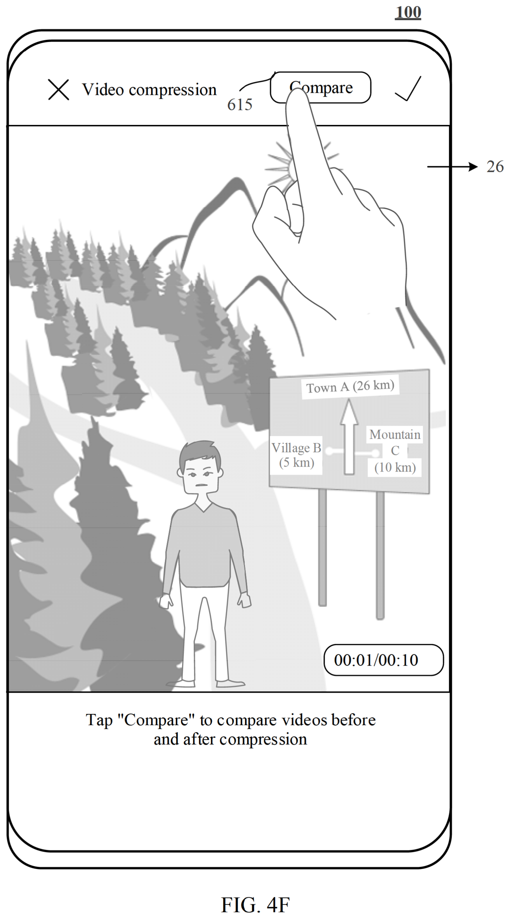

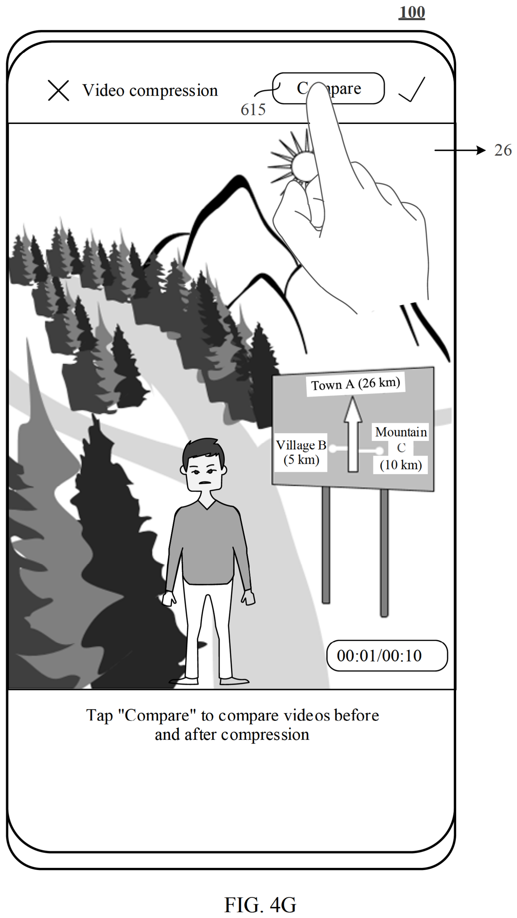

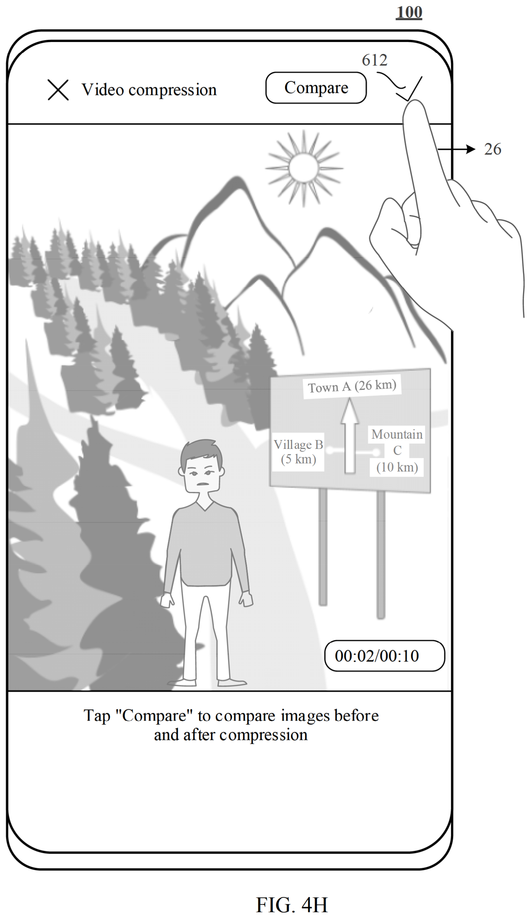

In some embodiments, as shown in FIG. 4E, in response to the operation of tapping the compression preview control 611 by the user, the terminal device 100 further displays a comparison control 615. The comparison control 615 is used to compare the video 1 with the compressed preview video corresponding to the video 1. This helps the user observe and compare a difference between the original video and the video received by the recipient. As shown in FIG. 4E and FIG. 4F, the terminal device 100 may be triggered to play the compressed preview video by tapping the playing control 614. As shown in FIG. 4F and FIG. 4G, when a first moment of the compressed preview video is played, the terminal device 100 receives a touch operation performed by the user on the comparison control 615, and starts to play the video 1 from a first moment of the video 1 in response to the operation. As shown in FIG. 4G and FIG. 4H, when a second moment of the video 1 is played, the terminal device 100 receives that the user stops performing the touch operation on the comparison control 615, and continues to play the compressed preview video from a second moment of the compressed preview video in response to that.

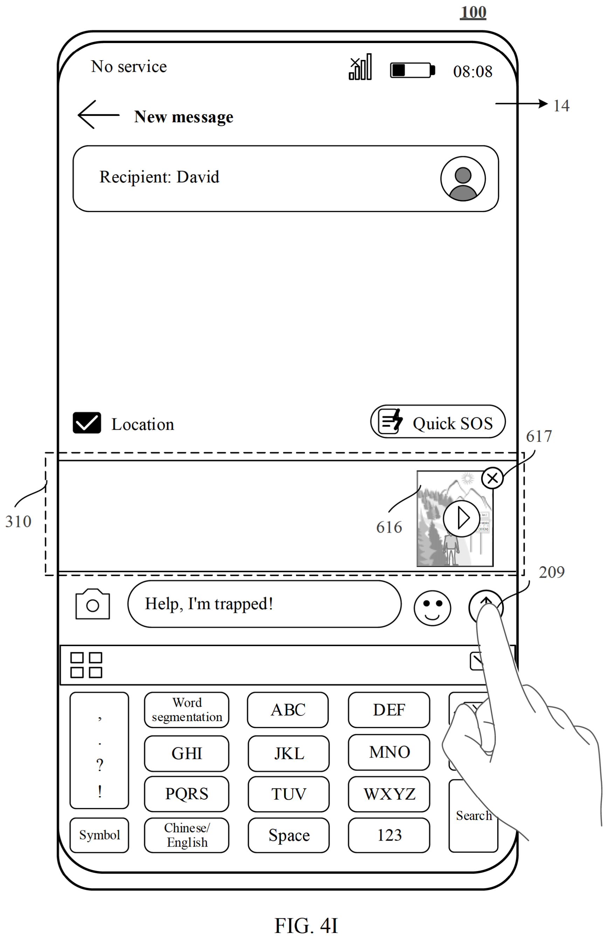

As shown in FIG. 4H and FIG. 4I, after performing compression preview, the terminal device 100 receives an operation of tapping the confirmation control 612 by the user; and in response to the operation, displays an icon 616 of the compressed preview video/video 1 and a deletion control 617 in the display area 310 of the information creation interface 14, and adds the compressed preview video of the video 1 to the message content 1 of the BeiDou satellite message. The deletion control 617 is used to: delete the icon 616 in the display area 310, and delete the compressed preview video of the video 1 that is added to the message content 1.

In some embodiments, the terminal device 100 does not need the user to trigger compression preview on the video 1. As shown in FIG. 4C and FIG. 4I, after an operation of selecting the video 1 by the user (for example, tapping the cover 608 of the video 1) is detected, compression preview is automatically performed on the video 1 in the background, and the icon 616 of the compressed preview video of the shot video 1 is directly displayed in the display area 310, that is, the compressed preview video of the video 1 is added to the currently edited message content 1.

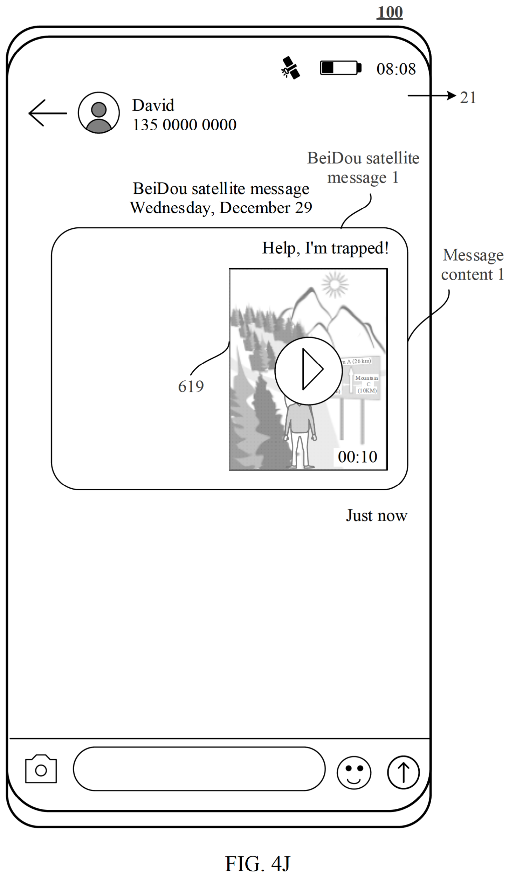

As shown in FIG. 4I and FIG. 4J, after receiving tapping the sending control 209 by the user, in response to this operation, the terminal device 100 sends the BeiDou satellite message 1 to the terminal device 200 of the recipient through the satellite device, and displays the sent message content 1 of the BeiDou satellite message 1 on the information interface 21 of the recipient. The message content 1 includes a compressed preview video, and the terminal device 100 displays a cover 619 of the compressed preview video.

In this embodiment of this application, the terminal device 100 may receive the BeiDou satellite message 1 by using the MeeTime APP/Messaging APP. For details, refer to related descriptions in FIG. 3A to FIG. 3G.

The MeeTime APP is used as an example. After obtaining the BeiDou satellite message 1, the MeeTime APP on the terminal device 200 of the recipient displays the message content 2 of the BeiDou satellite message 1 on the information interface 23 of the sender of the BeiDou satellite message 1.

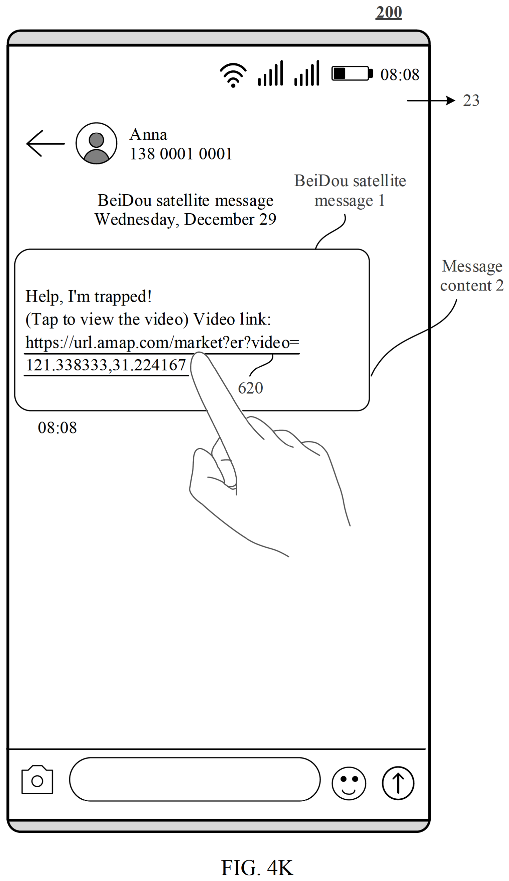

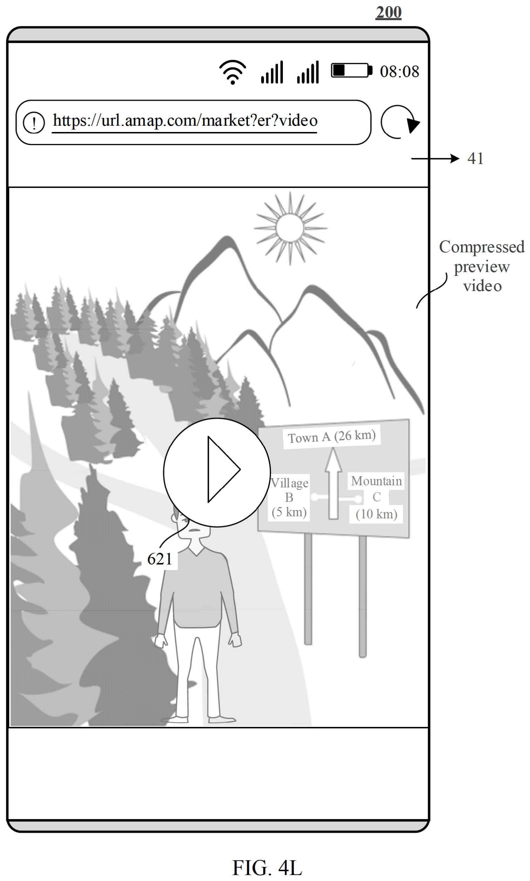

For example, as shown in FIG. 4K and FIG. 4L, the message content 2 includes a web address link 620 of the compressed preview video of the video 1. The terminal device 100 receives an operation of tapping the web address link 620 by the user, and obtains and displays a web page 41 corresponding to the web address link 620 in response to the operation. The web page 41 displays a cover of the compressed preview video of the video 1 and a playing control 621. The user may tap the playing control 621 to trigger the terminal device 200 to play the compressed preview video on the web page 41.

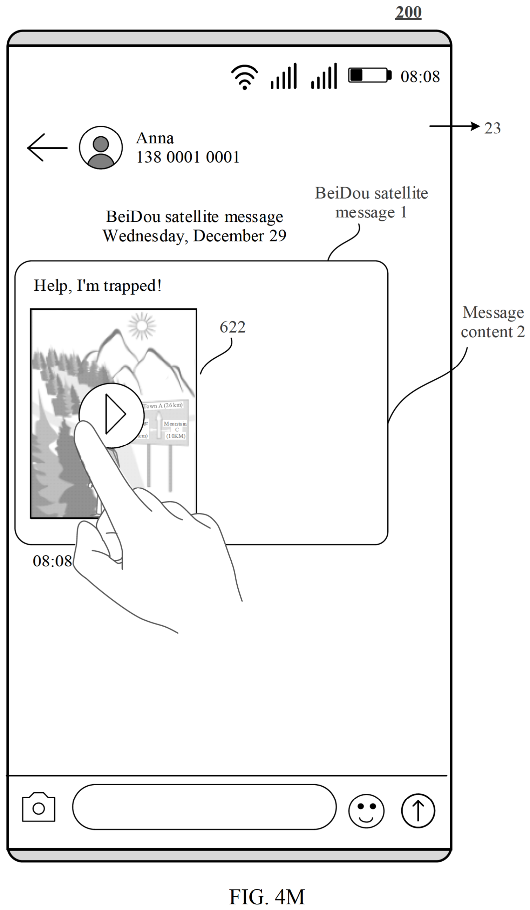

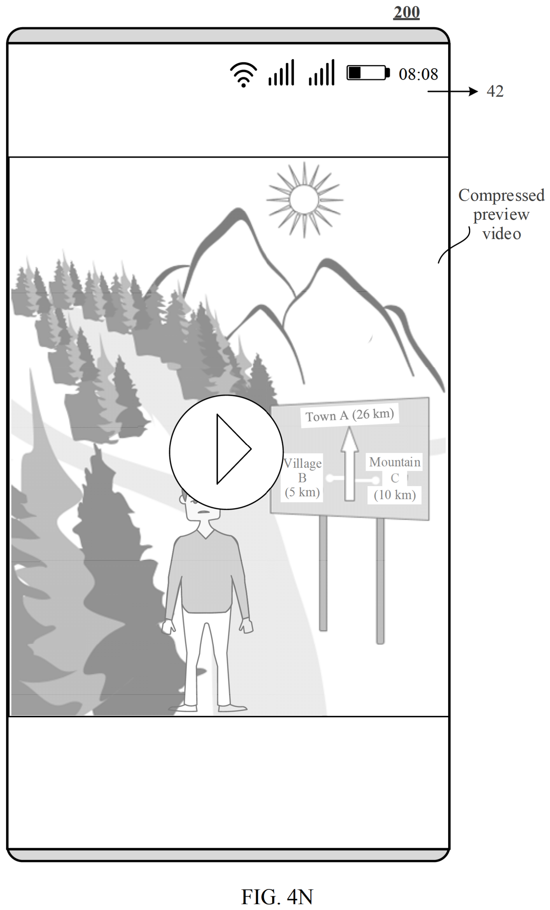

For example, as shown in FIG. 4M and FIG. 4N, the message content 2 includes a cover 622 of the compressed preview video corresponding to the image 1. The terminal device 100 receives an operation of tapping the cover 622 by the user, and plays the compressed preview video of the video 1 on a user interface 42 in response to the operation.

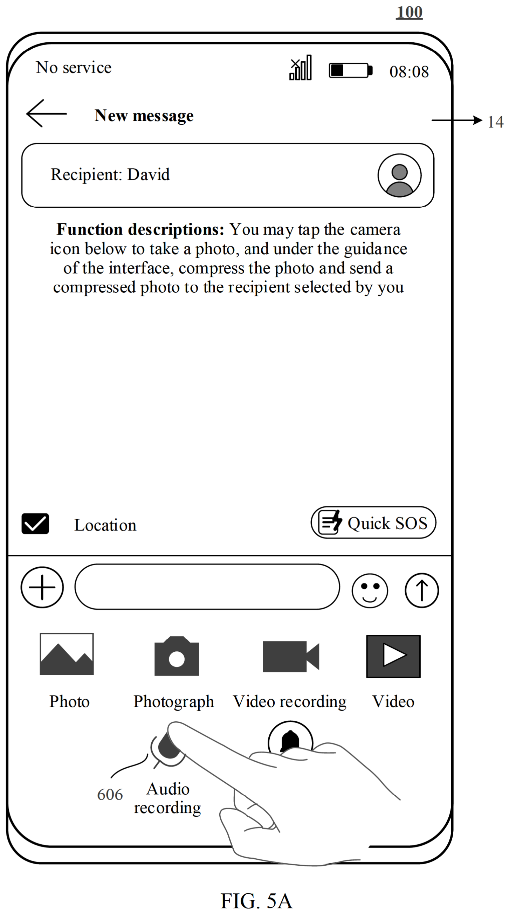

FIG. 5A to FIG. 5L show related user interfaces for adding an audio by using the audio recording control 606.

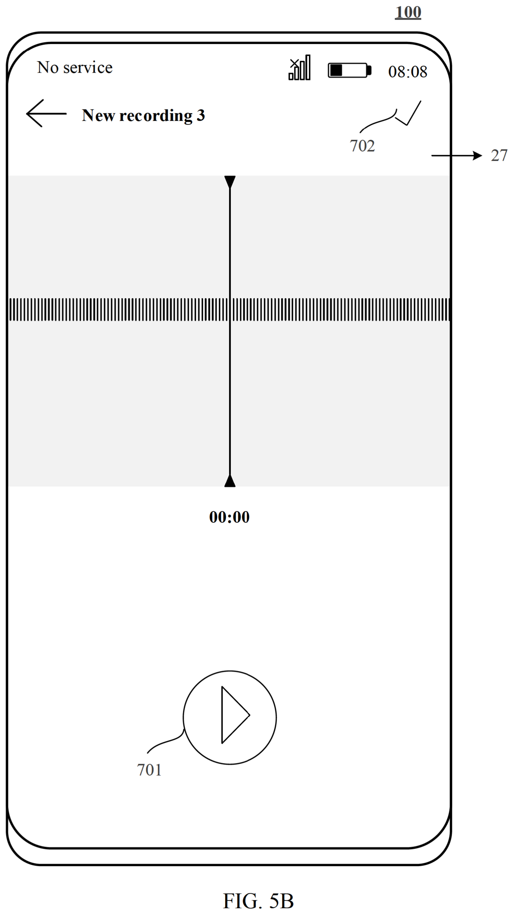

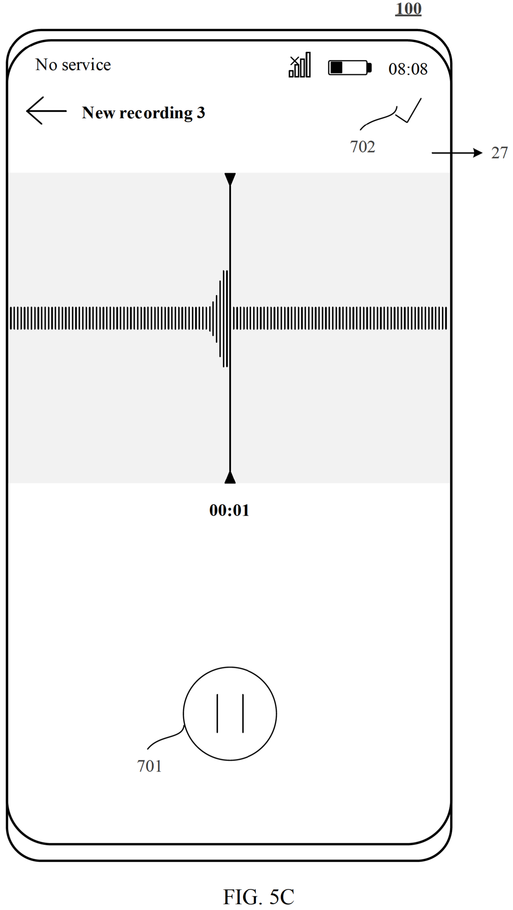

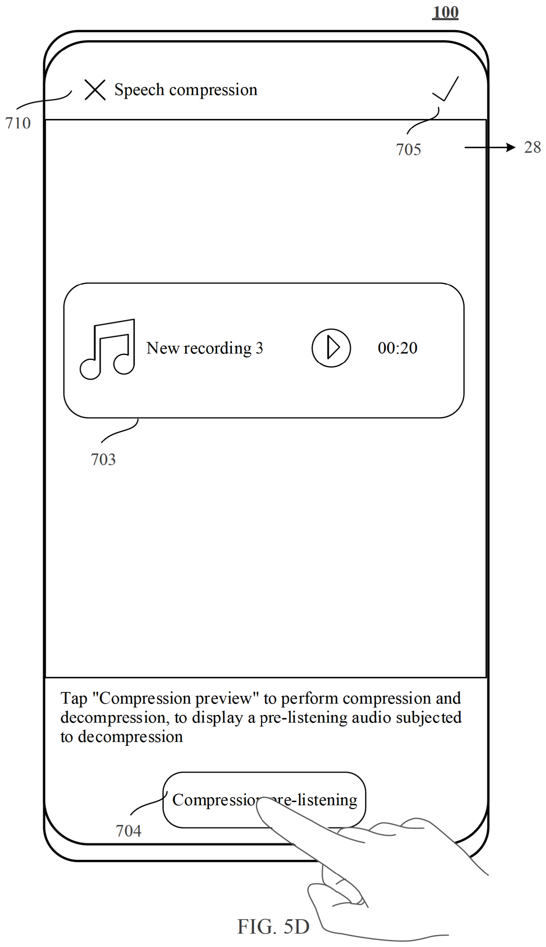

As shown in FIG. 5A and FIG. 5B, the terminal device 100 may receive an operation of tapping the audio recording control 606 by the user, and display an audio recording interface 27 in response to the operation, where the audio recording interface 27 is configured to record an audio. For example, the audio recording interface 27 includes an audio recording control 701 and a confirmation control 702. As shown in FIG. 5B and FIG. 5C, after detecting that the user taps the audio recording control 701, the terminal device 100 starts to record an audio 1. After detecting that the user taps the audio recording control 701 again, the terminal device 100 stops recording the audio 1. As shown in FIG. 5C and FIG. 5D, the terminal device 100 receives an operation of tapping the confirmation control 702 by the user, and may display a compression pre-listening interface 28 of the audio 1 in response to the operation. The compression pre-listening interface 28 includes a playing control component 703 of the audio 1, a compression pre-listening control 704, a confirmation control 705, and a cancellation control 710. The playing control component 703 may be configured to play the audio 1. The cancellation control 710 is used to return to the audio recording interface 27 or the information creation interface 14.

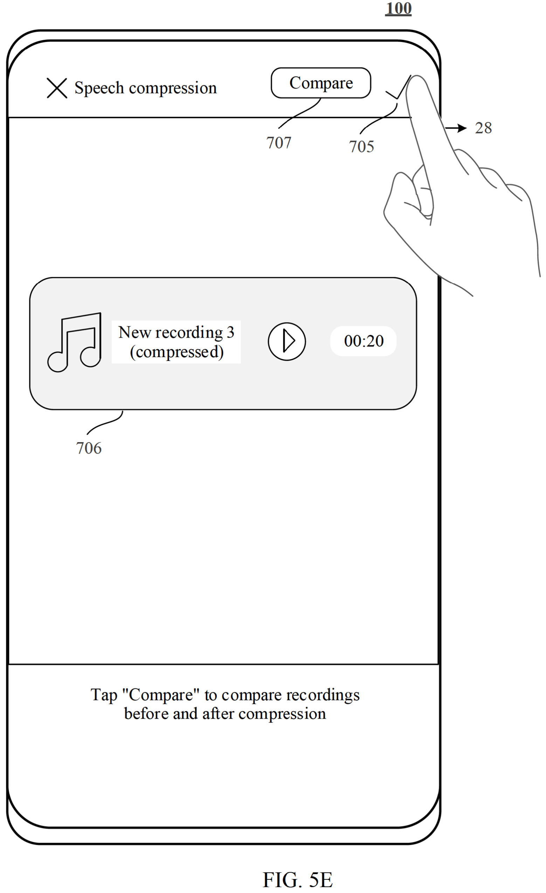

As shown in FIG. 5D and FIG. 5E, the MeeTime APP on the terminal device 100 receives an operation of tapping the compression pre-listening control 704 by the user; and in response to the operation, may compress the audio 1 by using a preset compression algorithm, to obtain compressed data c obtained through compression, and then may decompress the compressed data c by using a decompression algorithm corresponding to the preset compression algorithm, to obtain an audio 2 obtained through decompression (namely, a compressed pre-listening audio), and display a playing component 706 and a comparison control 707 of the audio 2. The playing component 706 is configured to trigger the terminal device 100 to play the compressed pre-listening audio, and the sender may hear, in advance in the compressed pre-listening audio, an actual audio corresponding to the audio 1 that can be received by the recipient. In an implementation, the compressed data c is lossy compressed data, and the audio 2 is a lossy audio 1. Compared with the audio 1, the audio 2 lacks details and is acoustically vague. However, the audio 2 and the audio 1 include same valid information, for example, a same character language expression may be heard in the audio 2 and the audio 1.

In some embodiments, the terminal device 100 decompresses the compressed data c by using the preset compression algorithm, and after obtaining the audio 2 obtained through decompression, performs enhancement on the audio 2 by using a preset audio enhancement algorithm, to enrich details of the audio 2, improve a definition of the audio 2, and improve audio quality of the audio 2, so as to obtain an audio 3 obtained through audio enhancement, namely, a compressed pre-listening audio. In response to an operation of tapping the compression pre-listening control 704 by the user, the terminal device 100 displays a playing component of the audio 3 obtained through decompression and audio enhancement. The audio enhancement algorithm is not specifically limited in embodiments of this application.

In some embodiments, as shown in FIG. 5E, in response to the operation of tapping the compression pre-listening control 704 by the user, the terminal device 100 further displays the comparison control 707. The comparison control 707 is used to compare the audio 1 with the compressed pre-listening audio corresponding to the audio 1. This helps the user distinguish a difference between the original audio and the audio received by the recipient. In an implementation, the terminal device 100 is triggered to play the compressed pre-listening audio by using the playing component 706, when a first moment of the compressed pre-listening audio is played, the terminal device 100 receives an operation 1 (for example, a touch operation) performed by the user on the comparison control 707, and starts to play the audio 1 from a first moment of the audio 1 in response to the operation; and when a second moment of the audio 1 is played, the terminal device 100 receives an operation 2 (for example, an operation of stopping a touch) performed by the user on the comparison control 707, and continues to play the compressed pre-listening audio from a second moment of the compressed pre-listening audio in response to the operation.

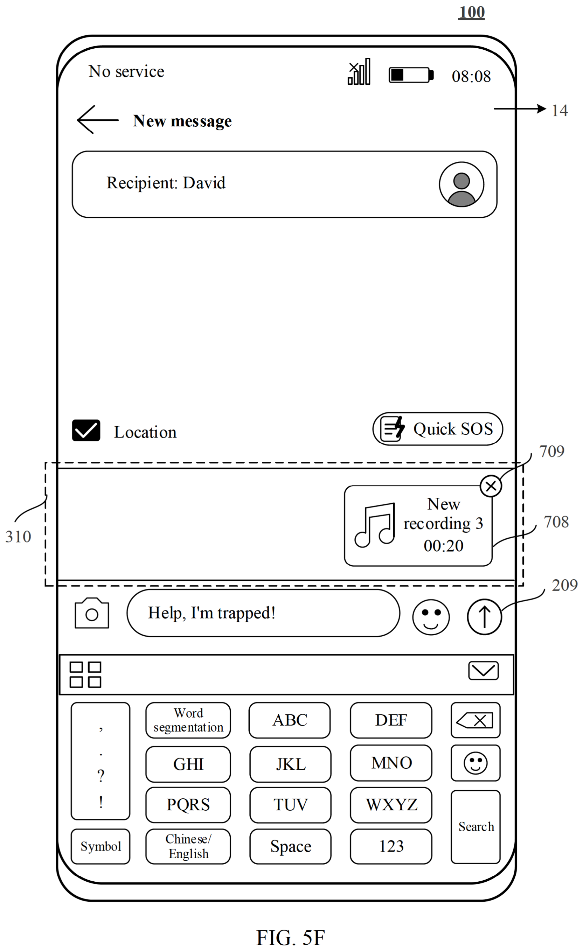

As shown in FIG. 5E and FIG. 5F, after performing compression pre-listening, the terminal device 100 receives an operation of tapping the confirmation control 705 by the user; and in response to the operation, displays an icon 708 of the audio 1 and a deletion control 709 in the display area 310 of the information creation interface 14, and adds a compressed pre-listening audio of the audio 1 to the message content 1 of the BeiDou satellite message. The deletion control 709 is used to: delete the icon 708 of the audio 1 in the display area 310, and delete the compressed pre-listening audio of the audio 1 that is added to the message content 1.

In some embodiments, the terminal device 100 does not need the user to trigger compression preview on the audio 1. As shown in FIG. 5C and FIG. 5F, after detecting an operation of confirming the audio 1 by the user (for example, tapping the confirmation control 702), the terminal device 100 directly displays the icon 708 of the audio 1 in the information creation interface 14, that is, adds the compressed pre-listening audio corresponding to the audio 1 to the currently edited message content 1.

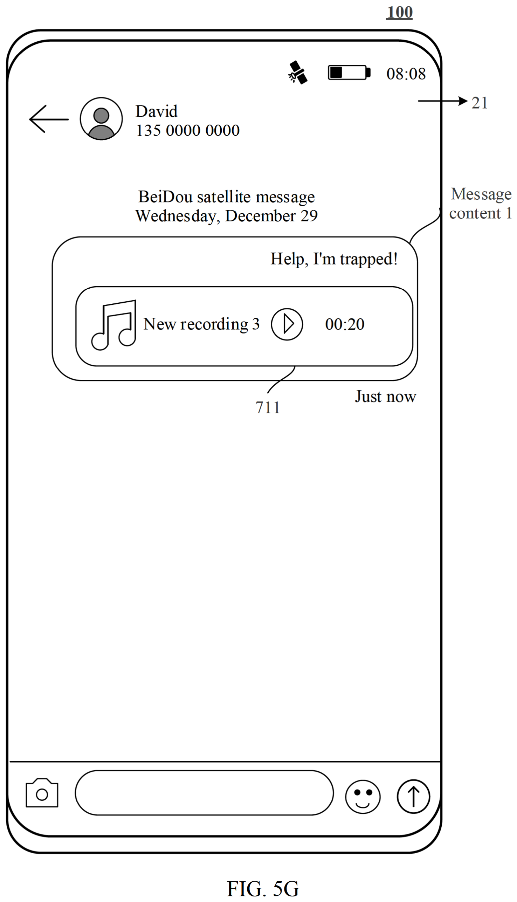

As shown in FIG. 5F and FIG. 5G, the terminal device 100 receives tapping the sending control 209 by the user; and in response to the operation, sends the BeiDou satellite message 1 to the terminal device 200 of the recipient through the satellite device, and displays the sent message content 1 of the BeiDou satellite message 1 on the information interface 21 of the recipient. The message content 1 includes a compressed pre-listening audio, and the terminal device 100 displays a playing component 711 of the compressed pre-listening audio. The playing component 711 displays duration of the compressed pre-listening audio, and the playing component 711 may be configured to play the compressed pre-listening audio.

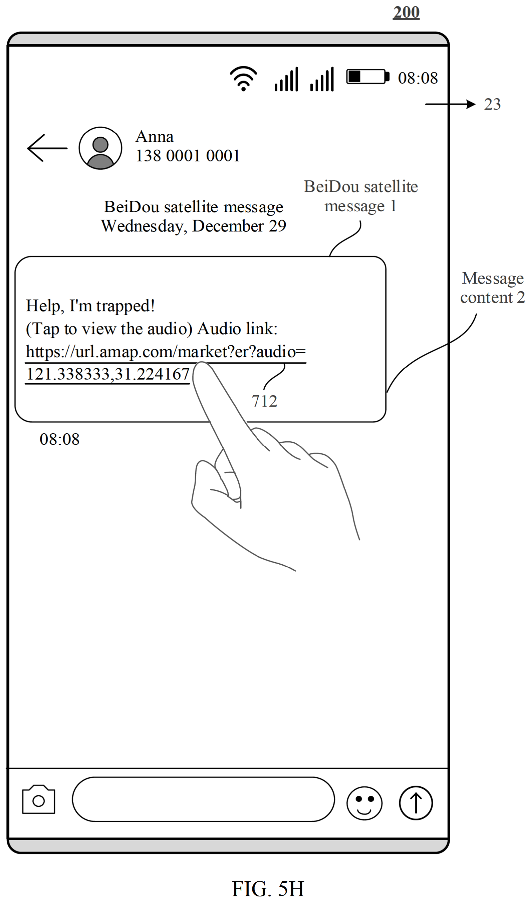

In this embodiment of this application, the terminal device 100 may receive the BeiDou satellite message 1 by using the MeeTime APP/Messaging APP. For details, refer to related descriptions in FIG. 3A to FIG. 3G. The MeeTime APP is used as an example. As shown in FIG. 5H, after obtaining the BeiDou satellite message 1, the MeeTime APP on the terminal device 200 of the recipient displays the message content 2 of the BeiDou satellite message 1 on the information interface 23 of the sender of the message.

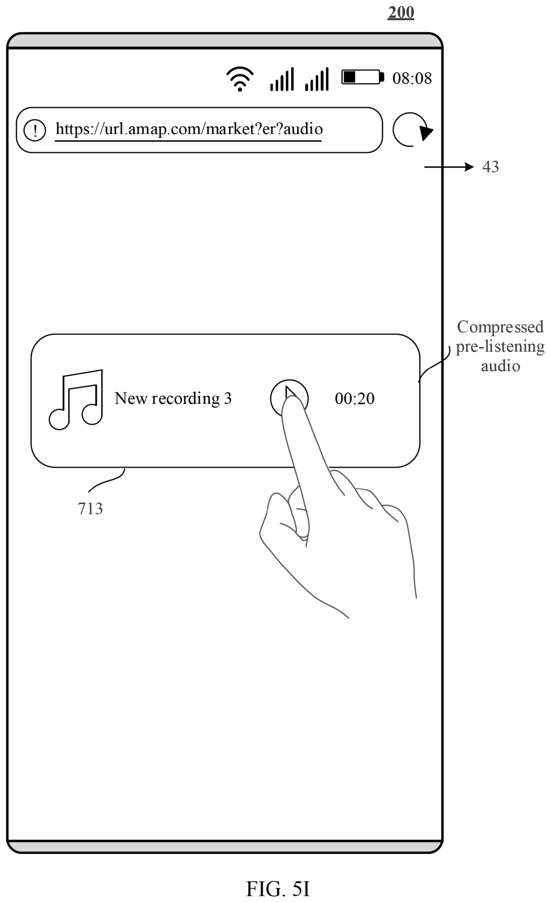

For example, as shown in FIG. 5H and FIG. 5I, the message content 2 includes a web address link 712 of the compressed pre-listening audio of the audio 1. The terminal device 100 receives an operation of tapping the web address link 712 by the user, and obtains and displays a web page 43 corresponding to the web address link 712 in response to the operation. The web page 43 displays a playing component 713 of the compressed pre-listening audio of the audio 1, and the playing component 713 may be configured to play the compressed pre-listening audio.

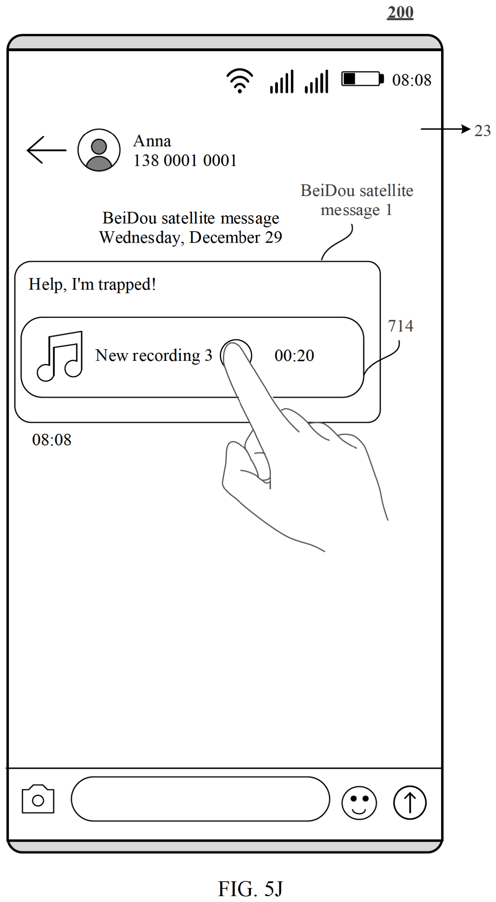

For example, as shown in FIG. 5J, the message content 2 includes the compressed pre-listening audio of the audio 1, and the terminal device 200 displays the playing component 714 of the compressed pre-listening audio; and the terminal device 100 receives an operation of tapping the playing component 714 by the user, and may play the compressed pre-listening audio of the audio 1 in response to the operation.

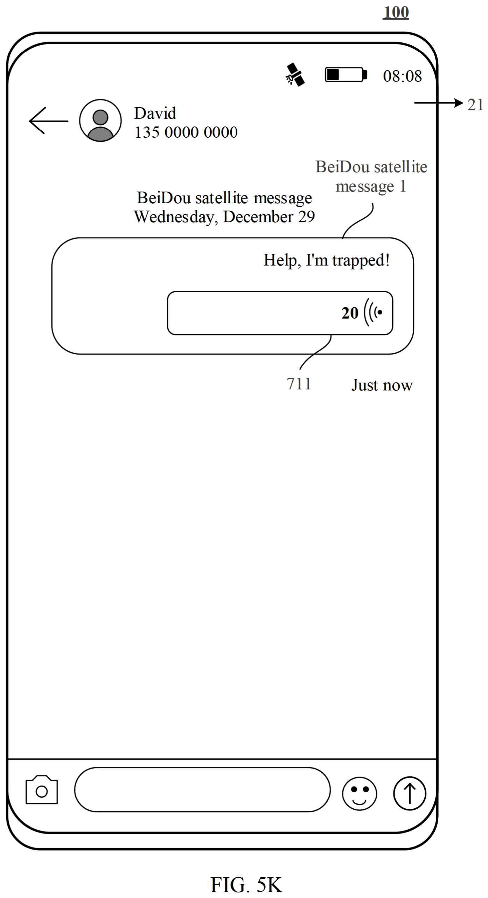

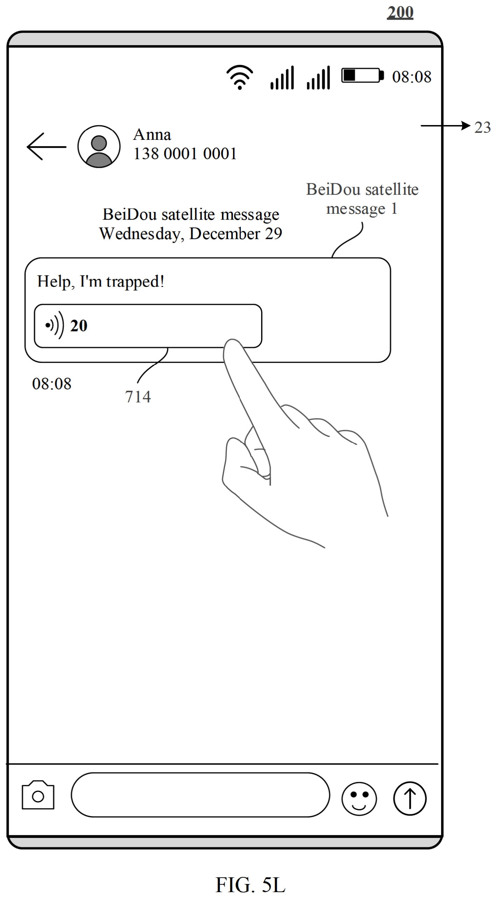

A display form of the playing component of the compressed pre-listening audio is not specifically limited in embodiments of this application. For example, FIG. 5K shows another display form of the playing component 711, and FIG. 5L shows another display form of the playing component 711.

In the interface examples in FIG. 2A to FIG. 5L, the message content of the BeiDou satellite message 1 sent by the sender to the recipient includes both rich media information and non-rich media information, for example, the text information 1 "Help, I'm trapped!". In this embodiment of this application, the message content 1 of the BeiDou satellite message 1 edited by the sender may include only the rich media information.

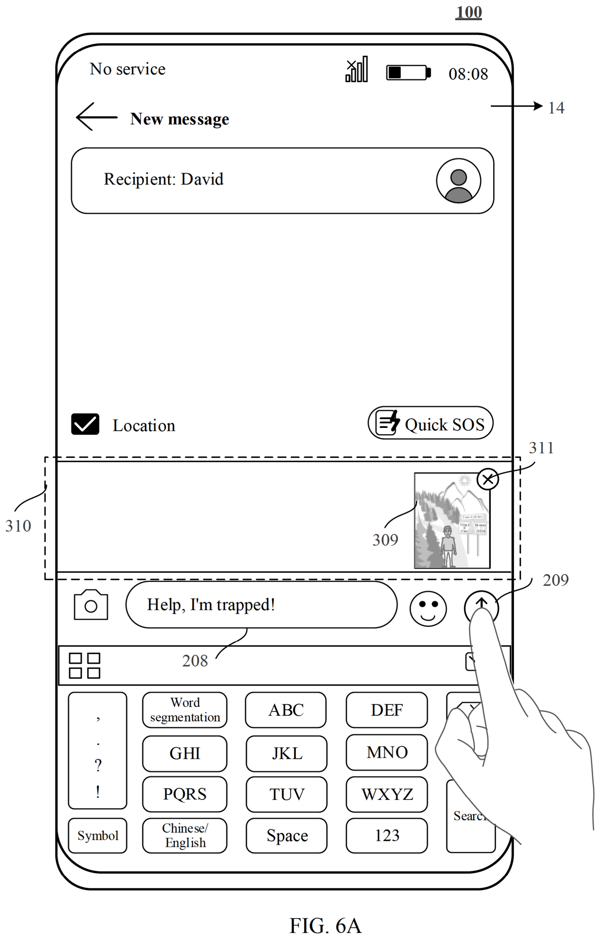

For example, in the interface examples in FIG. 6A to FIG. 6F, the message content 1 of the BeiDou satellite message 1 sent by the sender to the recipient includes only the image 1/the compressed preview image of the image 1.

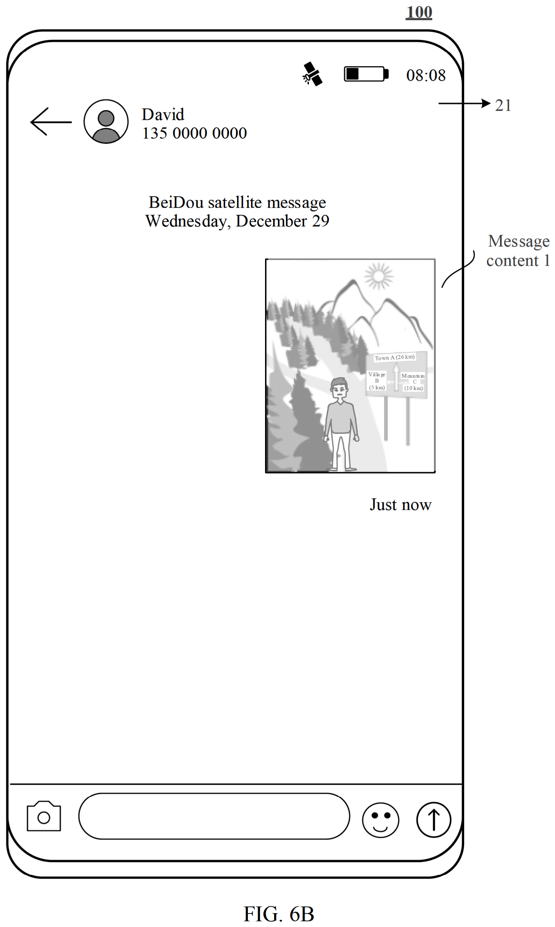

As shown in FIG. 6A, the compressed preview image of the image 1 is added to the message content 1 of the BeiDou satellite message 1 edited by the sender, and no text is edited in the information editing bar 208. As shown in FIG. 6A and FIG. 6B, the terminal device 100 detects an operation of tapping the sending control 209 by the user, and displays the sent message content 1 of the BeiDou satellite message 1 in response to the operation, where the message content 1 includes only the compressed preview image of the image 1.

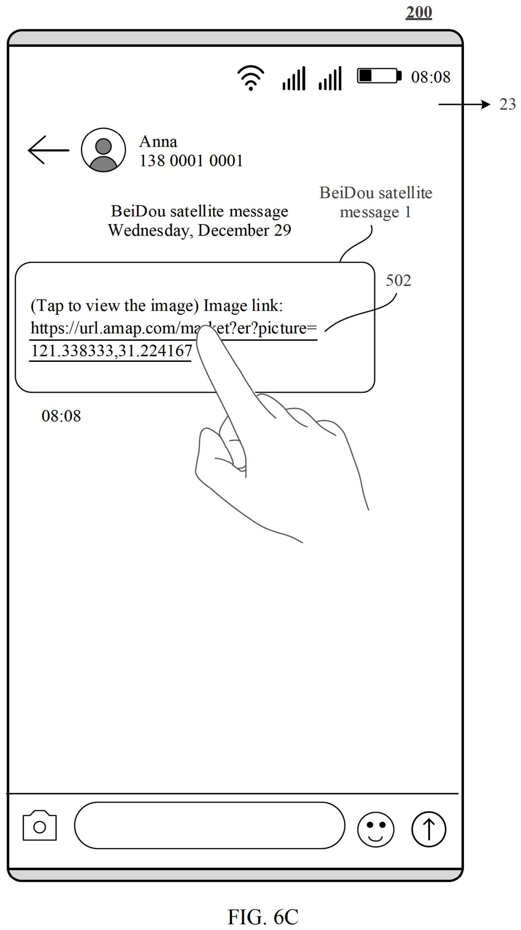

In this embodiment of this application, the terminal device 100 may receive the BeiDou satellite message 1 by using the MeeTime APP/Messaging APP. For details, refer to related descriptions in FIG. 3A to FIG. 3G. The MeeTime APP is used as an example. As shown in FIG. 6C, after receiving the BeiDou satellite message 1 from the sender, the MeeTime APP on the terminal device 200 of the recipient displays the message content 2 of the BeiDou satellite message 1 on the information interface 23 of the sender.

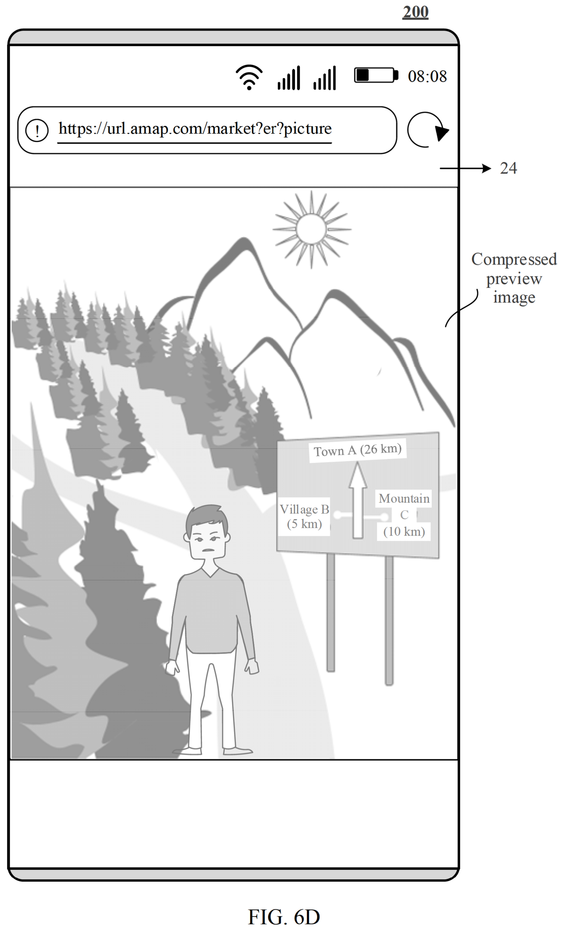

For example, as shown in FIG. 6C and FIG. 6D, the message content 2 includes the web address link 502 of the compressed preview image of the image 1. The terminal device 100 receives an operation of tapping the web address link 502 by the user, and obtains and displays the web page 24 corresponding to the web address link 502 in response to the operation. The compressed preview image of the image 1 is displayed on the web page 24.

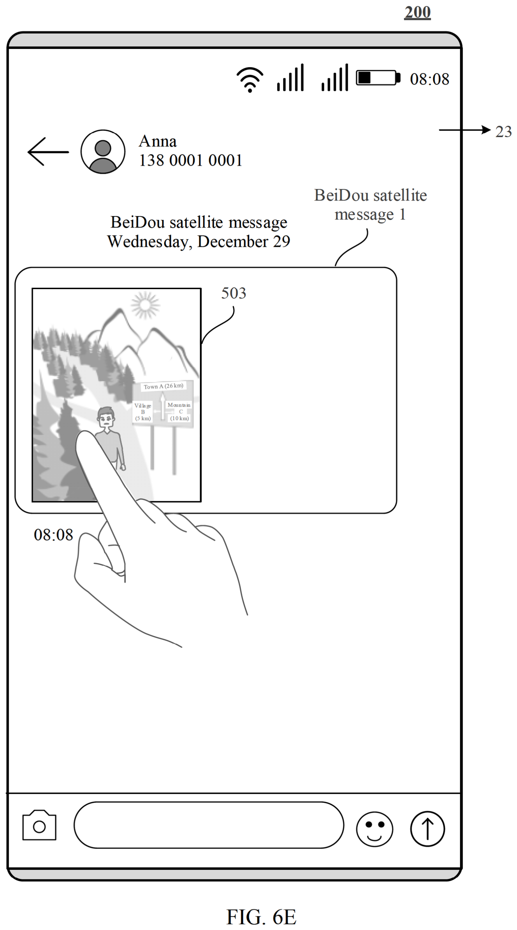

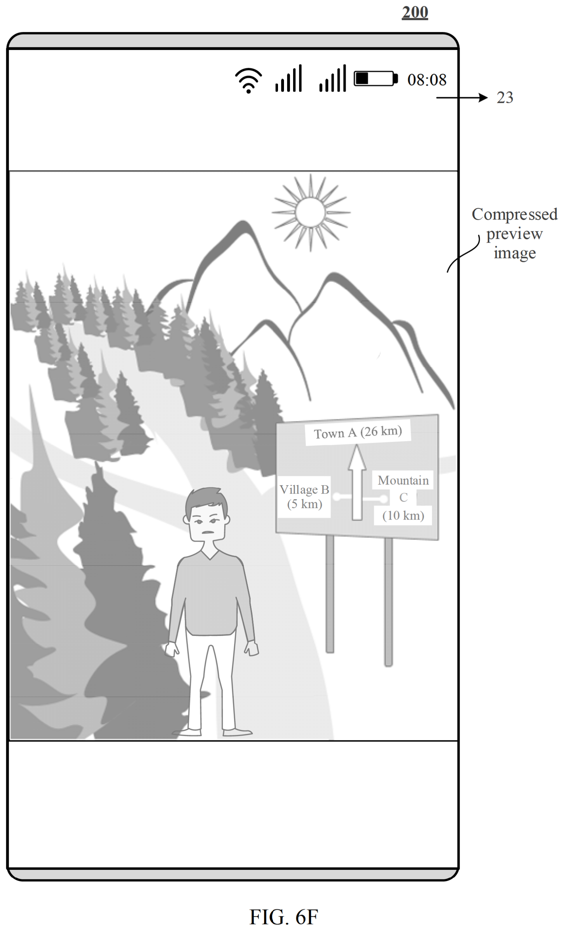

For example, as shown in FIG. 6E and FIG. 6F, the message content 2 includes the sketch 503 of the compressed preview image of the image 1. The terminal device 100 receives an operation of tapping the sketch 503 by the user, and displays the compressed preview image of the image 1 in full screen in response to the operation.

### Interface embodiment 2

In Interface embodiment 2, a plurality of compression levels are set for the rich media information in the foregoing embodiment. The terminal device 100 may provide a sender with options of the plurality of compression levels, and a user selects a compression level of rich media information 1, and may preview, in advance, actual rich media information that can be received by a recipient. Level-1 compression and level-2 compression are used as examples. Level-1 compression is performed on the rich media information 1 to obtain compressed data 11, and decompression or decompression and enhancement processing are performed on the compressed data 11 to obtain rich media information 2. Level-2 compression is performed on the rich media information 1 to obtain compressed data 12, and decompression or decompression and enhancement processing are performed on the compressed data 12 to obtain rich media information 3. Compared with the compressed data 11, a data amount of the compressed data 12 is smaller, and shorter transmission time is required for satellite communication. Compared with the rich media information 3, the rich media information 2 lacks more details and is more blurred.

It should be noted that compression on the rich media information may further include more levels, for example, level-3 compression. This is not specifically limited herein.

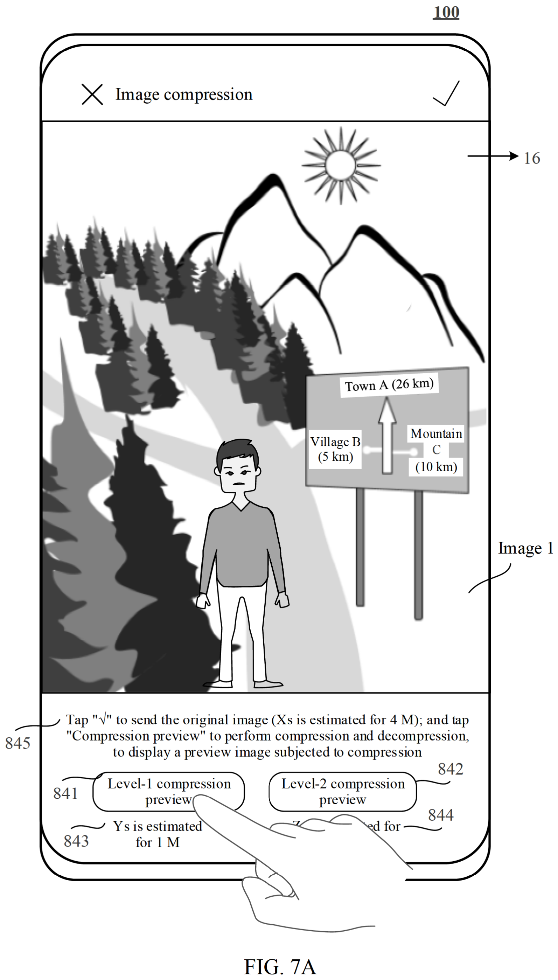

For example, the rich media information 1 includes an image 1. FIG. 7A to FIG. 7D show related user interfaces for selecting compression levels by the user.

As shown in FIG. 7A, a compression preview interface 16 includes the image 1, a level-1 compression preview control 841, and a level-2 compression preview control 842. Optionally, the compression preview interface 16 may further include a data amount obtained through level-1 compression and estimated transmission duration 843, and a data amount obtained through level-2 compression and estimated transmission duration 844.

In some embodiments, the compression preview interface 16 may further include prompt information 845. The prompt information 845 indicates a data amount and estimated transmission duration of an original image of the image 1. If a confirmation control 307 is tapped, the image 1 may be directly sent to the recipient without being compressed. In this embodiment of this application, if the user directly taps the confirmation control 307, the image 1 may be added to a BeiDou satellite message 1, and image data of the image 1 is subsequently sent to the recipient through a satellite device. When a data amount of the image data of the image 1 exceeds a data amount that is in a single transmission and that is supported by the satellite device, the image data of the image 1 may be split into a plurality of data packets for separate sending. It may be understood that, in this embodiment, the user may choose to send the original image of the image 1 to the recipient.

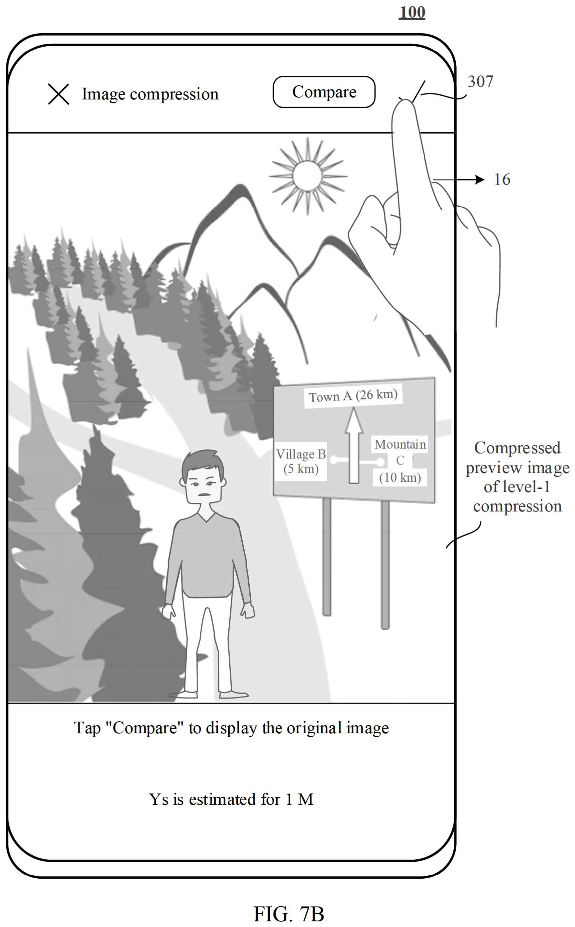

As shown in FIG. 7A and FIG. 7B, the terminal device 100 receives an operation of tapping the level-1 compression preview control 841 by the user; and in response to the operation, compresses the image 1 by using a level-1 compression algorithm, to obtain compressed data a1, and then, decompresses the compressed data a1, to obtain and display a compressed preview image of level-1 compression. In this case, the terminal device 100 receives an operation of tapping the confirmation control 307 by the user, and determines, in response to the operation, to add the compressed preview image of level-1 compression of the image 1 to message content 1. After detecting that the user taps a sending control 209, the terminal device 100 may send the compressed data a1 of level-1 compression of the image 1 to the satellite device.

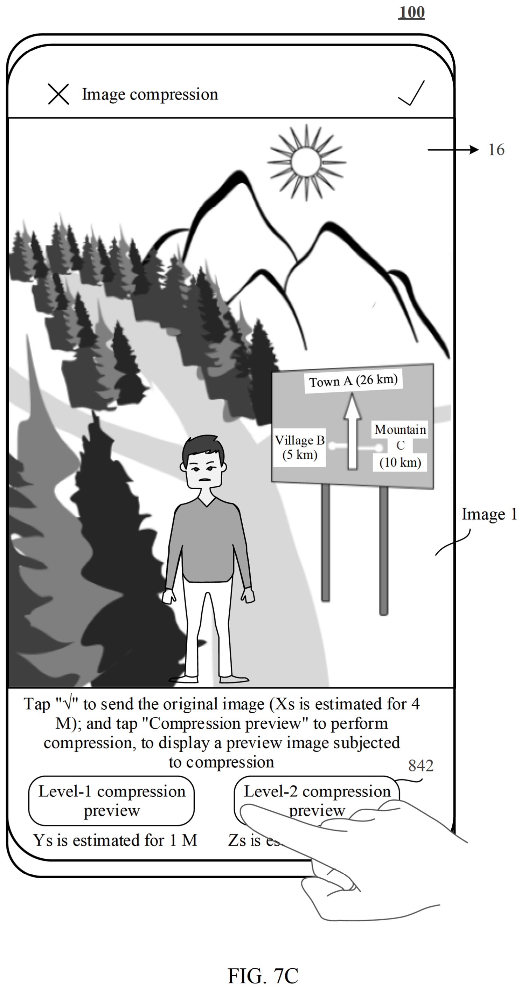

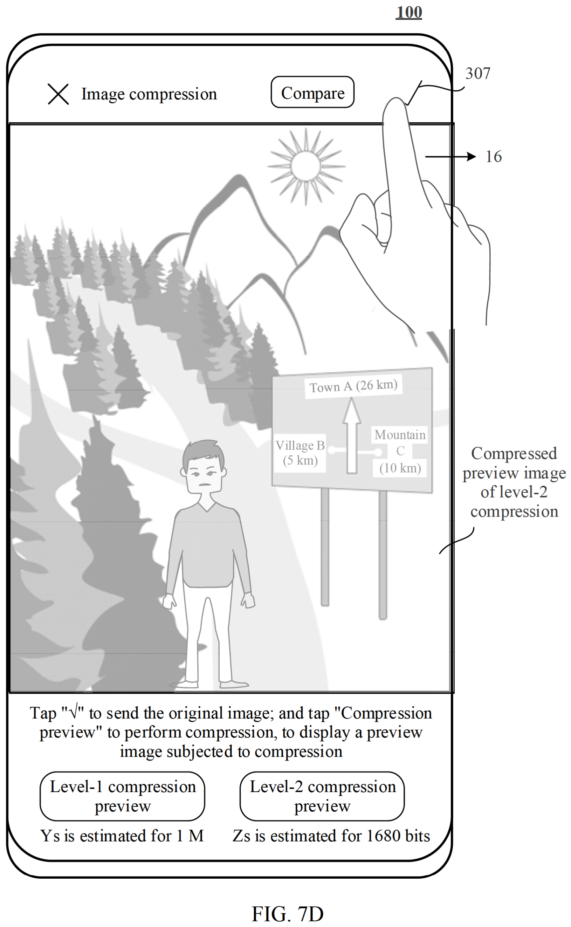

As shown in FIG. 7C and FIG. 7D, the terminal device 100 receives an operation of tapping the level-2 compression preview control 842 by the user; and in response to the operation, compresses an image 2 by using a level-2 compression algorithm, to obtain compressed data a2, and then, decompresses the compressed data a2, to obtain and display a compressed preview image of level-2 compression. In this case, the terminal device 100 receives the operation of tapping the confirmation control 307 by the user, and determines, in response to the operation, to add the compressed preview image of level-2 compression of the image 1 to the message content 1. After detecting that the user taps the sending control 209, the terminal device 100 may send the compressed data a2 of level-2 compression of the image 1 to the satellite device.

For how to obtain the compressed preview image based on the compressed data, refer to related descriptions in the foregoing embodiment. Details are not described herein again.

It may be understood that, in the foregoing embodiment, the sender may comprehensively consider image quality of the compressed preview image of level-1 compression, the data amount obtained through level-1 compression and the estimated transmission duration, image quality of the compressed preview image of level-2 compression, the data amount obtained through level-2 compression and the estimated transmission duration, to determine to select a specific compression level.

In an implementation, a compression algorithm at each compression level provided in this embodiment of this application is used, so that a compressed data amount may be controlled within a maximum data amount that is in a single transmission and that is supported by the satellite device. In another implementation, a compressed data amount corresponding to one compression level may be less than a data amount that is in a single transmission and that is supported by the satellite, or may be greater than a data amount that is in a single transmission and that is supported by the satellite. When the data amount is greater than the maximum data amount supported by the satellite for a single transmission, the compressed data may be split into a plurality of data packets for a plurality of times of sending.

Similarly, for other rich media information, the terminal device 100 may also provide different compression levels for the user to select.

### Interface embodiment 3

In Interface embodiment 3, after obtaining rich media information 1, a terminal device 100 compresses the rich media information 1 to obtain compressed data of the rich media information 1. This specifically includes: performing lossy compression on a non-key part in the rich media information 1, and performing no compression on a key part in the rich media information 1, lossless compression on a key part in the rich media information 1, or lossy compression on a key part in the rich media information 1 based on a low loss rate. The rich media information 1 may include one or more key parts, and the non-key part is a part other than the key part in the rich media information 1. Compressed data 1 of the rich media information 1 includes compressed data of the key part and compressed data of the non-key part. In rich media information 2 obtained by performing decompression processing on the compressed data 1, a definition of a key part is higher than that of a non-key part. In this way, key information indicated by the key part in the rich media information 1 is effectively retained while a transmission data amount required by the rich media information 1 is reduced, to ensure that a recipient can obtain the key information.

In this embodiment of this application, the terminal device 100 may automatically identify the key part in the rich media information 1, or a user may manually select the key part in the rich media information 1.

For example, the rich media information 1 is an image 1, and a key part of the image 1 is usually a key area that needs to be kept clear in the image 1 (which may be referred to as a key area for short below for ease of description). The key area may include a display area of a preset object in the image 1. The preset object may be manually selected by the user, or may be automatically identified by the terminal device 100 based on a preset configuration file. Various preset objects whose images need to be kept clear are recorded in the configuration file. For example, the preset object may include a road sign, and a text and a signpost in the road sign may indicate a location of a to-be-rescued person. For example, the preset object may include a person or an injured part of the person, so that the recipient can clearly observe a health status of the to-be-rescued person in the image 1. The key area may be an area including a specific shape (for example, a rectangle) of the preset object, or may be an irregular closed area formed by an edge line of the preset object. This is not specifically limited herein.

For example, the rich media information 1 is a video 1, and the key part may include a display area of a preset object in each frame of image of the video 1. The preset object may be manually selected by the user, or may be automatically identified by the terminal device 100 based on the preset configuration file. In an implementation, when displaying one frame of image (for example, a 1^{st} frame of image) of the video 1, the terminal device 100 detects an operation (for example, a tap operation) performed by the user on an object 1 in the frame of image, and the terminal device 100 determines that the key part of the video 1 includes a display area of the object 1 in each frame of image of the video 1. After the user selects a preset object from the 1^{st} frame of image, the terminal device 100 may automatically identify a display area of the preset object (for example, the object 1) in each frame of image of the video 1.

For example, the rich media information 1 is the video 1, the key part of the video 1 may be a video in a specified time period in the video 1, and the specified time period may be selected by the user. For example, duration of the video 1 is 15s, and the key part is a video from 5^{th} second to 10^{th} second of the video 1.

For example, the rich media information 1 is an audio 1, and a key part of the audio 1 may be a sound emitted by a preset object (for example, a person) in the audio 1. The terminal device 100 may automatically identify, based on a preset configuration file, sounds emitted by various preset objects in the audio 1. Various preset objects whose sounds need to be kept clear, for example, a person, are recorded in the configuration file.

For example, the rich media information 1 is the audio 1, the key part of the audio 1 may be an audio in a specified time period in the audio 1, and the specified time period may be selected by the user. For example, duration of the audio 1 is 12s, and the key part is an audio from 5^{th}s to 12^{th}s of the audio 1.

**The following describes in detail related user interfaces in Interface embodiment 3 by using an example in which the rich media information 1 is the image 1.**

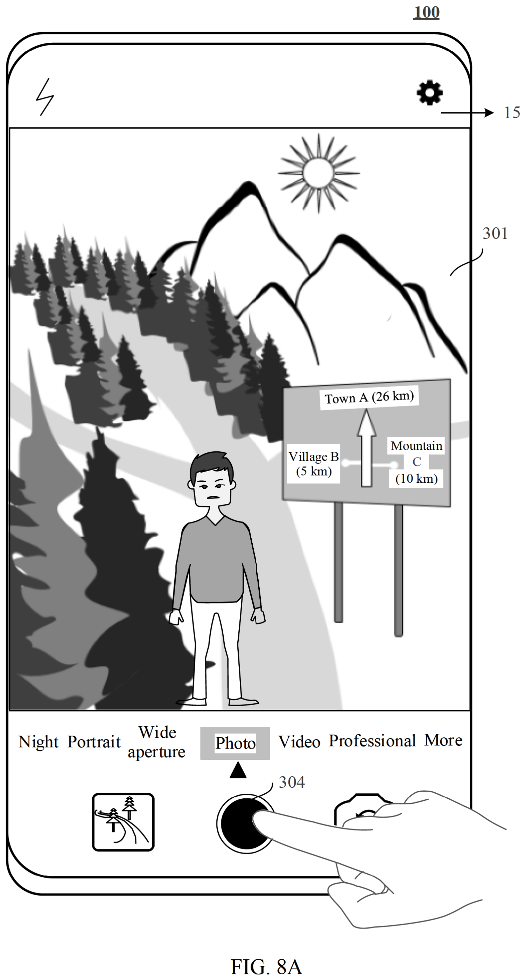

For example, FIG. 8A to FIG. 9G show related user interfaces for manually drag-selecting the key area of the image 1 by the user.

FIG. 8A to FIG. 8O show an implementation solution in which the user manually drag-selects the key area of the image 1.

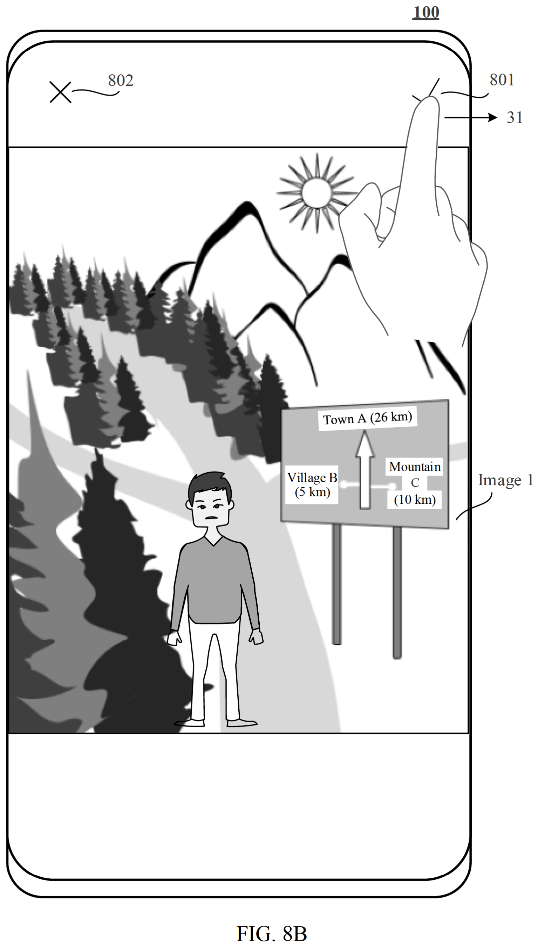

As shown in FIG. 8A and FIG. 8B, the terminal device 100 detects an operation of tapping a photographing control 304 on a photographing preview interface 15 by the user, and in response to the operation, shoots the image 1, and displays a user interface 31. The user interface 31 includes the image 1, a confirmation control 801, and a return control 802. The return control 802 is used to return to the photographing preview interface 15. The user interface 31 is used by the user to determine whether a shot image is suitable, and if the shot image is not suitable, the user may return to the photographing preview interface 15 to perform photographing again.

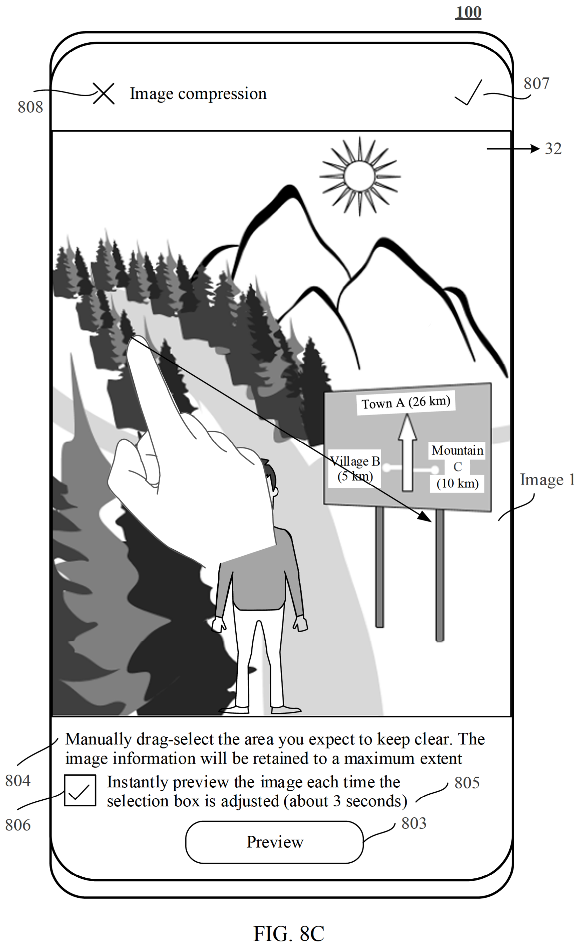

As shown in FIG. 8B and FIG. 8C, the terminal device 100 receives an operation of tapping the confirmation control 801 by the user, and displays a compression preview interface 32 in response to the operation. The compression preview interface 32 includes the image 1, a compression preview control 803, prompt information 804, prompt information 805, a selection control 806, a confirmation control 807, and a return control 808. In another implementation, as shown in FIG. 8A and FIG. 8C, when detecting the operation of tapping the photographing control 304 on the photographing preview interface 15 by the user, the terminal device 100 may alternatively directly display the compression preview interface 32, that is, does not need to display the user interface 31.

The compression preview control 803 is used to trigger the terminal device 100 to perform compression and decompression processing on the image 1, to obtain a compressed preview image of the image 1. The prompt information 4 indicates "The user manually drag-selects an area (that is, the key area) that the user expects to keep clear, and image information in the area is retained to a maximum extent when a satellite message is transmitted". The prompt information 805 indicates "When the selection control 806 is selected, each time after adjusting a selection box of the key area, the user may instantly preview the compressed preview image of the image 1 after preset duration (for example, 3s)". An image definition of an area (namely, the key area) corresponding to the selection box on the compressed preview image is higher than that of an area outside the selection box (that is, the non-key area). As shown in FIG. 8C, the selection control 806 is currently in a selected state, and the user may control, through a preset operation (for example, a tap operation) performed on the selection control 806, the selection control 806 to switch between the selected state and an unselected state. The return control 808 is used to return to the photographing preview interface 15.

In some embodiments, when the user does not select the selection control 806, the compression preview control 803 needs to be used to trigger the terminal device 100 to perform compression and decompression processing on the image 1, so that the compressed preview image of the image 1 is obtained and displayed. When the user selects the selection control 806, if the compression preview control 803 is not operated, the terminal device 100 may also automatically display the compressed preview image of the image 1 after preset duration since the selection box of the key area is initially generated or the user adjusts the selection box each time. When the user selects the selection control 806, the user may also trigger, by using the compression preview control 803, the terminal device 100 to display the compressed preview image of the image 1 within the preset duration since the selection box of the key area is initially generated or the user adjusts the selection box each time.

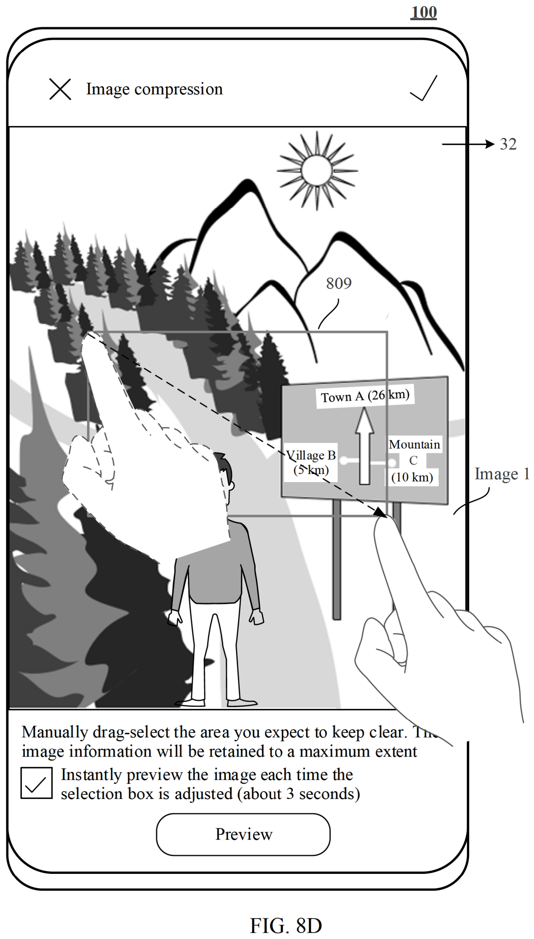

As shown in FIG. 8C and FIG. 8D, a sliding operation performed by the user on the image 1 is detected, and the terminal device 100 displays a selection box 809 of the key area. An upper left corner of the selection box 809 is a start point of the sliding operation on the image 1. A lower right corner of the selection box 809 is a latest contact point of the sliding operation on the image 1. After the terminal device 100 displays the selection box 809, the user may adjust a location, a size, and a shape of the selection box 809 on the image 1, that is, perform a specific operation to drag the selection box 809, enlarge the selection box 809, reduce the selection box 809, change a length of the selection box 809, or change a width of the selection box 809 on the image 1.

In another implementation solution, after the user taps the confirmation control 801, when displaying the compression preview interface 32, the terminal device 100 automatically displays the initial selection box 809 on the image 1, and does not need to generate the selection box 809 by performing the sliding operation by the user.

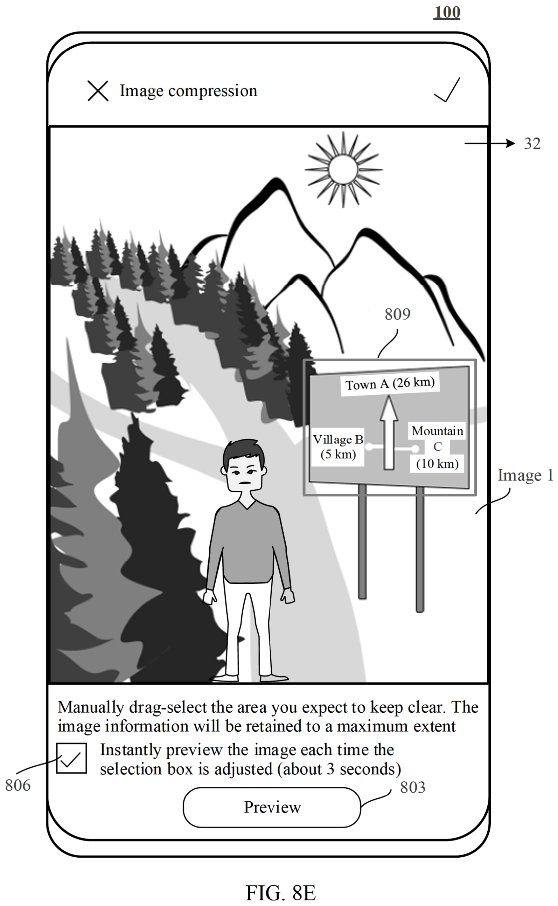

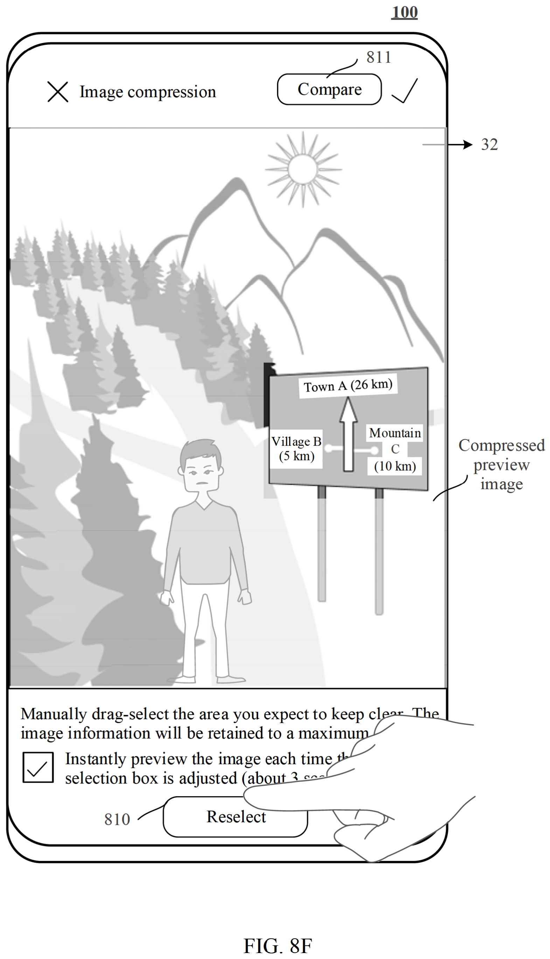

As shown in FIG. 8E, after the user adjusts the location, the size, and the shape of the selection box 809, the selection box 809 includes a road sign in the image 1. As shown in FIG. 8F, after the preset duration since the user stops adjusting the selection box 809, the terminal device 100 performs compression preview on the image 1 based on the selection box 809, and obtains and displays the compressed preview image of the image 1. In the compressed preview image, an image definition of an area corresponding to the selection box 809 is higher than an image definition of another area, so that the recipient can effectively obtain address information indicated by the road sign in the selection box 809.

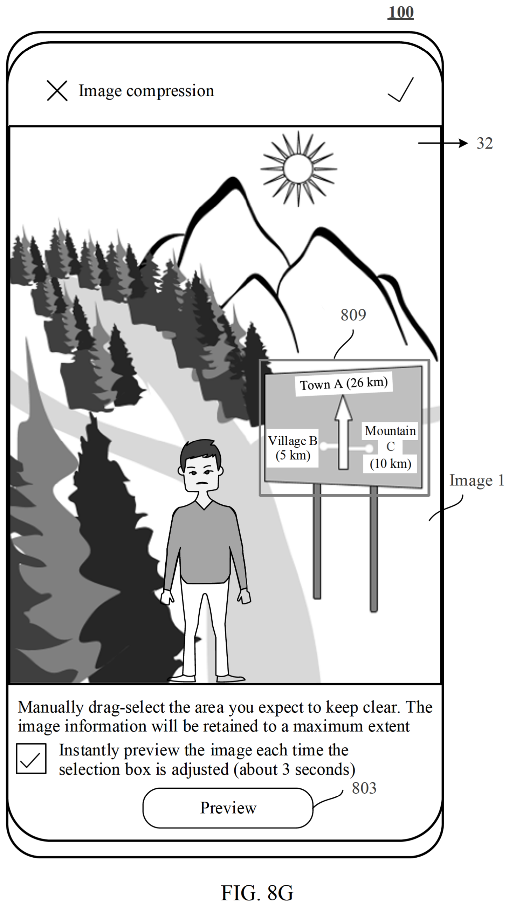

In an implementation, as shown in FIG. 8F, when displaying the compressed preview image corresponding to the image 1, the terminal device 100 may further display a re-selection control 810 and a comparison control 811. As shown in FIG. 8F and FIG. 8G, the terminal device 100 detects an operation of tapping the re-selection control 810 by the user, and may redisplay the image 1 and the selection box 809 in response to the operation, and the user may continue to adjust the location, the size, and the shape of the selection box 809. The comparison control 811 is used to compare the image 1 with the compressed preview image. For details, refer to related descriptions of the comparison control 308. Details are not described herein again.

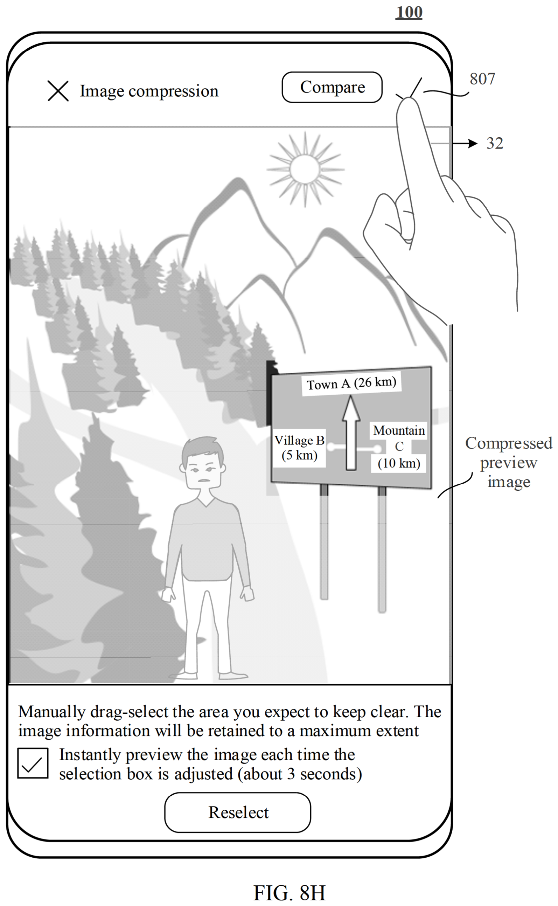

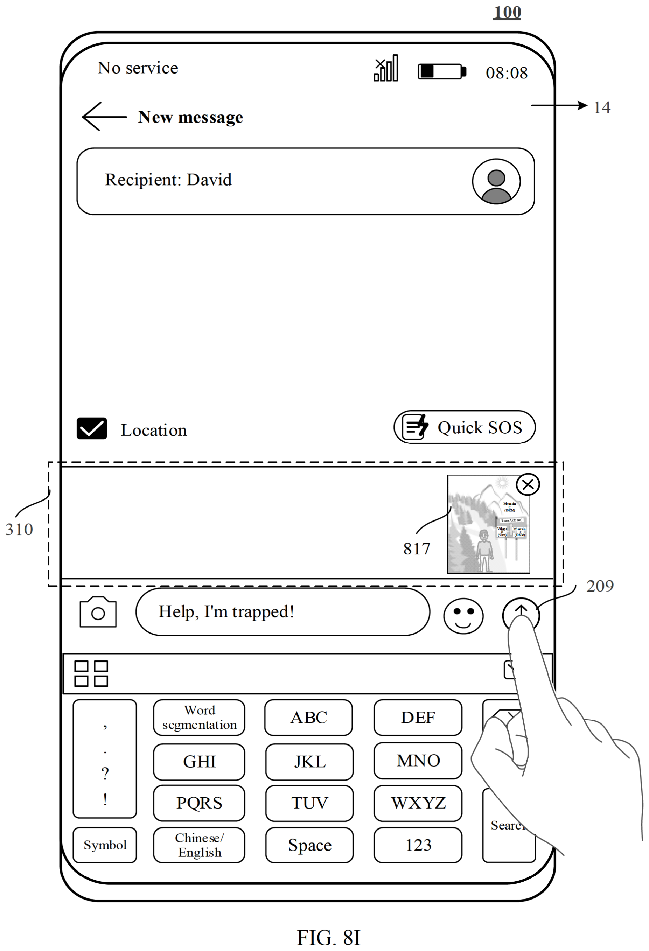

As shown in FIG. 8H and FIG. 8I, when displaying the compressed preview image corresponding to the image 1, the terminal device 100 detects an operation of tapping the confirmation control 807 by the user; and in response to the operation, displays an icon 817 of the compressed preview image in a display area 310 of an information creation interface 14, and adds the compressed preview image to message content 1 of a BeiDou satellite message 1.

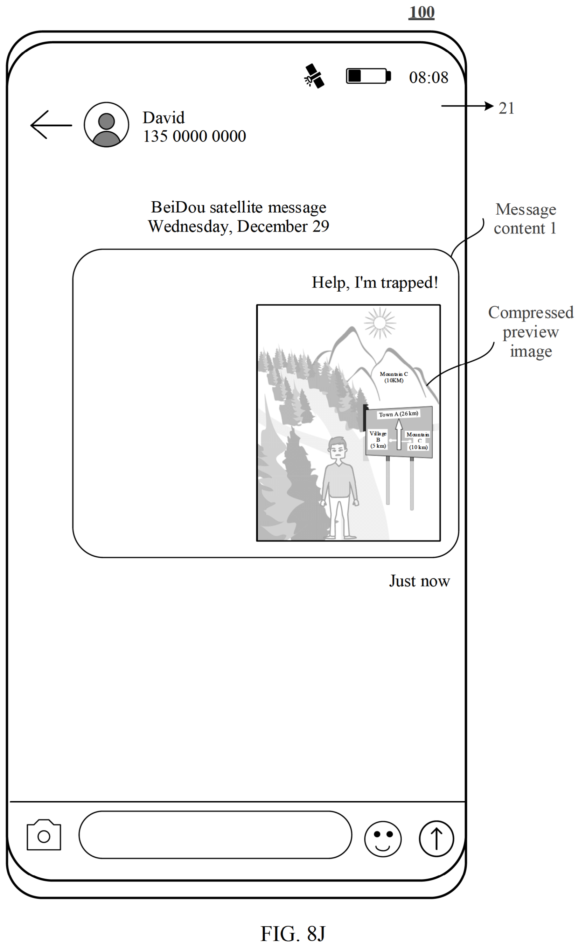

As shown in FIG. 8I, the terminal device 100 receives an operation of tapping a sending control 209 by the user, and sends the edited message content 1 of the BeiDou satellite message 1 to a terminal device 200 of the recipient through a satellite communication system 10 in response to the operation. As shown in FIG. 8J, after sending the message, the terminal device 100 may display an information interface 21 of the recipient. The information interface 21 may display the sent message content 1 of the BeiDou satellite message 1, and the message content 1 includes the compressed preview image of the image 1.

In this embodiment of this application, the terminal device 100 may receive the BeiDou satellite message 1 by using a MeeTime APP/Messaging APP. The message content of the BeiDou satellite message 1 displayed by the terminal device 200 may include the compressed preview image of the image 1, a sketch of the compressed preview image, or a web address link of the compressed preview image. For details, refer to related descriptions in FIG. 3A to FIG. 3G.

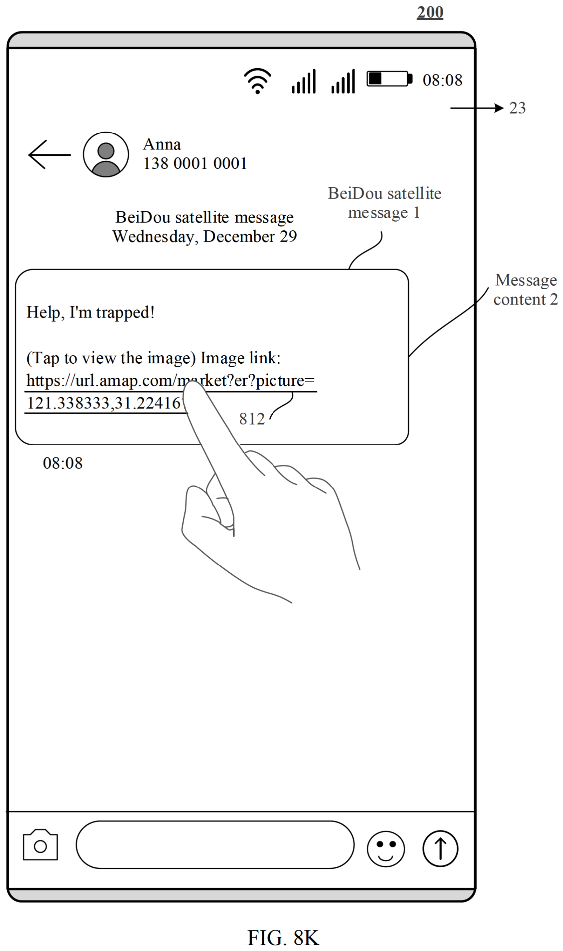

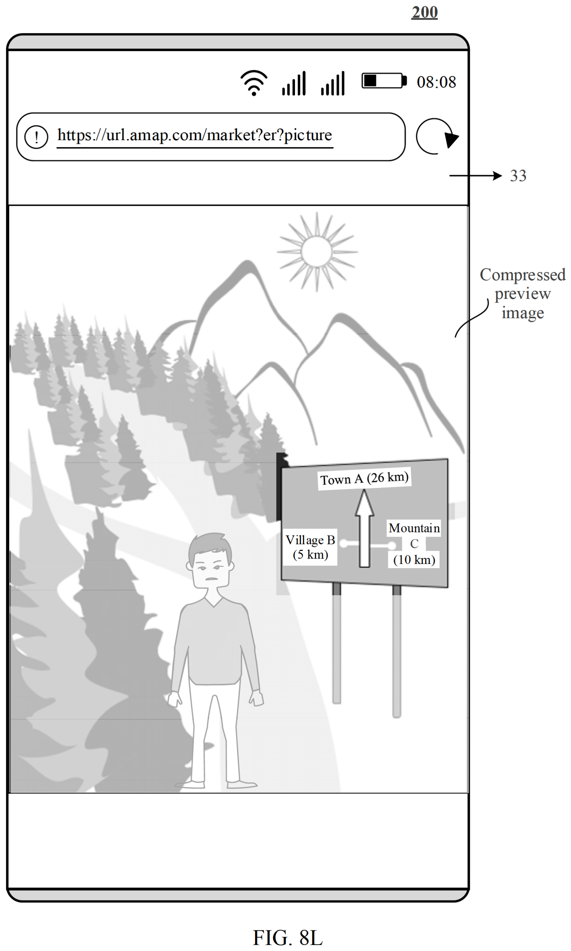

For example, the MeeTime APP is used as an example. As shown in FIG. 8K, after obtaining the BeiDou satellite message 1, the MeeTime APP on the terminal device 200 of the recipient displays message content 2 of the BeiDou satellite message 1 on an information interface 23 of a sender, where the message content 2 includes a web address link 812 of the compressed preview image of the image 1. As shown in FIG. 8K and FIG. 8L, the terminal device 100 receives an operation of tapping the web address link 812 by the user, obtains and displays a web page 33 corresponding to the web address link 812 in response to the operation, and the compressed preview image corresponding to the image 1 is displayed on the web page 33. The image definition of the key area of the compressed preview image is higher than that of the non-key area, the road sign is displayed in the key area, and the recipient can effectively obtain the address information indicated by the road sign.

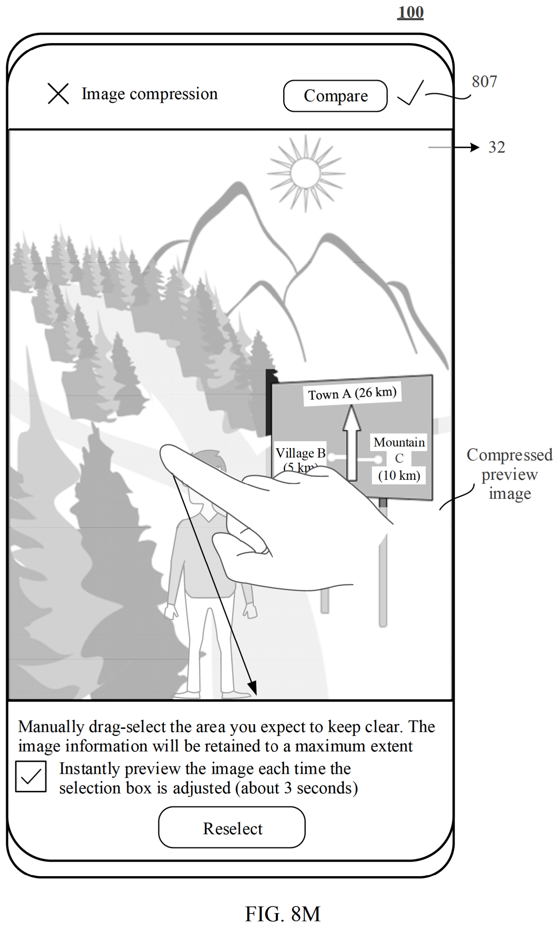

In some embodiments, as shown in FIG. 8M, after the terminal device 100 obtains and displays, based on the location of the selection box 809, the compressed preview image corresponding to the image 1, the user may continue to drag-select a key area that the user expects to keep clear.

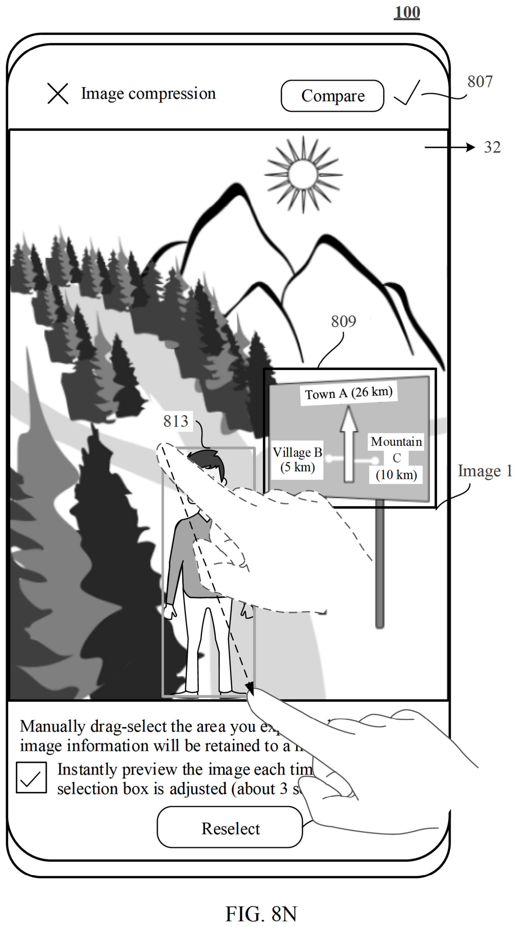

As shown in FIG. 8M and FIG. 8N, a sliding operation performed by the user on the compressed preview image is detected, and the terminal device 100 displays the selection box 809 of the key area and a selection box 813 of another key area of the image 1. An upper left corner of the selection box 813 is a start point of the sliding operation on a screen. A lower right corner of the selection box 809 is a latest contact point of the sliding operation on the screen. After the terminal device 100 displays the selection box 813, the user may adjust a location, a size, and a shape of the selection box 813 on the image 1.

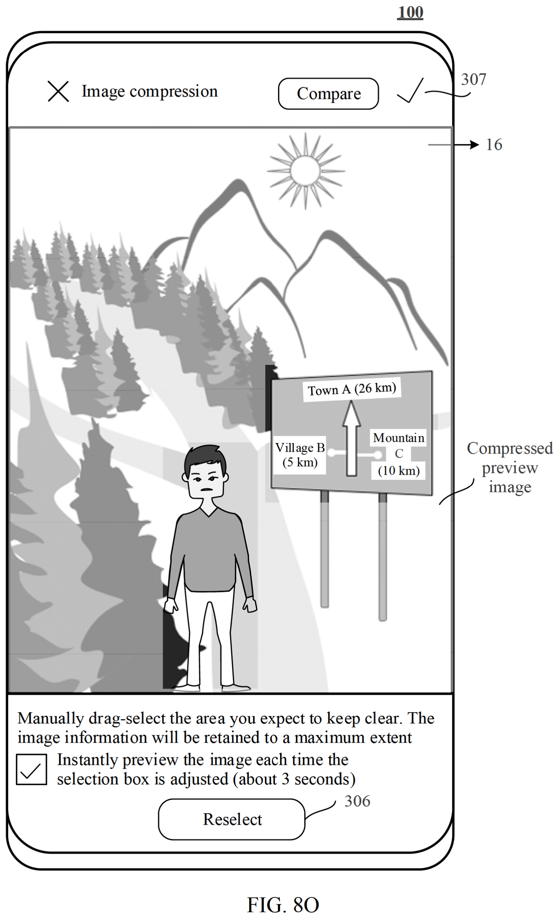

As shown in FIG. 8O, the selection box 813 includes a person in the image 1. After the preset duration since the user stops adjusting the selection box 813, the terminal device 100 performs compression preview on the image 1 based on the selection box 809 and the selection box 813, to obtain and display the compressed preview image corresponding to the image 1. Image definitions of areas corresponding to the selection box 809 and the selection box 813 in the compressed preview image 1 are higher than an image definition of another area, and the recipient may effectively observe a status of a person in an area corresponding to the selection box 813, for example, whether the person is injured or a mental state.

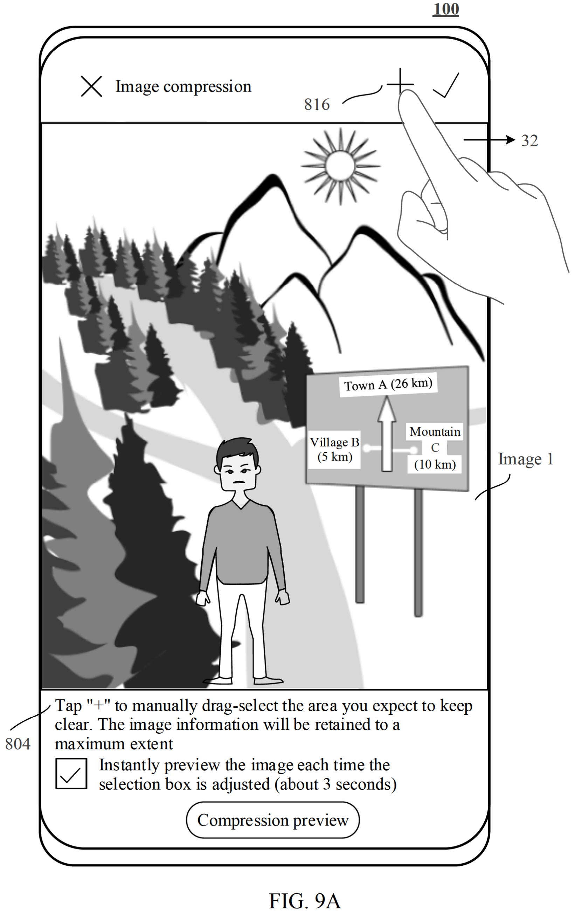

FIG. 9A to FIG. 9G show another implementation solution in which the user manually drag-selects the key part of the image 1.

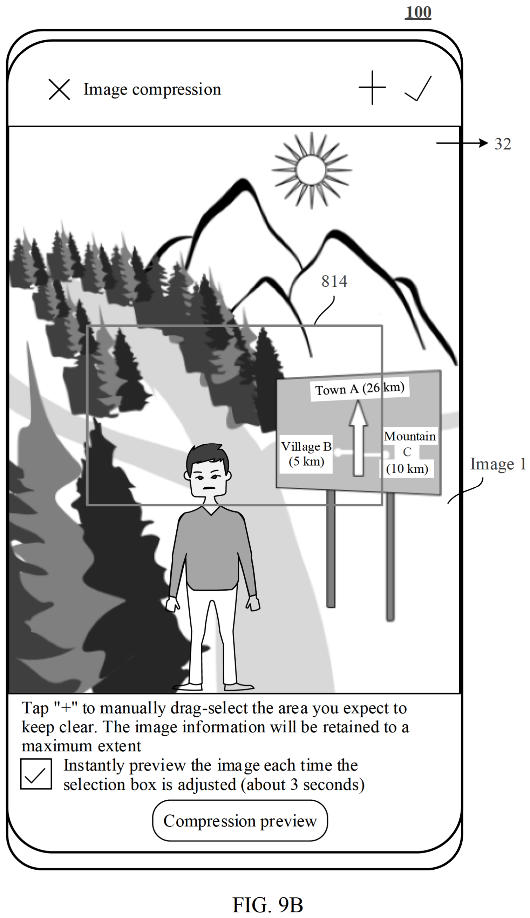

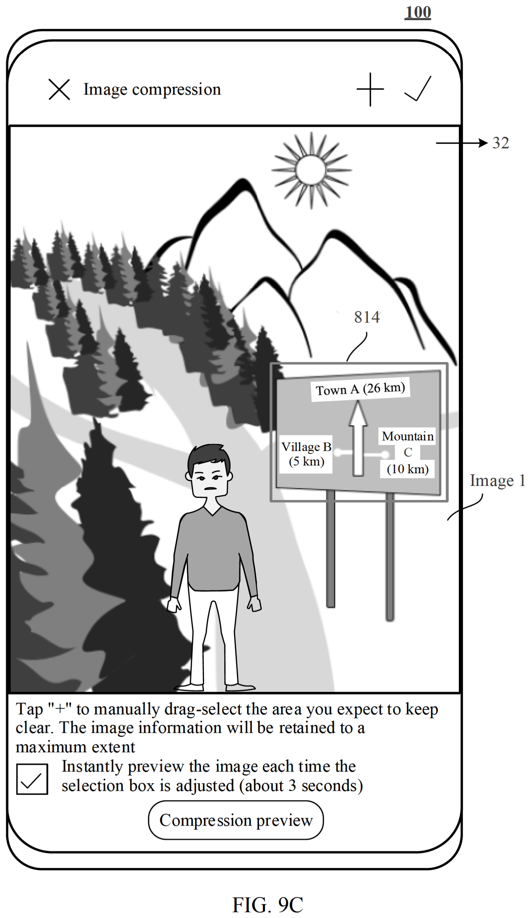

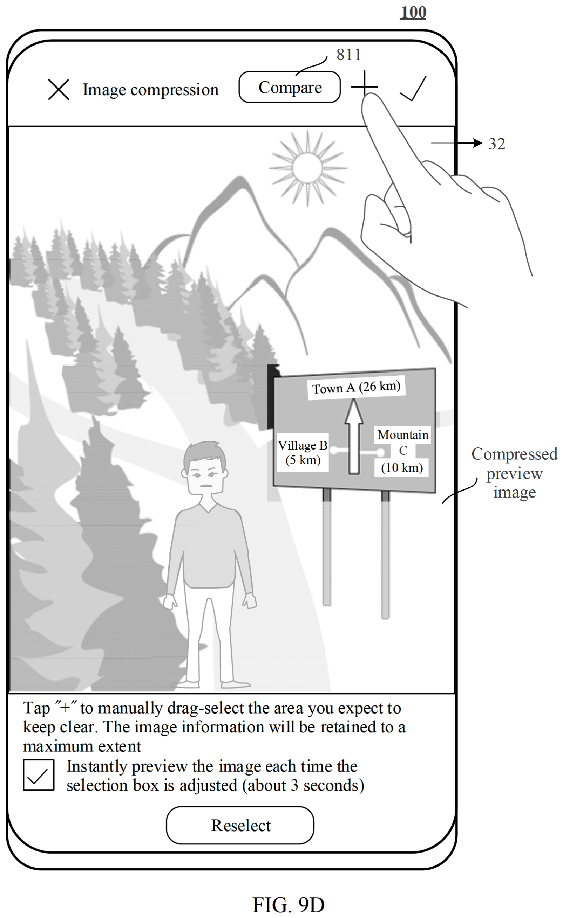

In some embodiments, as shown in FIG. 9A, the compression preview interface 32 may include an add control 816, and the prompt information 804 indicates to manually drag-select, by tapping "+ (that is, the add control 816)", an area that the user expects to keep clear. As shown in FIG. 9A and FIG. 9B, after detecting that the user taps the add control 816, the terminal device 100 displays a selection box 814 of the key area. As shown in FIG. 9C and FIG. 9D, similar to the selection box 809, the user may adjust a location, a size, and a shape of the selection box 814, so that the selection box 814 includes the road sign in the image 1. After the preset duration since the user stops adjusting the selection box 814, the terminal device 100 obtains and displays the compressed preview image of the image 1 based on the location of the selection box 814. In the compressed preview image, an image definition of an area corresponding to the selection box 814 is higher than an image definition of another area.

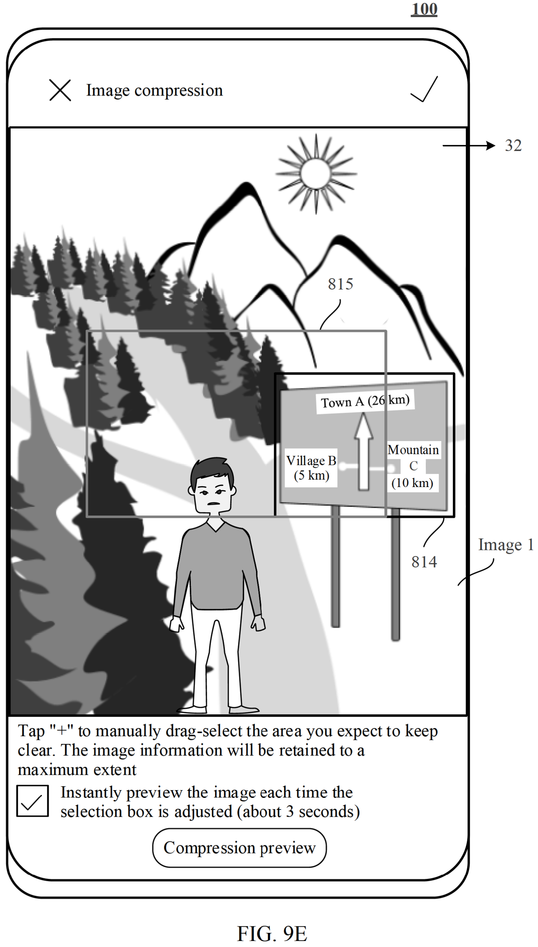

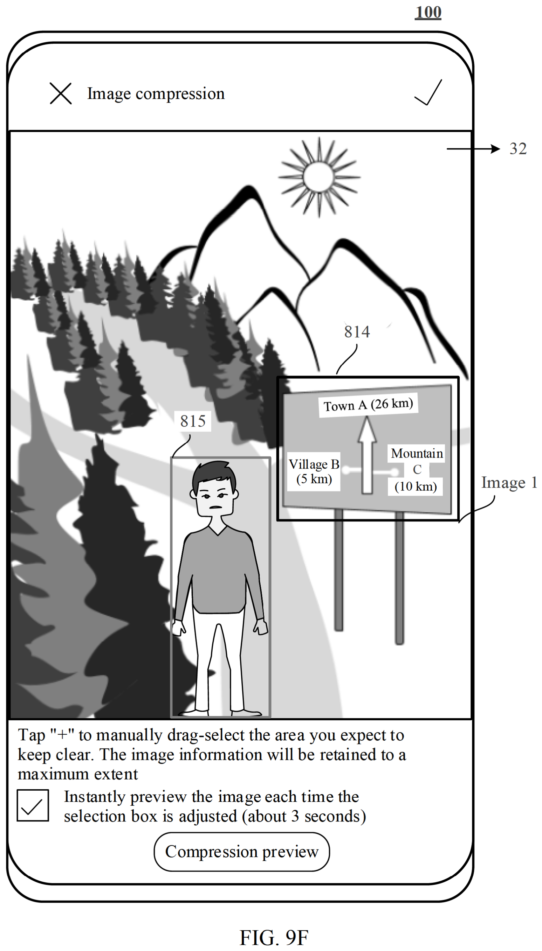

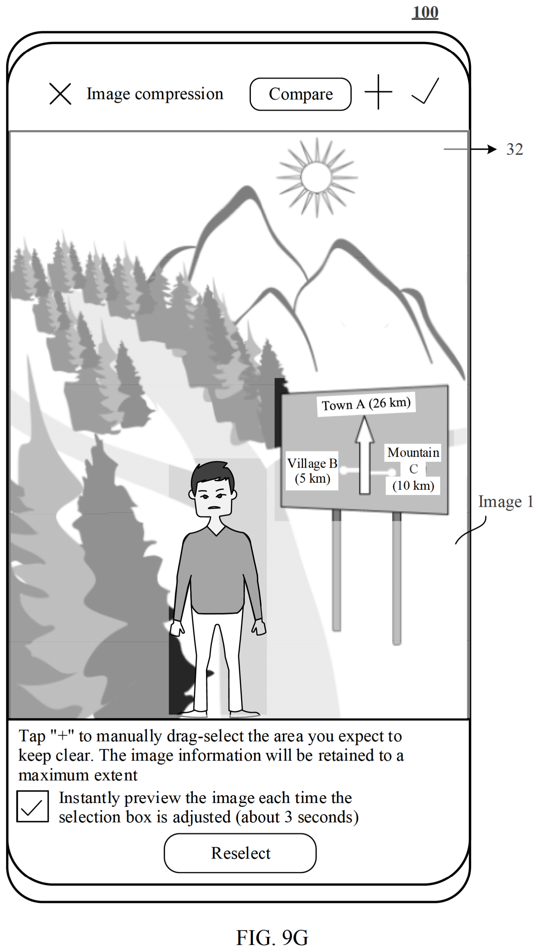

As shown in FIG. 9D and FIG. 9E, after detecting that the user taps the add control 816 again, the terminal device 100 displays a selection box 815 of another key area. As shown in FIG. 9F, the user may adjust a location, a size, and a shape of the selection box 815, so that the selection box 815 includes the person in the image 1. As shown in FIG. 9G, after the preset duration since the user stops adjusting the selection box 815, the terminal device 100 obtains and displays the compressed preview image of the image 1 based on the location of the selection box 814 and the location of the selection box 815. Image definitions of areas corresponding to the selection box 814 and the selection box 815 in the compressed preview image are higher than an image definition of another area.

In this embodiment of this application, that the terminal device 100 performs compression preview processing on the image 1, to obtain the compressed preview image of the image 1 includes: performing compression on the image 1 by using a preset compression algorithm, to obtain compressed data a of the image 1; and performing decompression processing on the compressed data a of the image 1, to obtain the compressed preview image of the image 1. In Interface Embodiment 3, in a process in which the terminal device 100 compresses the image 1, the terminal device 100 does not compress the key area in the selection box, performs lossless compression on the key area in the selection box, or performs lossy compression on the key area in the selection box based on a second loss rate, and performs lossy compression on the non-key area outside the selection box based on a first loss rate, where the first loss rate is higher than the second loss rate. In this way, an image definition of the key area corresponding to the selection box on the compressed preview image is higher than an image definition of the non-key area, so that the user can effectively obtain the image information in the key area.

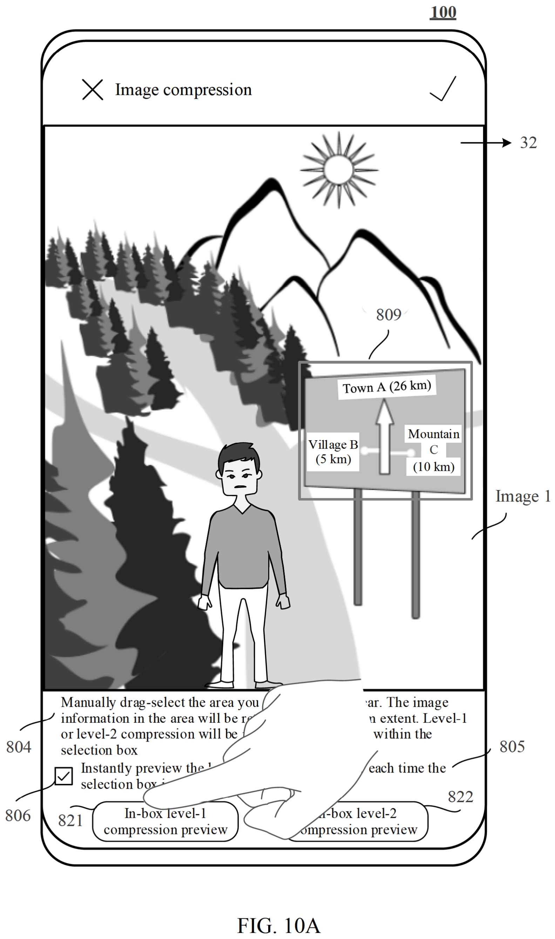

In some embodiments, when the user adjusts, by using a selection box, a key area that the user expects to keep clear, for the key area corresponding to the selection box, the terminal device 100 provides options of different compression levels, for example, a level-1 compression option 821 and a level-2 compression option 822 shown in FIG. 10A. Compared with the level-2 compression, the key area corresponding to the selection box on the compressed preview image obtained through level-1 compression has a higher definition.

For example, as shown in FIG. 10A, the prompt information 804 may further indicate to perform level-1 or level-2 compression on the key area in the selection box. The prompt information 805 may further indicate that when the selection control 806 is in the selected state, the terminal device 100 may automatically perform level-2 compression on the key area in the selection box each time after the preset duration since the selection box is adjusted. It may be understood that the user may alternatively manually select a compression level for the key area by using the level-1 compression option 821 and the level-2 compression option 822.

In an implementation, the level-1 compression option 821 indicates not to perform compression processing on the key area, and the level-2 compression option 822 indicates to perform lossless compression processing on the key area.

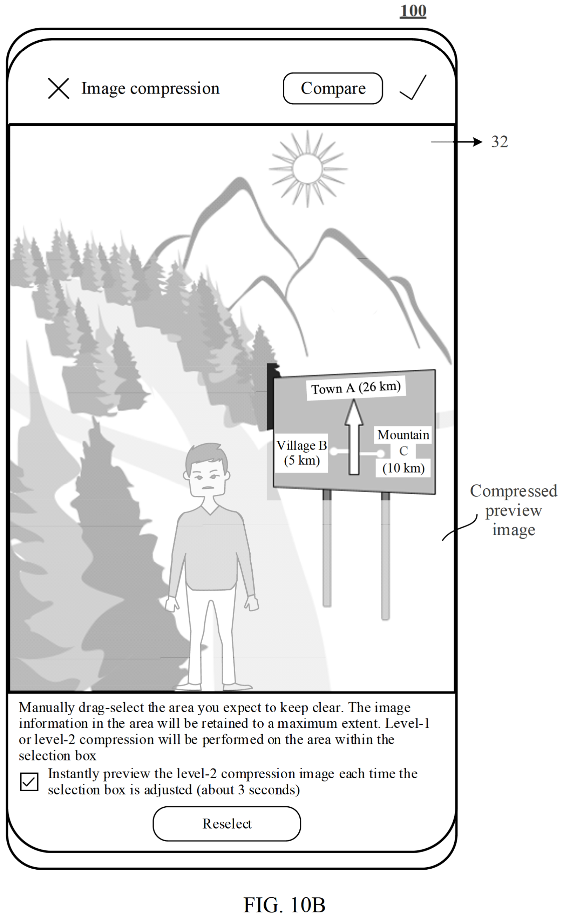

For example, as shown in FIG. 10A and FIG. 10B, after the user adjusts the selection box 809, the terminal device 100 receives an operation of tapping the level-1 compression preview option 821, and performs compression preview processing on the image 1 in response to the operation, to obtain the compressed preview image corresponding to the image 1. The compressed preview image is the same as an image of the key area corresponding to the selection box 809 in the image 1. In an implementation, that the terminal device 100 obtains the compressed data a of the image 1 includes: performing lossy compression on the non-key area of the image 1 by using the preset compression algorithm, to obtain compressed data a1 of the non-key area of the image 1, and obtain image data a2 of the key area of the image 1. The compressed data a of the image 1 includes the compressed data a1 and the image data a2. That the terminal device 100 decompresses the compressed data a of the image 1, to obtain the compressed preview image corresponding to the image 1 includes: performing decompression processing on the compressed data a1 of the non-key area by using the preset compression algorithm, and synthesizing the compressed preview image based on the image data a2 and image data obtained through decompression.

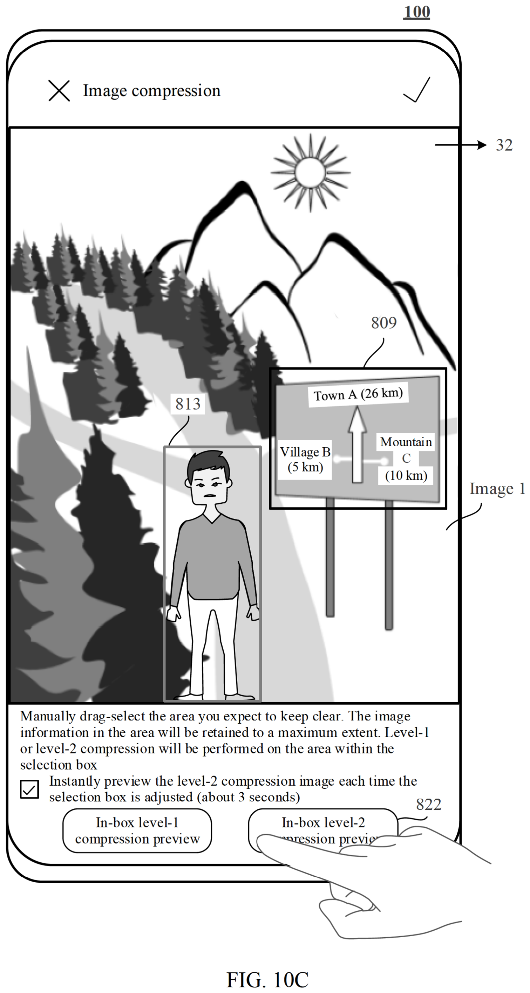

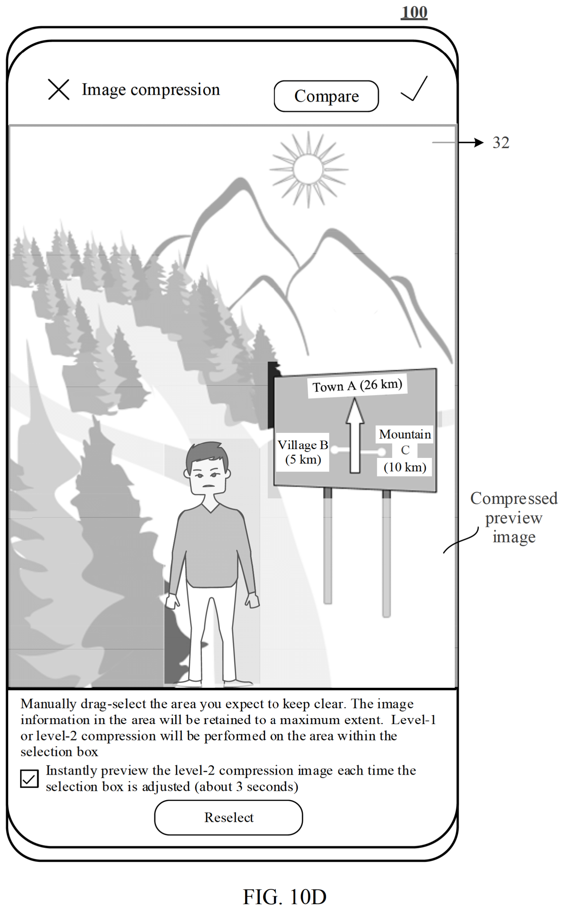

For example, as shown in FIG. 10C and FIG. 10D, after the user adjusts the selection box 813, the terminal device 100 receives an operation of tapping the level-2 compression preview option 822, and performs compression preview processing on the image 1 in response to the operation, to obtain the compressed preview image of the image 1. Compared with the non-key area of the compressed preview image, the key area corresponding to the selection box 813 in the compressed preview image has a higher image definition. Compared with the key area corresponding to the selection box 809, the key area corresponding to the selection box 813 has a lower image definition. In an implementation, that the terminal device 100 obtains the compressed data a of the image 1 includes: performing lossy compression on the non-key area of the image 1 by using a preset compression algorithm 1, to obtain the compressed data a1 of the non-key area of the image 1; and performing lossless compression on the key area of the image 1 by using a preset compression algorithm 2 for the level-2 compression, to obtain compressed data a3 of the key area of the image 1. The compressed data a of the image 1 includes the compressed data a1 and the compressed data a3. That the terminal device 100 decompresses the compressed data a of the image 1, to obtain the compressed preview image of the image 1 includes: performing decompression processing on the compressed data a1 of the non-key area by using the preset compression algorithm 1, to obtain image data 1 of the non-key area; performing decompression processing on the compressed data a3 of the key area by using the preset compression algorithm 2, to obtain image data 3 of the key area; and synthesizing the compressed preview image based on the image data 1 and the image data 3.

In another implementation, the level-1 compression option 821 indicates not to perform compression processing on the key area, and the level-2 compression option 822 indicates to perform lossy compression on the key area based on the second loss rate, where the second loss rate is lower than the first loss rate.

In another implementation, the level-1 compression option 821 indicates to perform lossy compression on the key area based on a loss rate 1, and the level-2 compression option 822 indicates to perform lossy compression on the key area based on a loss rate 2, where the loss rate 1 is lower than the loss rate 2, and the loss rate 2 is lower than the first loss rate.

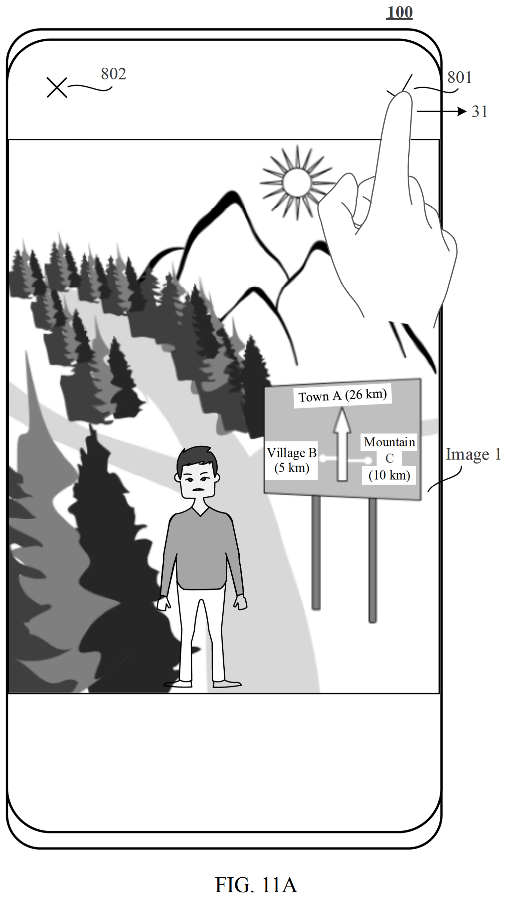

For example, FIG. 11A to FIG. 11D show related user interfaces of the terminal device 100 for automatically identifying the key area of the image 1.

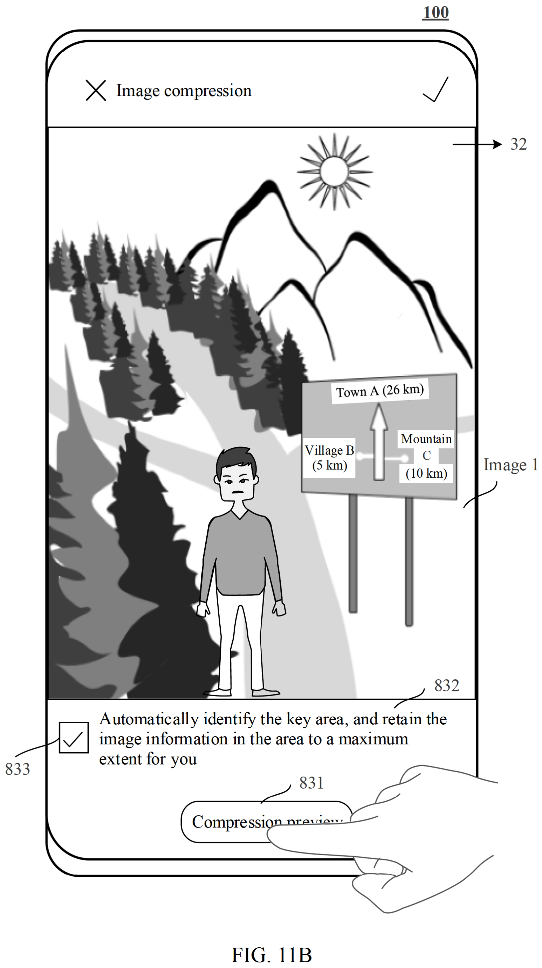

As shown in FIG. 11A and FIG. 11B, after the user taps the confirmation control 801, the compression preview interface 32 displayed by the terminal device 100 includes the image 1, a compression preview control 831, prompt information 832, and a selection control 833. The prompt information 832 indicates "When the selection control 833 is selected, the terminal device 100 may automatically identify the key area, and retain image information in the area to a maximum extent for you". As shown in FIG. 8C, the selection control 833 is currently in a selected state, and the user may control, through a preset operation (for example, a tap operation) performed on the selection control 833, the selection control 833 to switch between the selected state and an unselected state.

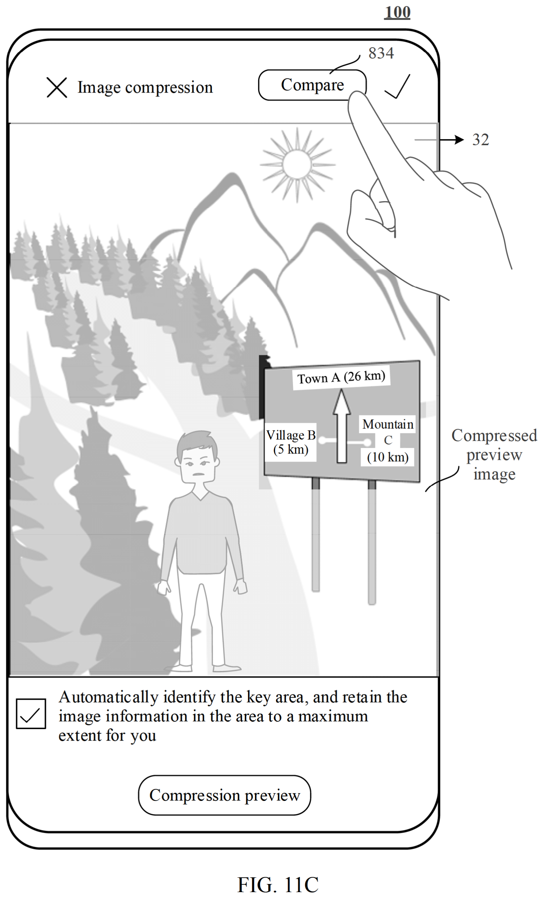

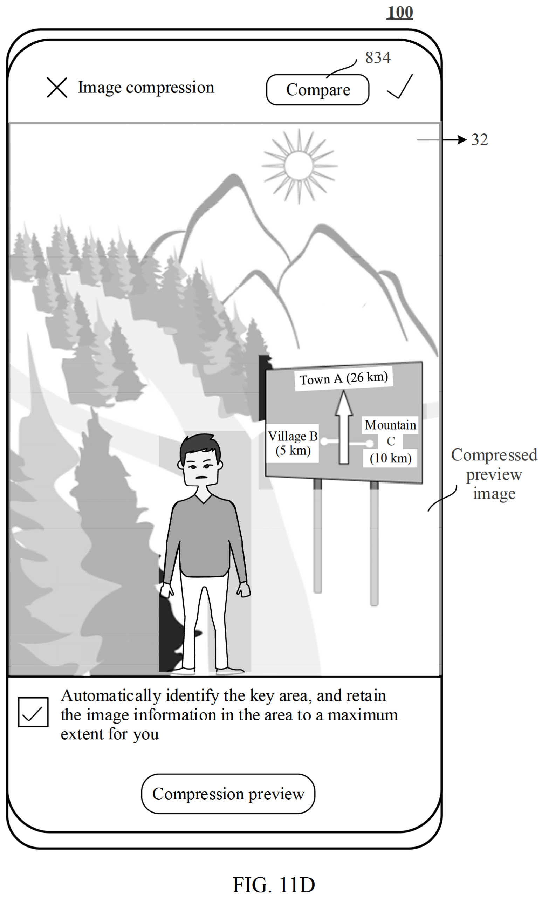

As shown in FIG. 11B, the terminal device 100 detects an operation of tapping the compression preview control 831, and displays the selection box 809 of the key area in response to the operation. The terminal device 100 automatically identifies the key area of the image 1, and obtains and displays the compressed preview image of the image 1 shown in FIG. 11C or FIG. 11D. An image definition of the key area of the compressed preview image is higher than an image definition of another area. In an implementation, the terminal device 100 automatically identifies the key area of the image 1 based on a preset configuration file, where the preset configuration file indicates one or more preset objects. For example, the preset object indicated by the preset configuration file includes a road sign, and does not include a person. The terminal device 100 displays the compressed preview image shown in FIG. 11C, and the road sign is displayed in the key area of the compressed preview image. For example, the preset object indicated by the preset configuration file includes the road sign and the person. The terminal device 100 displays the compressed preview image shown in FIG. 11D. The compressed preview image includes two key areas, and the road sign and the person are respectively displayed in the two key areas.

### Interface embodiment 4

In Interface embodiment 4, a terminal device 100 may extract text information 2 in a key part 1 of rich media information 1, and display the text information 2 on a compression preview interface, and/or include the text information 2 in a BeiDou satellite message sent to a recipient. The rich media information 1 may include one or more key parts, and the key part 1 is any one of the one or more key parts.

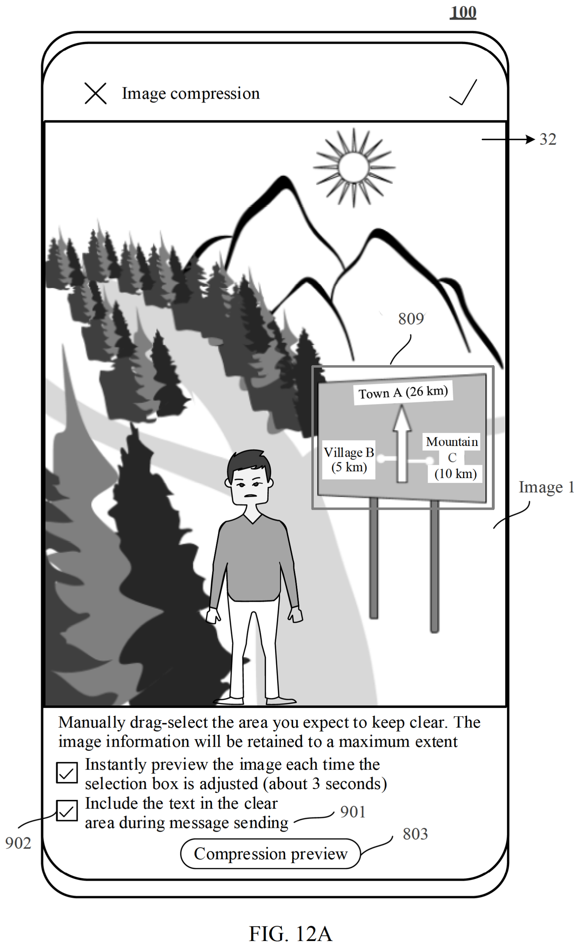

For example, the rich media information 1 is an image 1. FIG. 12A to FIG. 12H show related user interfaces for extracting text information in a key area of the image 1 by the terminal device 100.

As shown in FIG. 12A, a compression preview interface 32 may further include prompt information 901 and a selection control 902. The prompt information 901 indicates "When the selection control 902 is selected, the terminal device 100 may extract text information in an area that a user expects to keep clear, and include the text information in a message to be sent". As shown in FIG. 12A, the selection control 902 is currently in a selected state, and the user may control, by using an input operation (for example, a tap operation), a selection control 806 to switch between the selected state and an unselected state.

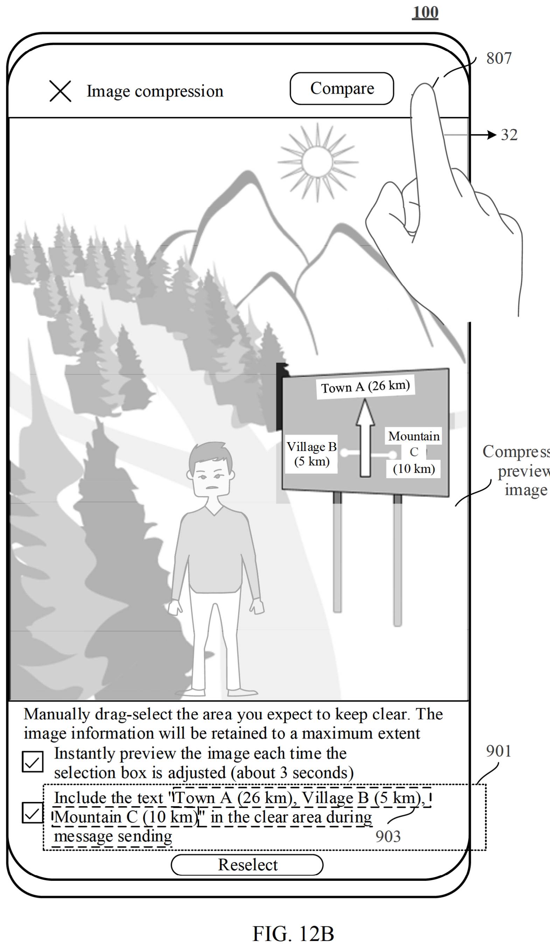

As shown in FIG. 12A and FIG. 12B, a selection box 809 of the key area includes a road sign in the image 1. When detecting that duration since the user stops adjusting the selection box 809 reaches preset duration or the user taps a compression preview control 803, the terminal device 100 performs compression preview processing on the image 1 based on a location of the selection box 809, obtains and displays a compressed preview image of the image 1, and extracts and displays text information 903 of the key area in the selection box 809. Optionally, as shown in FIG. 12B, the terminal device 100 may display the text information 903 in the prompt information 901.

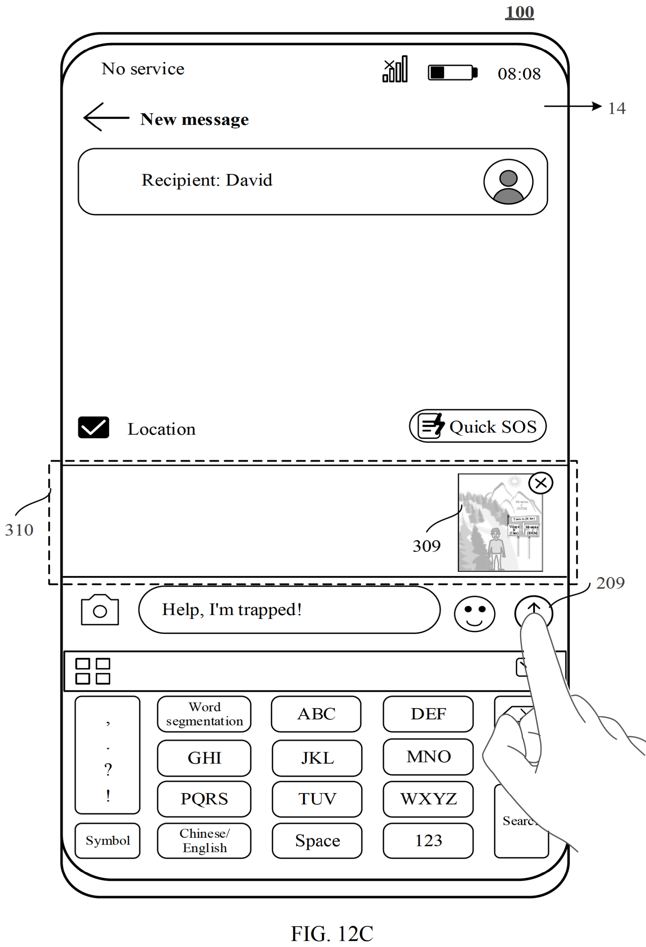

As shown in FIG. 12B and FIG. 12C, when displaying the compressed preview image of the image 1, the terminal device 100 receives an operation of tapping a confirmation control 807 by the user; and in response to the operation, displays an icon 309 of the compressed preview image in a display area 310 of an information creation interface 14, and adds the compressed preview image to message content 1 of a BeiDou satellite message 1.

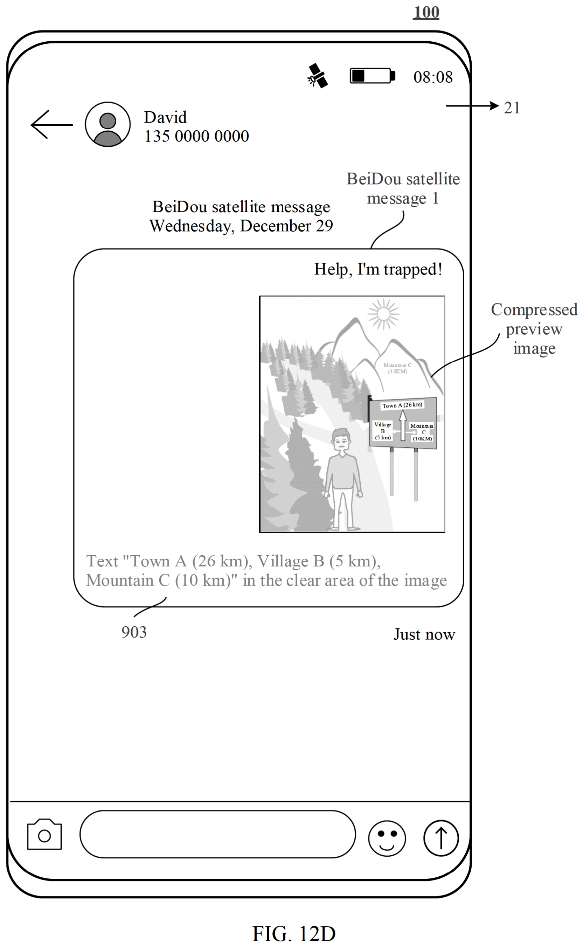

As shown in FIG. 12C, the terminal device 100 receives an operation of tapping a sending control 209 by the user, and sends the edited message content 1 of the BeiDou satellite message 1 to a terminal device 200 of the recipient through a satellite communication system 10 in response to the operation. As shown in FIG. 12D, after sending the message, the terminal device 100 may display an information interface 21 of the recipient. The information interface 21 displays the sent message content 1 of the BeiDou satellite message 1, and the message content 1 includes the compressed preview image of the image 1 and the text information 903 of the key area.

In this embodiment of this application, the terminal device 100 may receive the BeiDou satellite message 1 by using a MeeTime APP/Messaging APP. For details, refer to related descriptions in FIG. 3A to FIG. 3G. The MeeTime APP is used as an example. After obtaining the BeiDou satellite message 1, the MeeTime APP on the terminal device 200 of the recipient displays message content 2 of the BeiDou satellite message 1 on an information interface 23 of a sender.

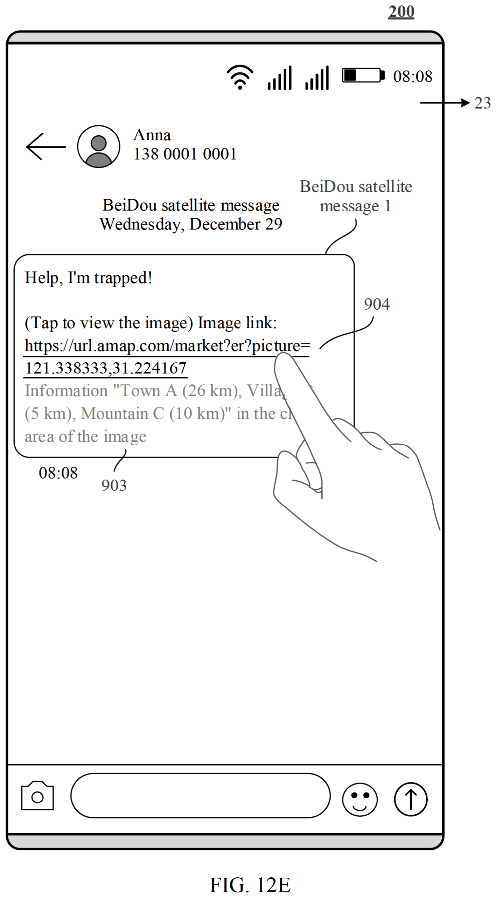

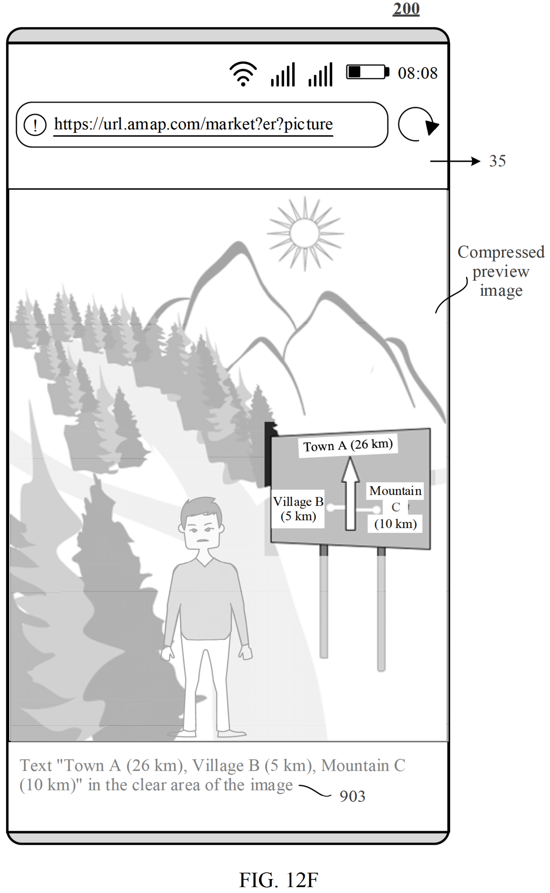

For example, as shown in FIG. 12E and FIG. 12F, the message content 2 includes a web address link 904 of the compressed preview image of the image 1 and the text information 903 of the key area. The terminal device 100 receives an operation of tapping the web address link 904 by the user, and obtains and displays a web page 35 corresponding to the web address link 904 in response to the operation. The compressed preview image of the image 1 and the text information 903 of the key area of the compressed preview image are displayed on the web page 35. Optionally, the text information 903 may not be displayed on the web page 35.

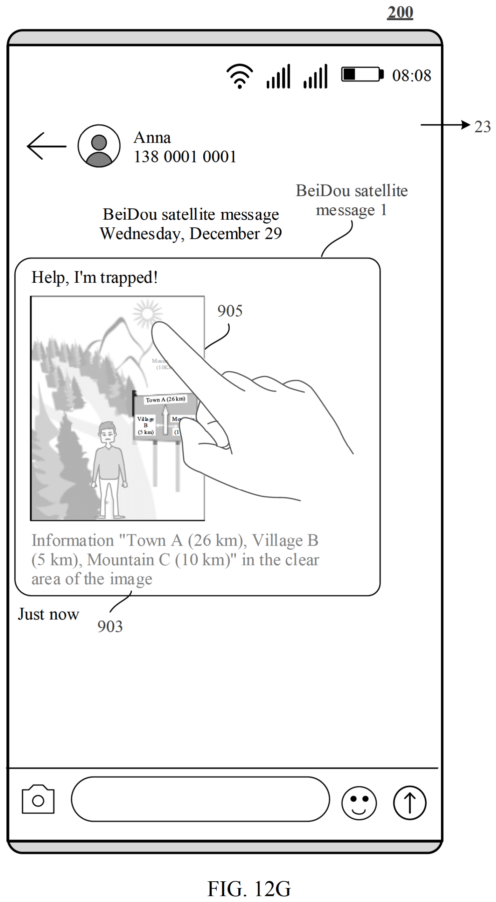

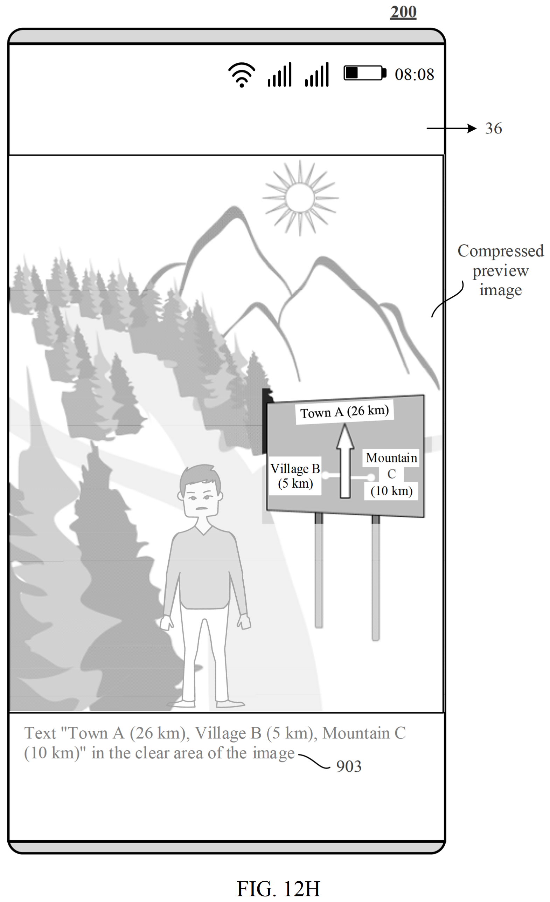

For example, as shown in FIG. 12G and FIG. 12H, the message content 2 includes a sketch 905 of the compressed preview image of the image 1 and the text information 903 of the key area. The terminal device 100 receives an operation of tapping the sketch 905 by the user, and displays the compressed preview image of the image 1 and the text information 903 of the key area on a user interface 36 in response to the operation. Optionally, the text information 903 may not be displayed on the user interface 36.

In some embodiments, the text information 2 extracted from the key part 1 of the rich media information 1 may be further used to assist in obtaining rich media information 2, to enhance accuracy and a definition of a text in a key part 1 of the rich media information 2. In an implementation, that the terminal device 100 decompresses compressed data of the rich media information 1 may include: decompressing the compressed data of the rich media information 1 by using a decompression algorithm corresponding to a preset compression algorithm, to obtain rich media information 3; and performing identification and enhancement processing on a text in a key part 1 of the rich media information 3 by using a text enhancement algorithm and the text information 2, to obtain rich media information 4 obtained through enhancement processing. Optionally, the rich media information 4 is the rich media information 2. Optionally, overall enhancement may be further performed on the rich media information 4 by using a preset rich media information enhancement algorithm (for example, the foregoing image enhancement algorithm, video enhancement algorithm, or audio enhancement algorithm), to obtain the overall enhanced rich media information 2.

It may be understood that locations of key parts 1 in the rich media information 1, the rich media information 2, the rich media information 3, and the rich media information 4 are the same. When the preset compression algorithm is a lossy compression algorithm, compared with the rich media information 1, the text indicated by the key part 1 in the rich media information 3 is vague. In this case, enhancement processing is performed by using the text information 2 extracted in advance, so that accuracy and a definition of the text can be improved. The text enhancement algorithm may be a trained neural network algorithm. The text enhancement algorithm is not specifically limited in embodiments of this application.

It may be understood that when the rich media information 1 is the image 1 or a video 1, the text information 2 may be a text displayed in a key part of the image 1 or the video 1, and the text information 2 may be used to improve accuracy and a definition of the text displayed in the key part. When the rich media information 1 is the video 1 or an audio 1, the text information 2 may be a voice played in a key part of the video 1 or the audio 1, and the text information 2 may be used to improve accuracy and a clarity of the speech played in the key part.

In Interface embodiment 4, the terminal device 100 may use a same lossy compression algorithm for both a key part and a non-key part of the rich media information 1, or may use lossy compression algorithms with different loss rates. This is not specifically limited herein.

Similarly, when the rich media information 1 is the video 1, the terminal device 100 may extract text information in the key part of the video 1. When the rich media information 1 is the audio 1, the terminal device 100 may extract text information corresponding to the key part (for example, a sound made by a preset object) of the audio 1.

It should be noted that related user interfaces and technical solutions described in Interface embodiment 2 to Interface embodiment 4 may also be adaptively extended, to be applicable to a video and an audio. Details are not described herein again. In Interface embodiment 2 to Interface embodiment 4, specific embodiments of a same interface may be combined with each other. As shown in FIG. 2A to FIG. 12H, user interfaces in Interface embodiment 1 to Interface embodiment 4 are example interfaces provided in embodiments of this application, and should not constitute a limitation on embodiments of this application. In embodiments of this application, a same user interface may include more or fewer interface elements.

Operations (for example, a tap operation and a touch operation) in embodiments of this application are example operations used to implement specified functions. The terminal device 100/the terminal device 200 may also implement the specified functions by using other operations. For example, the other operations may alternatively be another touch operation, a stylus operation, a double-tap operation, a gesture operation, and a speech instruction. The other operations are not specifically limited in embodiments of this application.

With reference to the foregoing satellite communication system and application scenario, the following describes in detail the satellite communication method provided in embodiments of this application.

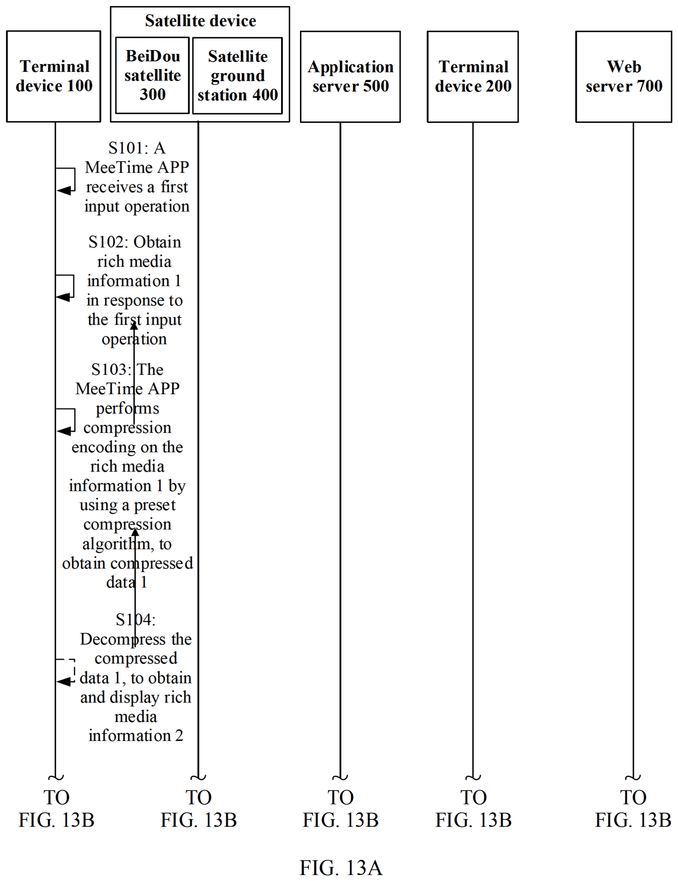

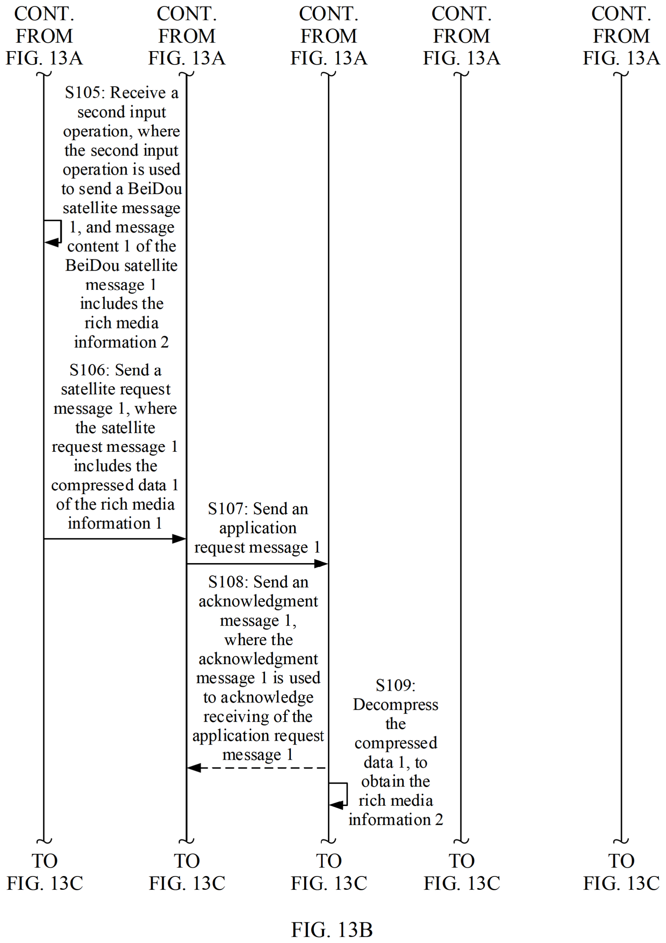

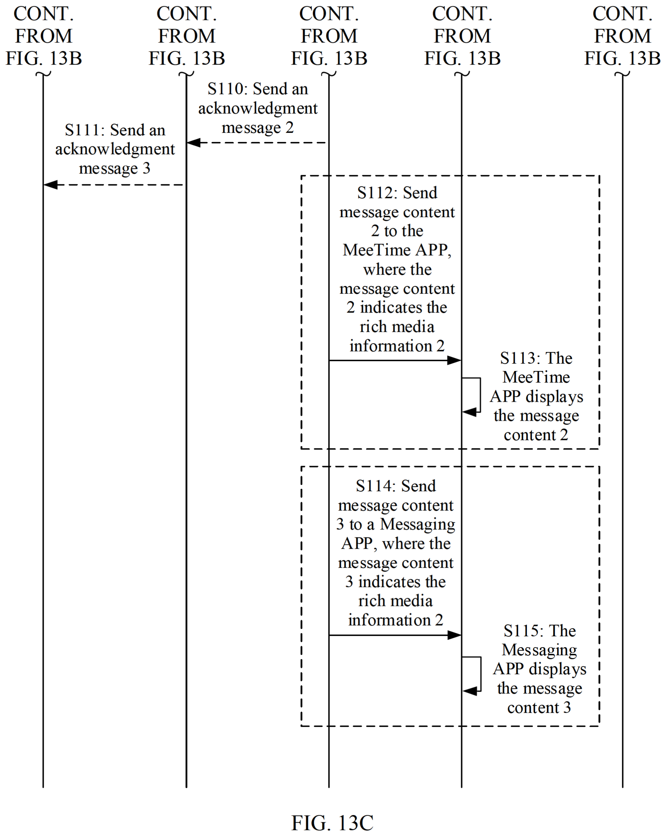

For example, FIG. 13 A to FIG. 13C are a method flowchart of a satellite communication method according to an embodiment of this application. The method includes some or all of steps S101 to S115. The following describes in detail possible implementations of the method.

S101: A MeeTime APP on a terminal device 100 receives a first input operation.

S102: The MeeTime APP on the terminal device 100 obtains rich media information 1 in response to the first input operation.

In this embodiment of this application, a user may edit a BeiDou satellite message 1 by using the MeeTime APP on the terminal device 100, may add text information and location information to the BeiDou satellite message 1, and may further add rich media information, for example, the rich media information 1. The rich media information may be information of a type like an image, a video, an audio, or an animation. This is not specifically limited in embodiments of this application. One or more pieces of rich media information may be added to the BeiDou satellite message 1, and types of any two of the plurality of pieces of rich media information may be the same or may be different. For example, the BeiDou satellite message 1 includes a plurality of images. For example, the BeiDou satellite message 1 includes an image and a video.

For example, with reference to related descriptions in FIG. 2A to FIG. 2I, a sender may create the BeiDou satellite message 1 by using the MeeTime APP on the terminal device 100, select a recipient of the BeiDou satellite message 1 on an information creation interface 14, and edit message content 1 of the BeiDou satellite message 1. When the message content 1 is edited, the rich media information 1 may be obtained, so that compressed preview information of the rich media information 1 (namely, rich media information 2) is added to the message content 1.

Refer to related descriptions in FIG. 2E to FIG. 2I. The rich media information 1 may be an image 1 shot in real time, and the first input operation is used to shoot the image 1. As shown in FIG. 2E, the information creation interface 14 may include a camera control 210. The user may trigger, via the camera control 210, the terminal device 100 to display a photographing preview interface 15. The photographing preview interface 15 includes a photographing control 304. The first input operation may include an operation (for example, a tap operation) performed on the photographing control 304.

Refer to related descriptions in FIG. 4B. The rich media information 1 may alternatively be an image in a local gallery, a video in the local gallery, a video shot in real time, an audio recorded in real time, or the like.

Refer to related descriptions in FIG. 4A to FIG. 4I. The rich media information 1 may be a video 1 in a local gallery, and the first input operation is used to select the video 1 from the local gallery. The information creation interface 14 may include a video control 605. The user may trigger, via the video control 605, the terminal device 100 to display a cover of each video in the local gallery, for example, a cover 608 of the video 1. The first input operation may include an operation (for example, a tap operation) performed on the cover 608 of the video 1.

Refer to related descriptions in FIG. 5A to FIG. 5F. The rich media information 1 may include an audio 1 recorded by the user, and the first input operation is used to obtain the audio 1 recorded in real time. The information creation interface 14 may include an audio recording control 606. The user may trigger, via the audio recording control 606, the terminal device 100 to display an audio recording interface 27. The audio recording interface 27 is used to record an audio. The audio recording interface 27 includes a confirmation control 702. The confirmation control 702 is used to confirm the recorded audio 1. The first input operation may include an operation (for example, a tap operation) performed on the confirmation control 702.

S103: The MeeTime APP on the terminal device 100 performs compression encoding on the rich media information 1 by using a preset compression algorithm, to obtain compressed data 1.

In some embodiments, the terminal device 100 may provide a plurality of compression algorithms, and the terminal device 100 may select an appropriate compression algorithm based on a preset policy to perform compression encoding on the rich media information 1.

In an implementation, the plurality of compression algorithms include compression algorithms respectively for an image, a video, and an audio. The terminal device 100 may select the preset compression algorithm from the plurality of compression algorithms based on an information type of the rich media information 1. For example, the rich media information 1 is the image 1, and the preset compression algorithm is the compression algorithm for the image.

In some embodiments, the preset compression algorithm is a large-scale compression encoding algorithm, and a data amount of the compressed data 1 may be controlled to be 1 KB or even smaller. In an implementation, the preset compression algorithm uses a biological vision information processing engine (biological vision information processing engine, NVPE). The engine is a processing engine trained using a large quantity of pictures. When an input of the engine is the rich media information 1, an output is the compressed data 1. In this embodiment of this application, another compression algorithm may alternatively be used. This is not specifically limited herein.

In some embodiments, the preset compression algorithm is a lossy compression algorithm, the compressed data 1 is lossy compressed data, and the rich media information 2 obtained by decompressing the compressed data 1 may be considered as the lossy rich media information 1.

In some embodiments, the terminal device 100 provides a lossy compression algorithm and a lossless compression algorithm. Compressed data obtained by performing lossless compression on the rich media information 1 by using the lossless compression algorithm may be directly decompressed into the rich media information 1. When the terminal device 100 determines that a data amount of the compressed data obtained by performing lossless compression on the rich media information 1 is less than a maximum data amount that is in a single transmission and that is supported by a satellite device, the terminal device 100 compresses the rich media information 1 by using the lossless compression algorithm. Otherwise, the terminal device 100 compresses the rich media information 1 by using the lossy compression algorithm, so that a data amount of lossy compressed data is less than the maximum data amount that is in a single transmission and that is supported by the satellite device.

S104: The MeeTime APP on the terminal device 100 decompresses the compressed data 1, to obtain and display the rich media information 2, where the rich media information 2 is used by the sender to preview rich media information that corresponds to the rich media information 1 and that is actually received by the recipient.

In some embodiments, step S104 specifically includes: The terminal device 100 decompresses the compressed data 1 by using a decompression algorithm corresponding to the preset compression algorithm, to obtain the rich media information 2 obtained through decompression. The rich media information 2 is the lossy rich media information 1. Compared with the rich media information 1, the rich media information 2 lacks details, but the rich media information 1 and the rich media information 2 may include same valid information.

In some embodiments, step S104 specifically includes: The terminal device 100 decompresses the compressed data by using the decompression algorithm corresponding to the preset compression algorithm, and after obtaining the rich media information obtained through decompression, performs enhancement processing on the rich media information obtained through decompression by using a preset enhancement algorithm, to obtain the rich media information 2 obtained through enhancement processing.

In some embodiments, in response to the first input operation, the terminal device 100 performs S103 to perform compression encoding on the rich media information 1, to obtain the compressed data 1. The terminal device 100 receives a third input operation, and performs S104 in response to the operation, to decompress the compressed data 1, so as to obtain the compressed preview information of the rich media information 1, namely, the rich media information 2.

In some embodiments, in response to the first input operation, the terminal device 100 performs S103 and S104, to be specific, performs compression encoding and decompression processing on the rich media information 1, to obtain the rich media information 2. It may be understood that, after obtaining the rich media information 1, the terminal device 100 automatically performs compression encoding and decompression processing on the obtained rich media information 1 by using the preset compression algorithm, to obtain the rich media information 2.

In some embodiments, the MeeTime APP on the terminal device 100 receives the third input operation. In response to the third input operation, the terminal device 100 performs S103 and S104, to be specific, performs compression encoding and decompression processing on the rich media information 1, to obtain the rich media information 2.

In Interface embodiment 1, refer to related descriptions in FIG. 2G and FIG. 2H. The rich media information 1 may be the image 1, the rich media information 2 may be an image 2/image 3, and the third input operation may include an operation (for example, a tap operation) performed on a compression preview control 306. Refer to related descriptions in FIG. 4D to FIG. 4H. The rich media information 1 may be the video 1, the rich media information 2 may be a video 2/video 3, and the third input operation may include an operation (for example, a tap operation) performed on a compression preview control 611. Refer to related descriptions in FIG. 5D and FIG. 5E. The rich media information 1 may be the audio 1, the rich media information 2 may be an audio 2/audio 3, and the third input operation may include an operation (for example, a tap operation) performed on a compression pre-listening control 704.

In Interface Embodiment 2, for example, the rich media information 1 is the image 1. Refer to related descriptions in FIG. 7A to FIG. 7D, the terminal device 100 provides a plurality of compression levels, and the plurality of compression algorithms include compression algorithms respectively corresponding to the plurality of compression levels. In steps S103 and S104, the terminal device 100 may perform compression encoding and decompression processing on the image 1 by using a compression algorithm corresponding to a compression level selected by the user. For example, as shown in FIG. 7C and FIG. 7D, the user selects level-2 compression, the third input operation may include an operation (for example, a tap operation) performed on a level-2 compression preview control 842, and the preset compression algorithm is a compression algorithm for level-2 compression.

In Interface embodiment 3, refer to related descriptions in FIG. 8A to FIG. 9G. The rich media information 1 includes one or more key parts and a non-key part. For example, the rich media information 1 is the image 1. The image 1 includes a key area 1 and a non-key area. The third input operation may include an operation of generating/adjusting a selection box of the key area 1. Alternatively, after the selection box of the key area 1 is generated/adjusted, the third input operation may include an operation (for example, a tap operation) performed on a compression preview control 803. In step S103, the terminal device 100 performs lossy compression on the non-key area of the image 1 based on a first loss rate by using a preset compression algorithm 1, to obtain compressed data a1 of the non-key area, where the compressed data a of the image 1 includes the compressed data a1. In step S104, the terminal device 100 decompresses the compressed data a1 by using the preset compression algorithm 1, to obtain image data a1 of the non-key area obtained through decompression processing. The terminal device 100 may perform no compression on the key area 1 of the image 1, lossless compression on the key area 1 of the image 1, or lossy compression on the key area 1 of the image 1 based on a second loss rate. The second loss rate is lower than the first loss rate. For details, refer to the following implementation 1 to implementation 3.

In the implementation 1, the terminal device 100 does not compress the key area 1 of the image 1, and the compressed data a of the image 1 further includes image data of the key area 1 of the image 1. In step S104, the terminal device 100 synthesizes a compressed preview image of the image 1 based on the image data a1 of the non-key area and the image data of the key area 1 of the image 1.

In the implementation 2, the terminal device 100 performs lossless compression on the key area 1 of the image 1 by using a preset compression algorithm 2, to obtain compressed data a2 of the key area 1, where the compressed data 1 of the image 1 includes the compressed data a1 of the non-key area and the compressed data a2 of the key area 1. In step S104, the terminal device 100 decompresses the compressed data a2 by using the preset compression algorithm 2, to obtain image data a2 of the key area 1, and the terminal device 100 synthesizes the compressed preview image of the image 1 based on the image data a1 of the non-key area and the image data a2 of the key area 1. The image 1 is the same as an image in the key area 1 of the compressed preview image.

In the implementation 3, the terminal device 100 performs lossy compression on the key area 1 of the image 1 based on the second loss rate by using a preset compression algorithm 3, to obtain the compressed data a2 of the key area 1, where the second loss rate is lower than the first loss rate, and the compressed data 1 of the image 1 includes the compressed data a1 of the non-key area and the compressed data a2 of the key area 1. In step S104, the terminal device 100 decompresses the compressed data a2 by using the preset compression algorithm 2, to obtain the image data a2 of the key area 1, and the terminal device 100 synthesizes the compressed preview image of the image 1 based on the image data a1 of the non-key area and the image data a2 of the key area 1. Compared with the non-key area of the compressed preview image, the key area 1 of the compressed preview image has a higher image definition. Compared with that of the image 1, the key area 1 of the compressed preview image has a lower image definition.

In some embodiments, before step S104, the terminal device 100 further extracts text information from the key part of the rich media information 1, for example, extracts first text information from a first key part of the rich media information 1. The first text information may be used to assist in obtaining the rich media information 2 in a decompression processing process, to enhance accuracy and a clarity of a text indicated by a first key part of the rich media information 2. For details, refer to related descriptions in Interface embodiment 4. Details are not described herein again.

In Interface embodiment 3, refer to related descriptions in FIG. 10A to FIG. 10D. A plurality of compression levels may be provided for the key area, and the terminal device 100 may perform compression and decompression processing on the key area by using a compression algorithm corresponding to a compression level selected by the user.

In this embodiment of this application, the terminal device 100 obtains and displays the rich media information 2, so that the sender previews, in advance, the compressed preview information of the rich media information 1 that can be actually received by the recipient, namely, the rich media information 2, to determine whether the rich media information 2 conveys the valid information in the rich media information 1. Step S104 is optional. Alternatively, the terminal device 100 may not need to obtain and preview the compressed preview information of the rich media information 1, namely, the rich media information 2.

S105: The terminal device 100 receives a second input operation, where the second input operation is used to send the BeiDou satellite message 1 edited by the user, and the message content 1 of the BeiDou satellite message 1 includes the rich media information 2.

For example, with reference to related descriptions in FIG. 2I, the second input operation includes an operation (for example, a tap operation) performed on a sending control 209.

S106: The terminal device 100 sends a satellite request message 1 to the satellite device, where the satellite request message 1 includes the compressed data 1 of the rich media information 1, the compressed data 1 is used to obtain the rich media information 2, and the satellite request message 1 is used to transmit the message content 1 of the BeiDou satellite message 1 to the recipient.

In some embodiments, the satellite device includes a BeiDou satellite 300 and a satellite ground station 400. That the terminal device 100 sends the satellite request message 1 to the satellite device includes: The terminal device 100 sends the satellite request message 1 to the BeiDou satellite 300; and the BeiDou satellite 300 sends the satellite request message 1 to the satellite ground station 400.

In some embodiments, the data amount of the compressed data 1 obtained by using the preset compression algorithm is less than a maximum data amount that is in a single transmission and that is supported by the BeiDou satellite 300.

In some embodiments, the data amount of the compressed data 1 obtained by using the preset compression algorithm may be greater than the maximum data amount that is in a single transmission and that is supported by the BeiDou satellite 300. When the data amount of the compressed data 1 is greater than the maximum data amount in the single transmission, the compressed data 1 is split into a plurality of data packets, and a data amount of each data packet is less than the data amount in the single transmission. In step S106, the plurality of data packets are sequentially sent to the BeiDou satellite 300 a plurality of times.

In this embodiment of this application, the satellite request message 1 includes the compressed data 1 of the rich media information 1, and the compressed data 1 of the rich media information 1 is used to obtain the rich media information 2 in the message content 1. The satellite request message 1 may further include an account of the sender and an account of the recipient of the BeiDou satellite message 1. The satellite request message 1 may further include non-rich media information in the message content 1, for example, text information and location information. The satellite request message 1 may further include an algorithm identifier of the preset compression algorithm. The account may be an account of the MeeTime APP, or may be a mobile phone number.

In some embodiments, the terminal device 100 extracts the text information indicated by the key part of the rich media information 1, and the satellite request message 1 further includes the text information. For example, as shown in FIG. 12B, the rich media information 1 is the image 1, the key part of the image 1 includes a road sign, and the road sign indicates the following text information: "Town A (26 km), Village B (5 km), Mountain C (10 km)".

In this embodiment of this application, when editing the message content 1 of the BeiDou satellite message 1, the user may obtain a plurality of pieces of rich media information, and the terminal device 100 may separately compress the plurality of pieces of rich media information, to obtain compressed data corresponding to all the pieces of rich media information, and include the compressed data of all the pieces of rich media information in the satellite request message 1. For example, the plurality of pieces of rich media information include the image 1 and the video 1, and the satellite request message 1 includes the compressed data a of the image 1 and compressed data b of the video 1.

In some embodiments, application layer encoding is performed on the compressed data 1 of the rich media information 1 and the non-rich media information (for example, the text information and the location information) in the message content 1 according to a communication protocol of the BeiDou satellite 300, to generate the satellite request message 1. For example, the rich media information 1 is an image. Table 1 shows some fields of the satellite request message 1.

**Table 1**

| Another field... | | | |
|---|---|---|---|
| Whether an image is included | Sign bit | 1 bit | 0: including an image; 1: including no image |
| Image | Sign | 2 | 2 bits, where a maximum |
| compression algorithm | bit | bits | of four compression algorithms may be supported |
| Icon data length | Value | 8 bits | Value ranging from 0 to 1024, indicating bytes (Bytes) of a length of subsequent compressed data of the image |
| Compressed data of the image | Data | N bytes | Compressed data, obtained by performing compression encoding on an image, occupying N bytes (Bytes), where N is a value corresponding to a previous field |
| Another field... | | | |

In some embodiments, after the second input operation triggers the MeeTime APP to send the BeiDou satellite message 1, and before the terminal device 100 sends the satellite request message 1, the sender performs device calibration, satellite searching, and alignment based on an interface guide of the terminal device 100. After the satellite is aligned, the satellite request message 1 is sent to the satellite ground station 400 through the BeiDou satellite 300. For example, FIG. 2J to FIG. 2M show a group of user interfaces for device calibration, satellite searching, and alignment.

S107: The satellite device sends an application request message 1 to an application server 500. The application request message 1 is determined based on the satellite request message 1. The application request message 1 includes the compressed data 1 of the rich media information 1, the compressed data 1 is used to obtain the rich media information 2, and the application request message 1 is used to request to transmit the message content 1 of the BeiDou satellite message 1 to the recipient.

In some embodiments, the satellite ground station 400 receives the satellite request message 1 sent by the BeiDou satellite 300, generates the application request message 1, and sends the application request message 1 to the application server 500. The application request message 1 and the satellite request message 1 may include same valid information.

In this embodiment of this application, the application request message 1 includes the compressed data 1 of the rich media information 1, and the compressed data 1 of the rich media information 1 is used to obtain the rich media information 2 in the message content 1. The application request message 1 may further include some or all of the following: the account of the sender and the account of the recipient of the BeiDou satellite message 1, the non-rich media information in the message content 1, and the text information indicated by the key part of the rich media information 1.

For example, the application request message 1 also includes fields shown in Table 1.

In an implementation, the application request message 1 is a short packet inbound message.

S108: The application server 500 sends an acknowledgment message 1 to the satellite device, where the acknowledgment message 1 is used to acknowledge receiving of the application request message 1.

In some embodiments, the application server 500 sends the acknowledgment message 1 to the satellite ground station 400.

In an implementation, the acknowledgment message 1 is a system reception receipt corresponding to the application request message 1, and indicates acknowledgment of receiving of the application request message 1. In an implementation, the application request message 1 includes a message identifier (for example, a message ID) of the application request message 1, and the acknowledgment message 1 also includes the message identifier of the application request message 1, to indicate the application request message 1.

In some embodiments, the satellite ground station 400 determines whether the acknowledgment message 1 is received within preset duration 1 since the satellite request message 1 is sent to the application server 500 of the MeeTime APP. If the application request message 1 is not received, the application request message 1 is sent to the application server 500 again, to avoid a case in which the application server 500 does not receive the application request message 1. Step S108 is optional.

S109: The application server 500 decompresses the compressed data 1 by using the preset compression algorithm, to obtain the rich media information 2, and determines that the message content 1 of the BeiDou satellite message 1 includes the rich media information 2.

In some embodiments, after receiving the application request message 1, the application server 500 of the MeeTime APP obtains the message content 1 of the BeiDou satellite message 1 based on the application request message 1. Specifically, the application server 500 extracts the non-rich media information (for example, text information 1) of the BeiDou satellite message 1 and the compressed data of the rich media information (for example, the compressed data 1 of the rich media information 1) from the application request message 1. Then, the application server 500 decompresses the compressed data 1 by using the decompression algorithm corresponding to the preset compression algorithm, to obtain the rich media information 2. The application server 500 determines that the message content 1 of the BeiDou satellite message 1 includes the non-rich media information and the rich media information 2. For example, the rich media information 1 is the image 1, the rich media information 2 is the image 2 or image 3, and the image 2 and the image 3 are in a common image format, for example, jpeg or png.

In some embodiments, both the satellite request message 1 and the application request message 1 include the algorithm identifier of the preset compression algorithm. The application server 500 determines the preset compression algorithm based on the algorithm identifier, and then decompresses the compressed data 1 by using the decompression algorithm corresponding to the preset compression algorithm. In some embodiments, the satellite request message 1 and the application request message 1 do not need to include the algorithm identifier of the preset compression algorithm, and a related device in a satellite communication system compresses and decompresses the rich media information by using a specified preset compression algorithm.

For step S110, refer to the implementation of performing decompression processing on the compressed data 1 in step S104. Details are not described herein again.

S110: The application server 500 of the MeeTime APP sends an acknowledgment message 2 to the satellite device, where the acknowledgment message 2 indicates that the application server 500 has obtained the message content 1 of the BeiDou satellite message 1 indicated by the application request message 1.

In some embodiments, that the application server 500 of the MeeTime APP sends the acknowledgment message 2 to the satellite device includes: The application server 500 sends the acknowledgment message 2 to the satellite ground station 400, and the satellite ground station 400 sends the acknowledgment message 2 to the BeiDou satellite 300.

In an implementation, the acknowledgment message 2 is an application reception receipt of the application server 500.

In an implementation, the application request message 1 includes the message identifier of the application request message 1, and the acknowledgment message 2 also includes the message identifier of the application request message 1, to indicate the application request message 1.

S111: The satellite device sends an acknowledgment message 3 to the terminal device 100, where the acknowledgment message 3 indicates that the application server 500 has obtained the message content 1 of the BeiDou satellite message 1 indicated by the satellite request message 1.

In an implementation, the satellite request message 1 includes the message identifier of the satellite request message 1, and the acknowledgment message 3 also includes the message identifier of the satellite request message 1, to indicate the satellite request message 1. The terminal device 100 determines, based on the acknowledgment message 3, that the application server 500 has obtained the message content 1 of the BeiDou satellite message 1 indicated by the satellite request message 1. Steps S110 and S111 are optional.

S112: The application server 500 of the MeeTime APP sends message content 2 of the BeiDou satellite message 1 to the MeeTime APP on the terminal device 200, where the message content 2 indicates the message content 1 of the BeiDou satellite message 1, and includes the rich media information 2.

S113: The MeeTime APP on the terminal device 200 displays the message content 2 of the BeiDou satellite message 1.

In some embodiments, the MeeTime APP provides a service account of the BeiDou satellite message. In step S112, an identifier 1 is further sent along with the message content 2, and the identifier 1 indicates that the message content 2 is from the BeiDou satellite message. The MeeTime APP on the terminal device 200 displays the message content 2 of the BeiDou satellite message 1 based on the identifier 1 by using the service account of the BeiDou satellite message.

In some embodiments, after obtaining the message content 1 of the BeiDou satellite message 1 based on the application request message 1, the application server 500 generates the message content 2 based on the message content 1, where the message content 2 includes a web address link of the rich media information 2 in the message content 1, for example, a uniform resource locator (Uniform Resource Locator, URL) link. After step S113, the terminal device 200 receives an operation (for example, a tap operation) on the web address link, and may display a web page corresponding to the web address link in response to the operation, where the web page is used to display or play the rich media information 2.

For example, refer to related descriptions in FIG. 3B and FIG. 3C. The message content 1 of the BeiDou satellite message 1 sent by the sender includes the compressed preview image of the image 1 (for example, the image 2). The MeeTime APP on the terminal device 200 displays the message content 2 of the BeiDou satellite message 1 shown in FIG. 3B, and the message content 2 includes a web address link 502 of the image 2. After detecting that the user taps the web address link 502, the terminal device 200 displays the image 2 on a web page 24 corresponding to the web address link 502. It may be understood that, in this example, the message content (namely, the message content 2) of the BeiDou satellite message 1 displayed by the terminal device 200 is different from the message content (namely, the message content 1) of the BeiDou satellite message 1 displayed by the terminal device 100.

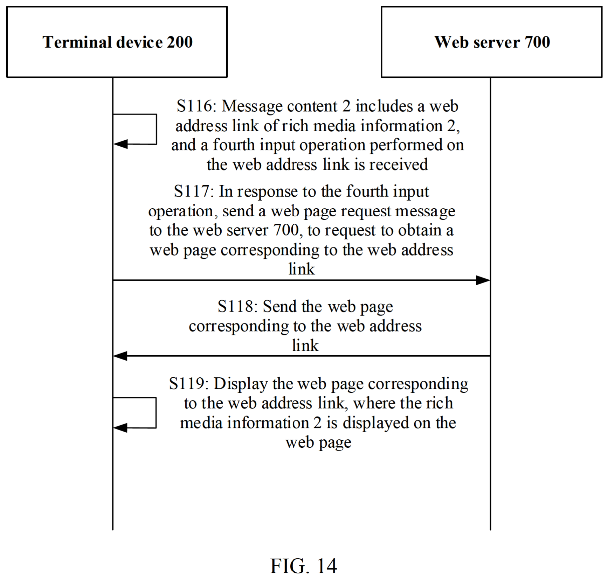

In some embodiments, before step S110, the application server 500 sends an obtaining request to a web server 700, where the obtaining request includes the rich media information 2, and the obtaining request is used to obtain the web address link of the rich media information 2. The web server 700 stores the rich media information 2, and sends the web address link of the rich media information 2 to the application server 500. For example, as shown in FIG. 14, after step S113, the method may further include steps S116 to S119.

S116: The message content 2 includes the web address link of the rich media information 2, and the terminal device 200 receives a fourth input operation performed on the web address link.

S117: In response to the fourth input operation, the terminal device 200 sends a web page request message to the web server 700, to request to obtain the web page corresponding to the web address link.

S118: The web server 700 sends the web page corresponding to the web address link to the terminal device 200.

S119: The terminal device 200 displays the web page corresponding to the web address link, where the rich media information 2 is displayed on the web page.

In some embodiments, before step S110, the application server 500 stores the rich media information 2 and generates the web address link of the rich media information 2. After step S113, the terminal device 200 may request, from the application server 500, to obtain the web page corresponding to the web address link, to view the rich media information 2 on the web page.

In an implementation, the message content 2 of the BeiDou satellite message 1 displayed by the terminal device 200 is the same as the message content 1 of the BeiDou satellite message 1 displayed by the terminal device 100.

For example, refer to related descriptions in FIG. 3D and FIG. 3E. The message content 1 of the BeiDou satellite message 1 sent by the sender includes the text information 1 and the compressed preview image of the image 1 (for example, the image 2). The MeeTime APP on the terminal device 200 displays the message content 2 of the BeiDou satellite message 1 shown in FIG. 3D, and the message content 2 includes the image 2 and the text information 1. It may be understood that, in this example, the message content (namely, the message content 2) of the BeiDou satellite message 1 displayed by the terminal device 200 may be equivalent to the message content (namely, the message content 1) of the BeiDou satellite message 1 displayed by the terminal device 100.

In an implementation, the terminal device 100 may extract text information 2 indicated by a key part 1 of the rich media information 1, and the text information 2 is included in each of the satellite request message 1, the application request message 1, and the message content 2. The message content 2 of the BeiDou satellite message 1 displayed by the terminal device 200 further includes the text information 2. In this way, it is ensured that the recipient can accurately obtain the text information indicated by the key part of the rich media information 1.

For example, refer to related descriptions in FIG. 12A to FIG. 12H. For example, the rich media information 1 is the image 1. After the user adjusts a selection box 809 of the key area of the image 1, the terminal device 100 may extract text information 903 indicated by the road sign in the key area of the image 1. Text information 903 is added to the BeiDou satellite message 1 sent to the recipient. The message content 2 of the BeiDou satellite message 1 received and displayed by the terminal device 200 includes the text information 903.

S114: The application server 500 of the MeeTime APP sends message content 3 of the BeiDou satellite message 1 to the Messaging APP on the terminal device 200, where the message content 3 indicates the message content 1 of the BeiDou satellite message 1, and includes the rich media information 2.

S115: The Messaging APP on the terminal device 200 displays the message content 3 of the BeiDou satellite message 1.

In some embodiments, the application server 500 of the MeeTime APP sends an SMS message 1 to the terminal device 200 through a network device 600 (for example, an SMS gateway) of an operator.

For a possible implementation of the message content 3, refer to related descriptions of the message content 2.

For example, refer to related descriptions in FIG. 3F and FIG. 3G. The Messaging APP may display the web address link of the rich media information 2 (for example, the compressed preview image of the image 1), or may directly display the rich media information 2. For details, refer to related descriptions in step S113. Details are not described herein again.

In some embodiments, the application server 500 of the MeeTime APP performs S112 and S113 (that is, sends the BeiDou satellite message 1 to the MeeTime APP on the terminal device 200), and further performs S114 and S115 (that is, sends the BeiDou satellite message 1 to the Messaging APP on the terminal device 200).

In some embodiments, when the MeeTime APP determines that a mobile phone number of the recipient is registered with an account of the MeeTime APP, S112 and S113 are performed; and when the MeeTime APP determines that the mobile phone number of the recipient is not registered with the account of the MeeTime APP, S114 and S115 are performed.

During implementation of embodiments of this application, a packet format supported by the satellite device for sending and receiving a message includes a field of rich media information (for example, compressed data of an image), and the satellite device has a mechanism for sending and receiving the rich media information. The terminal device 100 of the sender may compress the rich media information (for example, the image) with a large data amount, and compressed data of a low data amount is transmitted through the satellite device. This effectively reduces a data amount that needs to be transmitted through the satellite device. For a specific application scenario with no reception (for example, a help-seeking scenario), the sender may transmit richer and more varied information to the recipient through the satellite device, to effectively improve user experience. In addition, in this embodiment of this application, after the sender triggers, by using a first application, the terminal device 100 to send the compressed data 1 of the rich media information 1 to the application server 500 of the first application through the satellite device, the application server 500 decompresses the compressed data 1 to obtain the rich media information 2, and sends the rich media information 2 to the recipient. In this way, the terminal device 200 of the recipient does not need to integrate a related algorithm library for decompression processing, and does not need to have a decompression capability, so that a device range of the terminal device 200 that is of the recipient and to which this embodiment of this application is applicable is improved. In addition, in this embodiment of this application, in the compressed preview information of the rich media information 1 (namely, the rich media information 2), a definition of a key part is higher than a definition of a non-key part. In this way, when a data amount of the rich media information 1 that needs to be transmitted by the satellite device is reduced, information in the key part of the rich media information 1 is retained as much as possible, to ensure that the recipient can effectively obtain the information in the key part. In addition, in this embodiment of this application, the terminal device 100 may extract the text information indicated by the key part, to improve accuracy and a clarity of a text in the key part during decompression processing, and may further include the text information in the BeiDou satellite message transmitted to the recipient. In this way, the recipient can accurately obtain the text information indicated by the key part of the rich media information 1.

In some embodiments, the application server 500 does not need to decompress the compressed data 1. The satellite ground station 400 decompresses the rich media information in the satellite request message 1, to obtain the rich media information 2, then obtains the message content 1 of the BeiDou satellite message 1, and sends the message content 1 to the terminal device 200 through the application server 500.

In some embodiments, the application server 500 does not need to decompress the compressed data 1. After the application server 500 sends the compressed data 1 to the terminal device 200, the terminal device 200 decompresses the compressed data 1, to obtain the rich media information 2, and further obtains and displays the message content 1 of the BeiDou satellite message 1.

This application provides a satellite communication method, applied to a satellite communication system. The satellite communication system includes a first terminal device, a first server, and a second terminal device. The method includes some or all of steps S201 to S207.

In this embodiment of this application, the first terminal device may be the foregoing terminal device 100, the second terminal device may be the foregoing terminal device 200, the first server may be the foregoing application server 500, and a satellite device may include the foregoing BeiDou satellite 300 and the foregoing satellite ground station 400.

S201: A first application on the first terminal device receives a first input operation.

S202: In response to the first input operation, the first application on the first terminal device obtains first rich media information, and the first application on the first terminal device obtains compressed data of the first rich media information.

In this embodiment of this application, the first application may be the foregoing MeeTime APP or the foregoing Messaging APP, and the first rich media information may be the foregoing rich media information 1.

S203: The first application on the first terminal device receives a second input operation.

S204: The first terminal device sends a first request message to the first server through the satellite device in response to the second input operation, where the first request message includes the compressed data of the first rich media information.

In this embodiment of this application, the first request message may be the foregoing satellite request message 1.

S205: The first server decompresses the compressed data of the first rich media information, to obtain second rich media information.

S206: The first server sends first message content to the second terminal device, where the first message content indicates the second rich media information.

S207: The second terminal device displays the second rich media information based on the first message content.

In this embodiment of this application, the second rich media information may be the foregoing rich media information 2, and the first message content may be the foregoing message content 2 or the foregoing message content 3.

In an implementation, the first message content includes the second rich media information.

In an implementation, the first message content includes a first web address link corresponding to the second rich media information; and that the second terminal device displays the second rich media information based on the first message content includes: In response to an input operation on the first web address link, the second terminal device displays the second rich media information on a first web page corresponding to the first web address link.

In an implementation, that the first server sends the first message content to the second terminal device includes: The first server sends the first message content to a second application on the second terminal device, where the second application includes an instant messaging application and/or a messaging application.

In an implementation, before the first application on the first terminal device receives the second input operation, the method further includes: The first terminal device displays a first user interface of the first application, where the first user interface includes the first rich media information; and in response to a third input operation, the first terminal device decompresses the compressed data of the first rich media information, and obtains and displays the second rich media information obtained through decompression.

In an implementation, the first rich media information includes a non-key part and N key parts, and the second rich media information generated based on the first rich media information also includes a non-key part and N key parts, where N is a positive integer greater than 0; a definition of the key part of the second rich media information is higher than a definition of the non-key part of the second rich media information; and the definition of the non-key part of the second rich media information is lower than a definition of the non-key part of the first rich media information.

In an implementation, that the first terminal device obtains the compressed data of the first rich media information includes: The first terminal device performs lossy compression on the non-key part of the first rich media information based on a first loss rate, to obtain first compressed data of the non-key part of the first rich media information, where the compressed data of the first rich media information includes the first compressed data; and the first terminal device skips performing compression on the key part of the first rich media information, where the compressed data of the first rich media information includes original data of the key part of the first rich media information; or the first terminal device performs lossless compression on the key part of the first rich media information, to obtain second compressed data of the key part of the first rich media information, where the compressed data of the first rich media information includes the second compressed data; or the first terminal device compresses the key part of the first rich media information based on a second loss rate, to obtain third compressed data of the key part of the first rich media information, where the compressed data of the first rich media information includes the third compressed data, and the second loss rate is lower than the first loss rate.

For example, the first rich media information may be the foregoing image 1, and the second compressed data and the third compressed data may be the foregoing compressed data a2.

In an implementation, the first user interface includes a first control, the third input operation is performed on the first control, and the first control is used to trigger the first terminal device to obtain the second rich media information corresponding to the first rich media information.

In this embodiment of this application, the first user interface may be the foregoing compression preview interface or the foregoing compression pre-listening interface, and the first control may be the foregoing compression preview control or the foregoing compression pre-listening control. For example, refer to related descriptions in FIG. 8A to FIG. 9G. The first control on the first user interface may be a compression preview control 803 on the compression preview interface 32.

In an implementation, the first rich media information is a first image, the third input operation is used to generate a first selection box on the first image or adjust the first selection box on the first image, an area in the first selection box on the first image is the key part, and an area outside the selection box on the first image is the non-key part.

For example, the first image may be the foregoing image 1, and the first selection box may be the foregoing selection box 809, the foregoing selection box 813, the foregoing selection box 814, or the foregoing selection box 815.

In an implementation, the key part includes a preset object, and the key part is automatically identified by the first terminal device based on the preset object. For example, the preset object may include a road sign or a person.

In an implementation, the method further includes: The first terminal device extracts first text information indicated by a first key part of the first rich media information, where the first key part is any one of the N key parts, the first request message further includes the first text information, and the first message content includes the first text information; and the second terminal device displays the first text information based on the first message content.

For example, the first key part may be the foregoing key part 1. When the first rich media information is the image 1, the first key part may be the foregoing key area 1, and the first text information may be the foregoing text information 2.

In an implementation, the method further includes: The first terminal device extracts first text information indicated by a first key part of the first rich media information, where the first key part is any one of the N key parts, the first request message further includes the first text information, and the first text information is used to decompress the compressed data of the first rich media information.

In an implementation, the method further includes: The first terminal device displays a first user interface of the first application. The first user interface is used to preview the second rich media information, the first user interface includes a second control and a third control, the second control is used to perform level-one compression on the first rich media information, the third control is used to perform level-two compression on the first rich media information, and a data amount of compressed data obtained through level-two compression is less than a data amount of compressed data obtained through level-one compression. In response to an input operation on the second control, the second rich media information is obtained and displayed based on compressed data of level-one compression of the first rich media information; or in response to an input operation on the third control, the second rich media information is obtained and displayed based on compressed data of level-two compression of the first rich media information.

In an implementation, the first user interface further includes first indication information and second indication information. The first indication information indicates the data amount of the compressed data obtained through level-one compression, and estimated transmission duration for sending the first message content to the second terminal via the compressed data of level-one compression. The first indication information indicates the data amount of the compressed data obtained through level-two compression, and estimated transmission duration for sending the first message content to the second terminal via the compressed data of level-one compression.

For example, the first user interface may be the compression preview interface or the compression pre-listening interface. Refer to FIG. 7A to FIG. 7D. The second control for level-one compression may be the foregoing level-1 compression preview control 841, and the first indication information may include a data amount obtained through level-1 compression and estimated transmission duration 843. The third control for level-two compression may be the foregoing level-2 compression preview control 842, and the second indication information may include a data amount obtained through level-2 compression and estimated transmission duration 844.

In an implementation, the first request message includes an account of a sender and an account of a recipient, and the account of the recipient is used to determine the second terminal device of the recipient.

In an implementation, the first request message includes a first field, a second field, a third field, and a fourth field. The first field indicates whether the first request message includes an image. The second field indicates a first compression algorithm used for the first image. The third field indicates a data length of compressed data of the first image. The fourth field indicates the compressed data of the first image. For example, for the four fields in the first request message, refer to related descriptions in Table 1.

In an implementation, a second user interface of the first application includes a fourth control; and before the first application on the first terminal device receives the first input operation, the method further includes: The first application displays a photographing preview interface in response to an input operation on the fourth control, where the photographing preview interface includes a preview image captured by a camera; and that the first application on the first terminal device obtains the first rich media information in response to the first input operation includes: In response to the first input operation, the first application on the first terminal device invokes the camera to shoot the first image, where the first rich media information is the first image, and the second rich media information is an image obtained by performing decompression processing on the compressed data of the first image.

For example, the fourth control on the second user interface may be a camera control 210 on the foregoing information creation interface 14, or a photographing control 603 on the information creation interface 14.

In an implementation, the first input operation is used to shoot the first image, and the first rich media information is the first image; or the first input operation is used to select the first image from a local gallery, and the first rich media information is the first image; or the first input operation is used to shoot a first video, and the first rich media information is the first video; or the first input operation is used to select the first video from the local gallery, and the first rich media information is the first video; or the first input operation is used to record a first audio, and the first rich media information is the first audio. For example, the first image may be the image 1, the first video may be the foregoing video 1, or the first audio may be the foregoing audio 1.

In an implementation, the compressed data of the first rich media information is obtained by performing, by the first terminal device, compression encoding on the first rich media information by using the first compression algorithm. That the application server decompresses the compressed data of the first rich media information, to obtain the second rich media information includes: The application server decompresses the first rich media information by using a decompression algorithm corresponding to the first compression algorithm, to obtain the second rich media information obtained through decompression. Alternatively, the application server decompresses the first rich media information by using the decompression algorithm corresponding to the first compression algorithm, to obtain third rich media information obtained through decompression; and the application server performs enhancement processing on the third rich media information by using a first enhancement algorithm, to obtain the second rich media information obtained through enhancement processing. For example, the first compression algorithm may be the foregoing preset compression algorithm, and the first enhancement algorithm may include one or more of the foregoing image enhancement algorithm, video enhancement algorithm, audio enhancement algorithm, and text enhancement algorithm.

The following describes a structure of a terminal device 100 according to an embodiment of this application. For a structure of the terminal device 200, refer to the terminal device 100. Details are not described subsequently again.

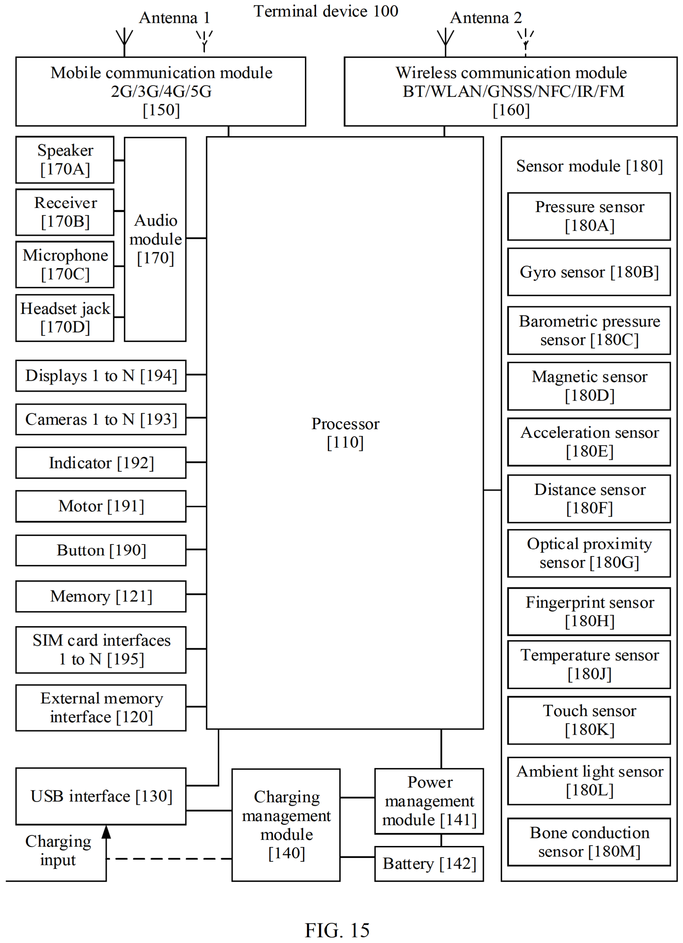

FIG. 15 is a diagram of a structure of a terminal device 100. The terminal device 100 may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device 100. In some other embodiments of this application, the terminal device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 and a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 100. The processor 110 communicates with the display 194 through the DSI interface, to implement a display function of the terminal device 100.

The GPIO interface may be configured by using software. The GPIO interface may be configured as a control signal or a data signal. In some embodiments, the GPIO interface may be configured to connect the processor 110 and the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be used to connect to the charger to charge the terminal device 100, or may be used to transmit data between the terminal device 100 and a peripheral device, or may be configured to connect to a headset for playing an audio through the headset. The interface may be further configured to connect to another electronic device like an AR device.

It may be understood that an interface connection relationship between the modules that is shown in this embodiment of the present invention is merely an example for description, and does not constitute a limitation on the structure of the terminal device 100. In some other embodiments of this application, the terminal device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal device 100. The charging management module 140 may further supply power to the electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the terminal device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution applied to the terminal device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, or the receiver 170B), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution applied to the terminal device 100 for wireless communication including a wireless local area network (wireless local area network, WLAN) (like a wireless fidelity (wireless fidelity, Wi-Fi) network), Bluetooth (Bluetooth, BT), a global navigation satellite system (global navigation satellite system, GNSS), a satellite communication module, frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs demodulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The satellite communication module may be configured to communicate with a satellite device. For example, in the satellite communication system 10, the satellite communication module may communicate with the BeiDou satellite 300; and the satellite communication module may support short message transmission with the BeiDou satellite 300 by using a BeiDou satellite short message communication technology.

In some embodiments, the antenna 1 and the mobile communication module 150 in the terminal device 100 are coupled, and the antenna 2 and the wireless communication module 160 in the terminal device 100 are coupled, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), a BeiDou satellite short message communication technology, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is emitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transformation on frequency energy.

The video codec is configured to compress or decompress a digital video. The terminal device 100 may support one or more video codecs. Therefore, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transfer mode between human brain neurons, and may further continuously perform self-learning. The NPU may be used to implement applications such as intelligent cognition of the terminal device 100, for example, image recognition, facial recognition, speech recognition, and text understanding.

The memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM generally referred to as DDR5 SDRAM), or the like. The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multi media card (embedded multi media Card, eMMC), and the like according to storage specifications.

The random access memory may be directly read and written by using the processor 110. The random access memory may be configured to store an executable program (for example, machine instructions) in an operating system or another running program, and may be further configured to store data of a user, data of an application, and the like.

The nonvolatile memory may also store an executable program, data of a user, data of an application, and the like, which may be loaded into the random access memory in advance for directly reading and writing by using the processor 110.

The external memory interface 120 may be configured to connect to an external non-volatile memory, to expand a storage capability of the terminal device 100. The external non-volatile memory communicates with the processor 110 through the external memory interface 120, to implement a data storage function. For example, files such as music and videos are stored in the external non-volatile memory.

The terminal device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device 100 may be configured to listen to music or answer a call in a hands-free mode by using the speaker 170A.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor.

The gyro sensor 180B may be configured to determine a motion posture of the terminal device 100. In some embodiments, an angular velocity of the terminal device 100 around three axes (that is, axes x, y, and z) may be determined by using the gyro sensor 180B.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall effect sensor. The terminal device 100 may detect opening and closing of a flip cover through the magnetic sensor 180D.

The acceleration sensor 180E may detect an acceleration value of the terminal device 100 in various directions (usually on three axes).

The distance sensor 180F is configured to measure a distance. The terminal device 100 may measure the distance in an infrared manner or a laser manner.

The optical proximity sensor 180G may include, for example, a light-emitting diode (LED) and an optical detector, for example, a photodiode. The light-emitting diode may be an infrared light-emitting diode.

The ambient light sensor 180L is configured to sense ambient light brightness. The terminal device 100 may adaptively adjust brightness of the display 194 based on the sensed ambient light brightness.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy based on the temperature detected by the temperature sensor 180J.

The touch sensor 180K is also referred to as a "touch component". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the terminal device 100 at a location different from that of the display 194.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button.

The motor 191 may generate a vibration prompt. The motor 191 may be configured to provide an incoming call vibration prompt and a touch vibration feedback.

The indicator 192 may be an indicator light, and may be configured to indicate a charging status, a state of charge change, a message, a missed call, and the like.

The SIM card interface 195 is configured to connect to a SIM card.

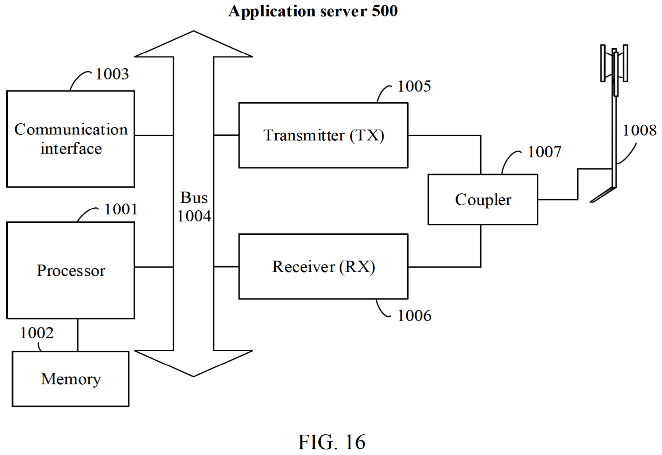

The following describes a structure of an application server 500 according to an embodiment of this application. FIG. 16 shows an example of a structure of an application server 500 according to an embodiment of this application.

As shown in FIG. 16, the application server 500 may include one or more processors 1001, a memory 1002, a communication interface 1003, a transmitter 1005, a receiver 1006, a coupler 1007, and an antenna 1008. These components may be connected through a bus 1004 or in another manner. In FIG. 16, for example, the components are connected through the bus. Specifically,
the communication interface 1003 may be configured for communication between the application server 500 and another communication device, for example, a terminal device 100. Specifically, the communication interface 1003 may be a 3G communication interface, a 4G communication interface, a 5G communication interface, a future new radio communication interface, or the like. In addition to a wireless communication interface, the wired communication interface 1003, for example, a local access network (local access network, LAN) interface may be further configured on the application server 500. The transmitter 1005 may be configured to perform transmission processing on a signal output by the processor 1001. The receiver 1006 may be configured to perform reception processing on a mobile communication signal received through the antenna 1008.

In some embodiments of this application, the transmitter 1005 and the receiver 1006 may be considered as a wireless modem. In the application server 500, there may be one or more transmitters 1005 and receivers 1006. The antenna 1008 may be configured to convert electromagnetic energy in a transmission line into an electromagnetic wave in free space, or convert an electromagnetic wave in free space into electromagnetic energy in a transmission line. The coupler 1007 is configured to: divide a mobile communication signal received through the antenna 1008 into a plurality of signals, and allocate the plurality of signals to a plurality of receivers 1006.

The memory 1002 is coupled to the processor 1001, and is configured to store various software programs and/or a plurality of groups of instructions. Specifically, the memory 1002 may include a high-speed random access memory, or a non-volatile memory, for example, one or more disk storage devices, a flash memory device, or another non-volatile solid-state storage device. The memory 1002 may store a network communication program, and the network communication program may be configured to communicate with one or more additional devices, one or more terminal devices, and one or more network devices.

In some embodiments of this application, the memory 1002 may be configured to store an implementation program, on an application server 500 side, an application distribution method provided in one or more embodiments of this application. For implementations of the application distribution method provided in one or more embodiments of this application, refer to the foregoing embodiments.

The processor 1001 may be configured to read and execute computer-readable instructions. Specifically, the processor 1001 may be configured to: invoke a program stored in the memory 1002, for example, an implementation program, on the application server 500 side, the application program distribution method provided in one or more embodiments of this application, and execute instructions included in the program.

It should be noted that the application server 500 shown in FIG. 16 is merely an implementation of this embodiment of this application. In practice, the application server 500 may further include more or fewer components. This is not limited herein.

For more details about functions and working principles of the application server 500, refer to related content in the foregoing embodiments. Details are not described herein again.

The implementations of this application may be randomly combined, to achieve different technical effects.

All or a part of the foregoing embodiments may be implemented by using software, hardware, firmware, or any combination thereof. When software is used to implement embodiments, all or a part of embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

A person of ordinary skill in the art may understand that all or some of the procedures of the methods in embodiments may be implemented by a computer program instructing related hardware. The program may be stored in the computer-readable storage medium. When the program is run, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made in accordance with the disclosure of the present invention shall be included in the protection scope of the present invention.

## Claims

1. A satellite communication method, applied to a satellite communication system, wherein the satellite communication system comprises a first terminal device, a first server, and a second terminal device, and the method comprises:
receiving, by a first application on the first terminal device, a first input operation;
obtaining, by the first application on the first terminal device, first rich media information in response to the first input operation;
obtaining, by the first application on the first terminal device, compressed data of the first rich media information;
receiving, by the first application on the first terminal device, a second input operation;
sending, by the first terminal device, a first request message to the first server through the satellite device in response to the second input operation, wherein the first request message comprises the compressed data of the first rich media information;
decompressing, by the first server, the compressed data of the first rich media information, to obtain second rich media information;
sending, by the first server, first message content to the second terminal device, wherein the first message content indicates the second rich media information; and
displaying, by the second terminal device, the second rich media information based on the first message content.

2. The method according to claim 1, wherein the first message content comprises the second rich media information.

3. The method according to claim 1, wherein the first message content comprises a first web address link corresponding to the second rich media information; and
displaying, by the second terminal device, the second rich media information based on the first message content comprises:
in response to an input operation on the first web address link, displaying, by the second terminal device, the second rich media information on a first web page corresponding to the first web address link.

4. The method according to claim to 1, wherein sending, by the first server, the first message content to the second terminal device comprises:
sending, by the first server, the first message content to the second application on the second terminal device, wherein the second application comprises an instant messaging application and/or a messaging application.

5. The method according to claim 1, wherein before receiving, by the first application on the first terminal device, the second input operation, the method further comprises:
displaying, by the first terminal device, a first user interface of the first application, wherein the first user interface comprises the first rich media information; and
in response to a third input operation, decompressing, by the first terminal device, the compressed data of the first rich media information, and obtaining and displaying the second rich media information obtained through decompression.

6. The method according to any one of claims 1 to 5, wherein the first rich media information comprises a non-key part and N key parts, and the second rich media information generated based on the first rich media information also comprises a non-key part and N key parts, wherein N is a positive integer greater than 0; a definition of the key part of the second rich media information is higher than a definition of the non-key part of the second rich media information; and the definition of the non-key part of the second rich media information is lower than a definition of the non-key part of the first rich media information.

7. The method according to claim 6, wherein obtaining, by the first terminal device, the compressed data of the first rich media information comprises:
performing, by the first terminal device, lossy compression on the non-key part of the first rich media information based on a first loss rate, to obtain first compressed data of the non-key part of the first rich media information, wherein the compressed data of the first rich media information comprises the first compressed data; and
skipping, by the first terminal device, compressing the key part of the first rich media information, wherein the compressed data of the first rich media information comprises original data of the key part of the first rich media information; or performing, by the first terminal device, lossless compression on the key part of the first rich media information, to obtain second compressed data of the key part of the first rich media information, wherein the compressed data of the first rich media information comprises the second compressed data; or compressing, by the first terminal device the key part of the first rich media information based on a second loss rate, to obtain third compressed data of the key part of the first rich media information, wherein the compressed data of the first rich media information comprises the third compressed data, and the second loss rate is lower than the first loss rate.

8. The method according to claim 5 or 6, wherein the first user interface comprises a first control, the third input operation is performed on the first control, and the first control is used to trigger the first terminal device to obtain the second rich media information corresponding to the first rich media information.

9. The method according to claim 6, wherein the first rich media information is a first image, the third input operation is used to generate a first selection box on the first image or adjust the first selection box on the first image, an area in the first selection box on the first image is the key part, and an area outside the selection box on the first image is the non-key part.

10. The method according to claim 6, wherein the key part comprises a preset object, and the key part is automatically identified by the first terminal device based on the preset object.

11. The method according to claim 6, further comprising:
extracting, by the first terminal device, first text information indicated by a first key part of the first rich media information, wherein the first key part is any one of the N key parts, the first request message further comprises the first text information, and the first message content comprises the first text information; and
displaying, by the second terminal device, the first text information based on the first message content.

12. The method according to claim 6, further comprising:
extracting, by the first terminal device, first text information indicated by a first key part of the first rich media information, wherein the first key part is any one of the N key parts, and the first request message further comprises the first text information; and
the first text information is used to decompress the compressed data of the first rich media information.

13. The method according to claim 1, wherein the first request message comprises an account of a sender and an account of a recipient, and the account of the recipient is used to determine the second terminal device of the recipient.

14. The method according to claim 1, wherein the first request message comprises a first field, a second field, a third field, and a fourth field;
the first field indicates whether the first request message comprises an image;
the second field indicates a first compression algorithm used for the first image;
the third field indicates a data length of compressed data of the first image; and
the fourth field indicates the compressed data of the first image.

15. The method according to claim 6, wherein a second user interface of the first application comprises a fourth control, and before receiving, by the first application on the first terminal device, the first input operation, the method further comprises:
displaying, by the first application, a photographing preview interface in response to an input operation on the fourth control, wherein the photographing preview interface comprises a preview image captured by a camera; and
obtaining, by the first application on the first terminal device, the first rich media information in response to the first input operation comprises:
in response to the first input operation, invoking, by the first application on the first terminal device, the camera to shoot a first image, wherein the first rich media information is the first image, and the second rich media information is an image obtained by performing decompression processing on compressed data of the first image.

16. A satellite communication method, wherein the method comprises:
receiving, by a first application on a first terminal device, a first input operation;
obtaining, by the first application on the first terminal device, first rich media information in response to the first input operation;
obtaining, by the first application on the first terminal device, compressed data of the first rich media information;
receiving, by the first application on the first terminal device, a second input operation; and
sending, by the first terminal device, a first request message to the first server through the satellite device in response to the second input operation, wherein the first request message comprises the compressed data of the first rich media information; and the first server is configured to: decompress the compressed data of the first rich media information, to obtain second rich media information, and send first message content to the second terminal device, wherein the first message content indicates the second rich media information.

17. The method according to claim 16, wherein the first message content comprises the second rich media information.

18. The method according to claim 16, wherein the first message content comprises a first web address link corresponding to the second rich media information, and a first web page corresponding to the first web address link is used to display the second rich media information.

19. The method according to claim 16, wherein the first application comprises an instant messaging application and/or a messaging application.

20. The method according to claim 16, wherein before receiving, by the first application on the first terminal device, the second input operation, the method further comprises:
displaying, by the first terminal device, a first user interface of the first application, wherein the first user interface comprises the first rich media information; and
in response to a third input operation, decompressing, by the first terminal device, the compressed data of the first rich media information, and obtaining and displaying the second rich media information obtained through decompression.

21. The method according to any one of claims 16 to 20, wherein the first rich media information comprises a non-key part and N key parts, and the second rich media information generated based on the first rich media information also comprises a non-key part and N key parts, wherein N is a positive integer greater than 0; a definition of the key part of the second rich media information is higher than a definition of the non-key part of the second rich media information; and the definition of the non-key part of the second rich media information is lower than a definition of the non-key part of the first rich media information.

22. The method according to claim 21, wherein obtaining, by the first terminal device, the compressed data of the first rich media information comprises:
performing, by the first terminal device, lossy compression on the non-key part of the first rich media information based on a first loss rate, to obtain first compressed data of the non-key part of the first rich media information, wherein the compressed data of the first rich media information comprises the first compressed data; and
skipping, by the first terminal device, compressing the key part of the first rich media information, wherein the compressed data of the first rich media information comprises original data of the key part of the first rich media information; or performing, by the first terminal device, lossless compression on the key part of the first rich media information, to obtain second compressed data of the key part of the first rich media information, wherein the compressed data of the first rich media information comprises the second compressed data; or compressing, by the first terminal device, the key part of the first rich media information based on a second loss rate, to obtain third compressed data of the key part of the first rich media information, wherein the compressed data of the first rich media information comprises the third compressed data, and the second loss rate is lower than the first loss rate.

23. The method according to claim 20 or 21, wherein the first user interface comprises a first control, the third input operation is performed on the first control, and the first control is used to trigger the first terminal device to obtain the second rich media information corresponding to the first rich media information.

24. The method according to claim 21, wherein the first rich media information is a first image, the third input operation is used to generate a first selection box on the first image or adjust the first selection box on the first image, an area in the first selection box on the first image is the key part, and an area outside the selection box on the first image is the non-key part.

25. The method according to claim 21, wherein the key part comprises a preset object, and the key part is automatically identified by the first terminal device based on the preset object.

26. The method according to claim 21, further comprising:
extracting, by the first terminal device, first text information indicated by a first key part of the first rich media information, wherein the first key part is any one of the N key parts, the first request message further comprises the first text information, and the first message content comprises the first text information.

27. The method according to claim 21, further comprising:
extracting, by the first terminal device, first text information indicated by a first key part of the first rich media information, wherein the first key part is any one of the N key parts, and the first request message further comprises the first text information; and
the first text information is used to decompress the compressed data of the first rich media information.

28. The method according to claim 16, wherein the first request message comprises an account of a sender and an account of a recipient, and the account of the recipient is used to determine the second terminal device of the recipient.

29. The method according to claim 16, wherein the first request message comprises a first field, a second field, a third field, and a fourth field;
the first field indicates whether the first request message comprises an image;
the second field indicates a first compression algorithm used for the first image;
the third field indicates a data length of compressed data of the first image; and
the fourth field indicates the compressed data of the first image.

30. The method according to claim 21, wherein a second user interface of the first application comprises a fourth control, and before receiving, by the first application on the first terminal device, the first input operation, the method further comprises:
displaying, by the first application, a photographing preview interface in response to an input operation on the fourth control, wherein the photographing preview interface comprises a preview image captured by a camera; and
obtaining, by the first application on the first terminal device, the first rich media information in response to the first input operation comprises:
in response to the first input operation, invoking, by the first application on the first terminal device, the camera to shoot a first image, wherein the first rich media information is the first image, and the second rich media information is an image obtained by performing decompression processing on compressed data of the first image.

31. A satellite communication method, wherein the method comprises:
receiving, by a second terminal device, first message content sent by a first server, wherein the first message content indicates second rich media information, the second rich media information is obtained by performing decompression processing on compressed data of the first rich media information by the first server, and the compressed data of the first rich media information is sent by a first terminal device to the first server via a first request message through a satellite device; and
displaying, by the second terminal device, the second rich media information based on the first message content.

32. The method according to claim 31, wherein the first message content comprises the second rich media information.

33. The method according to claim 31, wherein the first message content comprises a first web address link corresponding to the second rich media information; and
displaying, by the second terminal device, the second rich media information based on the first message content comprises:
in response to an input operation on the first web address link, displaying, by the second terminal device, the second rich media information on a first web page corresponding to the first web address link.

34. The method according to claim 31, wherein receiving, by the second terminal device, the first message content sent by the first server comprises:
receiving, by a second application on the second terminal device, the first message content sent by the first server, wherein the second application comprises an instant messaging application and/or a messaging application.

35. The method according to any one of claims 31 to 34, wherein the first rich media information comprises a non-key part and N key parts, and the second rich media information generated based on the first rich media information also comprises a non-key part and N key parts, wherein N is a positive integer greater than 0; a definition of the key part of the second rich media information is higher than a definition of the non-key part of the second rich media information; and the definition of the non-key part of the second rich media information is lower than a definition of the non-key part of the first rich media information.

36. The method according to claim 35, wherein the key part is selected by a user from the first rich media information.

37. The method according to claim 35, wherein the key part comprises a preset object, and the key part is automatically identified by the first terminal device based on the preset object.

38. The method according to claim 35, wherein the first request message further comprises the first text information, and the first message content comprises the first text information; and the first text information is text information indicated by a first key part of the first rich media information, the first key part is any one of the N key parts, and the method further comprises:
displaying, by the second terminal device, the first text information based on the first message content.

39. A terminal device, comprising a processor and a memory, wherein the memory is coupled to the processor, the memory is configured to store computer program code, the computer program code comprises computer instructions, and when the processor reads the computer instructions from the memory, the terminal device is enabled to perform the satellite communication method according to any one of claims 16 to 30 or claims 31 to 38.

40. A computer-readable storage medium, comprising computer instructions, wherein when the computer instructions are run on a computer, the computer is enabled to perform the satellite communication method according to any one of claims 1 to 15, claims 16 to 30, or claims 31 to 38.
